# EUROPEAN PATENT APPLICATION

(11) **EP 4 693 048 A1**
(43) Date of publication of application: **11.02.2026**
(21) Application number: 24835268.4
(22) Date of filing: 26.06.2024
(51) Int. Cl.: G06F 9/54, G06F 3/0482, G06F 3/0481

(54) **CLIPBOARD CONTENT PASTING METHOD AND RELATED APPARATUS**

(30) Priority: 04.07.2023 CN 202310810949
(71) Applicant: Huawei Technologies Co., Ltd., Shenzhen, Guangdong 518129 (CN)
(72) Inventor: REN, Jie, Shenzhen, Guangdong 518129 (CN); ZENG, Yiliang, Shenzhen, Guangdong 518129 (CN); MAO, Feng, Shenzhen, Guangdong 518129 (CN); ZHU, Yanming, Shenzhen, Guangdong 518129 (CN); WU, Tianyi, Shenzhen, Guangdong 518129 (CN); BIAN, Sucheng, Shenzhen, Guangdong 518129 (CN); DING, Ning, Shenzhen, Guangdong 518129 (CN)
(74) Representative: Goddar, Heinz J.
(86) International application number: PCT/CN2024/101727
(87) International publication number: WO 2025/007787

(57) **Abstract**

This application provides a clipboard content pasting method and a related apparatus. An electronic device may identify, based on a copy page and a paste page, a paste scenario and a user intent of performing copying and pasting by a user. Based on the paste scenario and the user intent, the electronic device may extract, from copied content, to-be-pasted content that meets the user intent and that matches an input box on the paste page. The electronic device may provide the to-be-pasted content on the paste page for the user to select and input the to-be-pasted content into the input box on the paste page. The foregoing method can effectively improve copying and pasting efficiency of the user, and improve copying and pasting experience of the user.

## Description

This application claims priority to Chinese Patent Application No. 202310810949.7, filed with the China National Intellectual Property Administration on July 4, 2023, and entitled "CLIPBOARD CONTENT PASTING METHOD AND RELATED APPARATUS", which is incorporated herein by reference in its entirety.

### TECHNICAL FIELD

This application relates to the field of terminal technologies, and in particular, to a clipboard content pasting method and a related apparatus.

### BACKGROUND

In a process of using an electronic device such as a mobile phone or a computer, a user often needs to perform copying and pasting between different APPs or pages. This need exists in scenarios such as social networking, office, entertainment, and shopping. However, in current actual application, it is inconvenient for the user to accurately copy needed content from a piece of content. For example, because a cursor displayed on a screen of a mobile phone is small, the user needs to repeatedly adjust a position of the cursor to select content that needs to be copied. For another example, some applications support copying of entire content only. The user needs to copy and paste the entire content, and then delete unwanted parts one by one. In addition, the user may need to copy a plurality of pieces of information in one piece of content, and the plurality of pieces of information may be spaced. If the user needs to paste the plurality of pieces of copied information to another APP, the user needs to repeatedly switch between APPs to perform a plurality of copy and paste operations. It can be learned that the foregoing copy and paste operations are cumbersome, causing poor user experience.

### SUMMARY

This application provides a clipboard content pasting method and a related apparatus. An electronic device may extract, from clipboard content based on a copy page and a paste page, to-be-pasted content that meets a user intent and that matches a paste scenario. The electronic device may provide the to-be-pasted content on the paste page for a user to select and input the to-be-pasted content into an input box on the paste page. The electronic device may provide the to-be-pasted content on the paste page for the user to select and input the to-be-pasted content into the input box on the paste page.

According to a first aspect, this application provides a clipboard content pasting method. An electronic device receives a first operation for first content on a first page, and stores the first content in a clipboard. The electronic device receives a second operation of accessing a second page, and displays the second page. The electronic device provides a first paste option on the second page. The first paste option is used to paste second content. The second content is obtained by processing the first content. The second content is related to the second page. The electronic device receives a third operation of accessing a third page, and displays the third page. The electronic device provides a second paste option on the third page. The second paste option is used to paste third content. The third content is obtained by processing the first content. The third content is related to the third page.

The first operation may be an operation of copying the first content, or an operation of cutting the first content. The first content may be copied content or cut content (that is, clipboard content). The first page may be a copy page in this application. Both the second page and the third page may be paste pages in this application. The second page and the third page may be different pages of a same application, or may be pages of different applications. The second content and the third content may be to-be-pasted content obtained by processing the first content by the electronic device. The second content may be different from or the same as the third content.

In some embodiments, the second content being related to the second page may specifically indicate that the second content matches a type of to-be-input content in an input box on the second page. The third content being related to the third page may specifically indicate that the third content matches a type of to-be-input content in an input box on the third page.

It can be learned from the foregoing method that, for same copied content, the electronic device may provide, based on different paste pages, a paste option corresponding to to-be-pasted content that is related to each paste page and that is obtained from the copied content. To-be-pasted content related to one paste page may be content that is obtained by the electronic device through analysis and that a user wants to paste from the copied content onto the paste page. In this way, when the copied content includes many pieces of redundant information, the user may not need to move a cursor during copying to perform a cumbersome operation of selecting the copied content, and does not need to paste the copied content and then delete the redundant information piece by piece. In addition, when the copied content includes a plurality of pieces of information that the user wants to copy and paste but the plurality of pieces of information are spaced, the user may copy all the information as a whole, and perform a plurality of copy and paste operations without repeatedly switching between APPs. The foregoing method can effectively improve copying and pasting efficiency of the user, and improve copying and pasting experience of the user.

With reference to the first aspect, in some embodiments, before the electronic device provides the first paste option on the second page, the electronic device may extract fourth content from the first content based on the first page and the second page. The second content is the fourth content, or is content obtained by processing the fourth content.

Similarly, before the electronic device provides the second paste option on the third page, the electronic device may extract the third content from the first content based on the first page and the third page, or process content extracted from the first content to obtain the third content.

It can be learned that the to-be-pasted content that is provided by the electronic device on the paste page for the user to paste may be directly extracted from the copied content, or may be obtained by processing related content extracted from the copied content. For example, when the first content includes many pieces of redundant information, the electronic device may remove the redundant information from the first content based on the first page and the second page, and extract information that is most likely to be pasted by the user in the first content. In this way, the user may not need to move the cursor during copying to perform a cumbersome operation of selecting the copied content, and does not need to paste the copied content and then delete the redundant information piece by piece. For another example, when the first content includes a plurality of pieces of information that the user wants to copy and paste but the plurality of pieces of information are spaced, the electronic device may extract, as to-be-pasted content based on the first page and the second page, the plurality of pieces of information that the user wants to copy and paste, and display the to-be-pasted content on the paste page. In this way, the user may not need to repeatedly switch between APPs and perform a plurality of copy and paste operations.

With reference to the first aspect, in some embodiments, the electronic device determines, based on a public knowledge base, that one or more errors exist in the fourth content, and performs error correction processing on the fourth content. The public knowledge base includes public knowledge of one or more fields (such as music, movie and television, science and technology, and agriculture). Data in the public knowledge base may be obtained through crawling in databases such as websites and applications by using a data crawling device. In some embodiments, the second content may be content obtained by performing error correction processing on the fourth content.

It can be learned that the electronic device may perform error correction on the to-be-pasted content. In this way, even if an error exists in information in the copied content, after error correction, the electronic device may provide correct content for the user to paste, to avoid impact on use effect and experience of the user due to the erroneous copied content.

With reference to the first aspect, in some embodiments, the electronic device supplements fifth content with sixth content based on a user personal knowledge base and/or the public knowledge base, to obtain the second content. The fifth content is content obtained by performing error correction processing on the fourth content. The user personal knowledge base includes one or more of the following user information: an age group of a user, a family address and a company address of the user, a user preference, and a user habit.

For example, the fifth content is names of one or more movies/television plays played on a playback platform 1. The electronic device finds, based on the public knowledge base, that the first content further stores the names of the movies/television plays played on the playback platform 1 in addition to the fifth content. Names that are of movies/television plays belonging to the playback platform 1 but have not been extracted to the fifth content may be the sixth content. The electronic device may supplement the fifth content with the names that are of the movies/television plays belonging to the playback platform 1 and that are in the first content but have not been extracted to the fifth content.

It can be learned that, after performing error correction on the to-be-pasted content, the electronic device may further supplement, based on the user personal knowledge base and/or the public knowledge base, error-corrected to-be-pasted content, to provide the user with to-be-pasted content that conforms to an expression habit or a search habit of the user. In addition, the foregoing method can improve the to-be-pasted content, and avoid omission of information that may be needed by the user in the copied content.

Optionally, the electronic device may alternatively first supplement the to-be-pasted content, and then perform error correction on supplemented to-be-pasted content.

With reference to the first aspect, in some embodiments, the electronic device supplements the fourth content with seventh content based on a user personal knowledge base and/or a public knowledge base, to obtain the second content. The user personal knowledge base includes one or more of the following user information: an age group of a user, a family address and a company address of the user, a user preference, and a user habit. The public knowledge base includes public knowledge of one or more fields.

For example, the fourth content may include a cinema frequently visited by the user. The electronic device determines, based on the user personal knowledge base, that the cinema frequently visited by the user is an AA cinema. A name of the AA cinema may be the seventh content. The electronic device may supplement the fourth content with the AA cinema.

It can be learned that the electronic device may supplement the to-be-pasted content based on the user personal knowledge base and/or the public knowledge base, to provide the user with the to-be-pasted content that conforms to an expression habit or a search habit of the user. In addition, the foregoing method can improve the to-be-pasted content, and avoid omission of information that may be needed by the user in the copied content.

With reference to the first aspect, in some embodiments, the electronic device determines, based on the user personal knowledge base, that a preference degree of the user for eighth content is higher than a preference degree for the second content. The user personal knowledge base includes one or more of the following user information: the age group of the user, the family address and the company address of the user, the user preference, and the user habit. The eighth content is obtained by processing the first content. The eighth content is related to the second page. The electronic device provides the first paste option and a third paste option on the second page. The third paste option is used to paste the eighth content. A display position of the third paste option is better than a display position of the first paste option.

For example, the second content is a name of a movie/television play 1. The eighth content is a name of a movie/television play 2. The electronic device may determine, based on the user personal knowledge base, that the movie/television play 2 is a movie/television play that the user prefers to watch.

The display position of the third paste option being better than the display position of the first paste option may indicate that the third paste option is displayed at a more forward position than the first paste option. For example, if paste options are displayed from top to bottom, the third paste option may be displayed on an upper side of the first paste option. For another example, if paste options are displayed from left to right, the third paste option may be displayed on a left side of the first paste option. It may be understood that displaying, at a better position, a paste option corresponding to to-be-pasted content with a higher preference degree of the user may facilitate the user in preferentially pasting information of interest to the user on the paste page.

With reference to the first aspect, in some embodiments, the electronic device provides the first paste option and a fourth paste option on the second page. The fourth paste option is used to paste ninth content. The ninth content is obtained by processing the first content. The ninth content is related to the second page. The ninth content is different from the second content. The electronic device receives an operation for the first paste option, and pastes the second content in an input box on the second page. After exiting the second page, the electronic device receives again an operation of accessing the second page, and displays the second page. The electronic device provides the fourth paste option on the second page. A paste option on the second page does not include the first paste option.

For example, the second content may be a gift package redemption code 1. The ninth content may be a gift package redemption code 2. The second page may be a page for inputting and redeeming a gift package redemption code for a gift package. After the gift package redemption code 1 (that is, the second content) is pasted and used, the electronic device accesses the second page again, and the electronic device may filter out the gift package redemption code 1 and provide only a paste option corresponding to the gift package redemption code 2. In this way, the following case can be avoided: The user pastes the gift package redemption code 1 again because the user forgets that the gift package redemption code 1 is used, causing a redemption failure.

It can be learned that the electronic device may filter the to-be-pasted content and filter out pasted information in the to-be-pasted content. In this way, when information becomes invalid after being pasted, interference of the invalid information to the user is reduced, and a case in which the user repeatedly pastes the invalid information is avoided.

With reference to the first aspect, in some embodiments, the electronic device provides the first paste option and a fifth paste option on the second page. The fifth paste option is used to paste tenth content. The tenth content is obtained by processing the first content. The tenth content is related to the second page. The electronic device receives an operation for the first paste option, pastes the second content in the input box on the second page, and jumps to a fourth page. The electronic device provides the fifth paste option on the fourth page. A paste option on the fourth page does not include the first paste option.

For example, the second content may be a store name. The tenth content may be a commodity name. The second page may be a home page of a shopping application. It may be understood that when the home page of the shopping application is displayed, the user may want to search for a store, or may want to search for a commodity. Therefore, the electronic device may provide the paste options corresponding to the second content and the tenth content. When the user pastes a store name in a search box on the home page of the shopping application to search for and access a commodity display page of the store, the user usually wants to search for a commodity in the store, but does not search for another store in the store. The fourth page may be the commodity display page of the store. When jumping to the fourth page, the electronic device may filter out the second content, and retain the tenth content.

It can be learned that the electronic device may obtain, through filtering based on a change of the paste page, information that the user needs to paste, to reduce interference of other information to the user.

With reference to the first aspect, in some embodiments, a specific method in which the electronic device extracts the fourth content from the first content based on the first page and the second page may include: the electronic device determines first page information based on the first page, and determines second page information based on the second page; the electronic device identifies a first paste scenario and a first user intent based on the first page information and the second page information; the electronic device determines first extraction prompt information based on the first paste scenario and the first user intent; and the electronic device extracts the fourth content from the first content by using a language model based on the first extraction prompt information.

Similarly, the electronic device may determine third page information based on the third page, identify a corresponding paste scenario and a user intent based on the first page information and the third page information, and extract content related to the third page from the first content based on the paste scenario and the user intent.

It can be learned that the electronic device may identify the paste scenario and the user intent with reference to the copy page and the paste page, and extract, from the copied content, to-be-pasted content that meets the user intent and that matches the paste scenario. This can effectively improve copying and pasting efficiency of the user, and improve copying and pasting experience of the user.

With reference to the first aspect, in some embodiments, the first page information includes the first content and/or context information of the first content, and the second page information includes one or more of the following: a category of an APP to which the second page belongs, a type of to-be-input content in the input box on the second page, and operation information related to the second page. The third page information may include one or more of the following: a category of an APP to which the third page belongs, a type of to-be-input content in the input box on the third page, and operation information related to the third page.

With reference to the first aspect, in some embodiments, before the electronic device provides the first paste option on the second page, the electronic device receives an operation for a first input box on the second page; and after the electronic device provides the first paste option on the second page, the electronic device receives an operation for the first paste option, and pastes the second content in the first input box.

The second page further includes a second input box. The electronic device receives an operation for the second input box, and provides a sixth paste option on the second page. The sixth paste option is used to paste eleventh content. The eleventh content is obtained by processing the first content, and the eleventh content is related to the second page. The electronic device receives an operation for the sixth paste option, and pastes the eleventh content in the second input box.

It can be learned that, when the paste page includes a plurality of input boxes, the electronic device may provide, based on an input box that is selected by the user for input, to-be-pasted content that matches a type of to-be-input content in the input box. In this way, the user may paste corresponding content in the plurality of input boxes for pasting one by one.

With reference to the first aspect, in some embodiments, the second page includes n1 input boxes, n1 is a positive integer greater than 1, and the second content includes n1 pieces of information. After the electronic device provides the first paste option on the second page, the electronic device receives the operation for the first paste option, and pastes the n1 pieces of information respectively in the n1 input boxes.

It can be learned that, when the paste page includes a plurality of input boxes, the electronic device may provide, as a paste option for the user, to-be-pasted content matching each of the plurality of input boxes. In this way, the user can fill the plurality of input boxes on the paste page respectively with a plurality of pieces of information in the to-be-pasted content through one tap, thereby improving copying and pasting efficiency of the user.

With reference to the first aspect, in some embodiments, the first content belongs to content copied or cut in the latest m1 times before the electronic device displays the second page, and m1 is a positive integer; or the second page is a page displayed by the electronic device in a first time period after the first operation is received.

With reference to the first aspect, in some embodiments, the electronic device receives an operation for twelfth content on a fifth page, and stores the twelfth content in the clipboard. The fifth page is the same as or different from the first page, and the twelfth content is different from the first content. The electronic device receives an operation of accessing a sixth page, and displays the sixth page. The electronic device provides a seventh paste option and an eighth paste option on the sixth page. The seventh paste option is used to paste thirteenth content. The eighth paste option is used to paste fourteenth content. The thirteenth content is obtained by processing the first content. The thirteenth content is related to the sixth page. The fourteenth content is obtained by processing the twelfth content. The fourteenth content is related to the sixth page.

The electronic device may determine fifth page information based on the fifth page, and determine sixth page information based on the sixth page. The electronic device may process the first content based on the first page information and the sixth page information to obtain the thirteenth content. The electronic device may process the twelfth content based on the fifth page information and the sixth page information to obtain the fourteenth content.

It can be learned that the electronic device may extract the to-be-pasted content by using content copied in a plurality of times in the clipboard. In this way, when one user interface includes a plurality of pieces of information that need to be copied, the user may perform a plurality of copy operations and then open a paste page on which pasting needs to be performed, to quickly paste, into one or more input boxes on the paste page, content copied in the plurality of times. The user may not need to repeatedly switch between the copy page (for example, a chat page of an instant messaging application) and the paste page (for example, a page of an information entry application). The foregoing method can effectively improve copying and pasting efficiency of the user, and improve copying and pasting experience of the user.

According to a second aspect, this application provides an electronic device. The electronic device may include a display, a memory, and a processor. The display may be configured to display a page of an application. The memory may be configured to store a computer program. The processor may be configured to invoke the computer program, so that the electronic device performs the method according to any possible implementation of the first aspect.

According to a third aspect, this application provides a computer-readable storage medium, including instructions. When the instructions are run on an electronic device, the electronic device is enabled to perform the method according to any possible implementation of the first aspect.

According to a fourth aspect, this application provides a computer program product. The computer program product may include computer instructions. When the computer instructions are run on an electronic device, the electronic device is enabled to perform the method according to any possible implementation of the first aspect.

According to a fifth aspect, this application provides a chip. The chip is used in an electronic device. The chip includes one or more processors. The processor is configured to invoke computer instructions, so that the electronic device performs the method according to any possible implementation of the first aspect.

It may be understood that the electronic device provided in the second aspect, the computer-readable storage medium provided in the third aspect, the computer program product provided in the fourth aspect, and the chip provided in the fifth aspect are all configured to perform the method provided in embodiments of this application. Therefore, for beneficial effects that can be achieved by the electronic device, the computer-readable storage medium, the computer program product, and the chip, refer to the beneficial effects in the corresponding method. Details are not described herein again.

### BRIEF DESCRIPTION OF DRAWINGS

FIG. 1 is a diagram of a hardware structure of an electronic device 100 according to an embodiment of this application;
FIG. 2 is a block diagram of a software structure of an electronic device 100 according to an embodiment of this application;
FIG. 3A to FIG. 3E are some diagrams of a clipboard content processing method according to an embodiment of this application;
FIG. 4A to FIG. 4L are some diagrams of a movie ticket buying scenario and a navigation scenario according to an embodiment of this application;
FIG. 5A to FIG. 5G are some diagrams of a shopping scenario according to an embodiment of this application;
FIG. 6A to FIG. 6F are some diagrams of a movie/television play searching scenario according to an embodiment of this application;
FIG. 7A to FIG. 7H are some diagrams of a redemption code redemption scenario according to an embodiment of this application;
FIG. 8A to FIG. 8I are some diagrams of a contact adding scenario according to an embodiment of this application; and
FIG. 9A to FIG. 9H are some diagrams of an information entry scenario according to an embodiment of this application.

### DESCRIPTION OF EMBODIMENTS

The following describes the technical solutions in embodiments of this application with reference to the accompanying drawings in embodiments of this application. In descriptions of embodiments of this application, terms used in the following embodiments are merely intended to describe specific embodiments, but not to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the word "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the word "example", "for example", or the like is intended to present a related concept in a specific manner.

The term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language, for example, Java or an extensible markup language (extensible markup language, XML). The interface source code is parsed and rendered on an electronic device, and is finally presented as user-recognizable content. A frequently-used representation form of the user interface is a graphical user interface (graphic user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a widget displayed on a display of an electronic device.

In some embodiments, when detecting a copy operation of a user, the electronic device may select, based on context information of copied content and historical copy and paste operation actions of the user, the copied content selected by the user during the copy operation, and provide the selected content as a paste option for the user. Although the foregoing method can help the user select, from the copied content, the content that the user may need to paste, when a large amount of related information exists in the copied content, it may be difficult to accurately determine specific content needed by the user in the copied content in the foregoing method. In addition, the foregoing method cannot meet a need of the user for copying a plurality of pieces of information in a piece of content.

In some other embodiments, the electronic device may segment the copied content based on a content copy scenario and a user paste scenario, extract one or more pieces of related information from the copied content, and list the one or more pieces of related information for the user to select. Although the foregoing method can help the user copy a plurality of pieces of information in a piece of content, a use habit of the user and pasted content are not considered in the foregoing method, and the segmented related information may not be needed by the user. In this case, it is difficult to meet actual copying and pasting needs of the user.

This application provides a clipboard content pasting method. When a copy operation is detected, an electronic device may parse a copy page to obtain copy page information. The copy page information may include copied content and/or context information of the copied content. The copied content may indicate content selected by using the copy operation. When accessing a paste page, the electronic device may parse the paste page to obtain paste page information. The paste page may include a page on which the copied content can be pasted. The paste page information may include one or more of the following: a category of an APP to which the paste page belongs, a type of to-be-input content in an input box on the paste page, operation information related to the paste page, and the like. The electronic device may identify a paste scenario and a user intent based on the copy page information and the paste page information. The user intent may indicate a need of the user for performing copy and paste operations. Further, the electronic device may determine the to-be-pasted content based on the paste scenario, the user intent, and the copied content. The to-be-pasted content may include information that meets the user intent and matches an input box on the paste page and that is extracted by the electronic device from the copied content. The electronic device may provide the to-be-pasted content on the paste page for the user to select and input the to-be-pasted content into the input box on the paste page.

It can be learned from the foregoing method that the electronic device may extract, from the copied content by identifying the paste scenario and the user intent, the to-be-pasted content that meets the user intent and that matches the input box on the paste page. The user may directly select the to-be-pasted content and input the to-be-pasted content into the input box on the paste page. The to-be-pasted content may meet the need of the user for performing copying and pasting. In the foregoing method, when the content copied by the user includes much redundant information, content that the user wants to copy and paste can be accurately extracted from the copied content. In this way, the user may not need to move a cursor during copying to perform a cumbersome operation of selecting the copied content, and does not need to paste the copied content and then delete the redundant information piece by piece. In addition, when the copied content includes a plurality of pieces of information that the user wants to copy and paste, but the plurality of pieces of information are spaced, the electronic device may extract, based on the paste scenario and the user intent, the plurality of pieces of information as the to-be-pasted content and display the to-be-pasted content on the paste page. In this way, the user may not need to repeatedly switch between APPs and perform a plurality of copy and paste operations. The pasting method in this application can effectively improve copying and pasting efficiency of the user, and improve copying and pasting experience of the user.

In some embodiments, when the to-be-pasted content is extracted, the electronic device may perform error correction on the to-be-pasted content based on a public knowledge base, to obtain error-corrected to-be-pasted content. The public knowledge base may store public knowledge in one or more fields such as music, movie and television, science and technology, and agriculture. For example, if the to-be-pasted content includes a name of a television play, the electronic device may determine, based on the public knowledge base, whether the name of the television play is correct. When it is determined that the name of the television play is incorrect, the electronic device may change the name of the television play to a correct name. In this way, when an error occurs in content copied by the user, the electronic device may perform error correction, and provide correct content for the user for pasting.

In some other embodiments, the electronic device may further supplement the to-be-pasted content based on a user personal knowledge base and/or the public knowledge base, to obtain supplemented to-be-pasted content. The electronic device may also supplement the error-corrected to-be-pasted content. The user personal knowledge base may include user information that indicates features such as a user identity, a user preference, and a user habit, for example, a user profile. For example, when the paste scenario is a shopping scenario and the user intent is to search for clothing or a store recommended by other people, the electronic device may determine, with reference to the user personal knowledge base, a type of clothing that the user likes to wear. The electronic device may supplement the to-be-pasted content with the type of clothing that the user likes to wear, so that supplemented to-be-pasted content better conforms to an expression habit or a search habit of the user, to help the user more accurately find clothing or a store that the user wants. The to-be-pasted content may be supplemented to provide the user with the to-be-pasted content that conforms to the expression habit or the search habit of the user. In addition, the to-be-pasted content can be improved, and omission of information that may be needed by the user in the copied content can be avoided.

In some other embodiments, the electronic device may further sort the to-be-pasted content based on the personal knowledge base, to obtain sorted to-be-pasted content. The electronic device may also sort the error-corrected and/or supplemented to-be-pasted content. The to-be-pasted content may include a plurality of pieces of information extracted from the copied content. The electronic device may sort, in the front based on the personal knowledge base, information that better conforms to a user preference and that is in the to-be-pasted content. The to-be-pasted content may be sorted to facilitate the user in preferentially pasting information of interest to the user on the paste page.

In some other embodiments, the electronic device may further filter the to-be-pasted content to obtain filtered to-be-pasted content. Alternatively, the electronic device may filter the error-corrected, supplemented, and/or sorted to-be-pasted content. Specifically, the electronic device may filter the to-be-pasted content based on historical paste operation information and/or a user intent. For example, when the to-be-pasted content includes a plurality of pieces of information of a same type, if the electronic device has pasted one piece of information in the to-be-pasted content on the paste page, the electronic device may filter out the pasted piece of information when accessing the paste page again, and provide, on the paste page, information that is not pasted in the to-be-pasted content. For another example, when the to-be-pasted content includes a plurality of pieces of information of different types, the electronic device may determine a type of the to-be-pasted content on the currently displayed paste page based on a user intent, to filter out one or more types of information in the to-be-pasted content and provide only information that needs to be pasted on the current paste page. It can be learned that by filtering the to-be-pasted content, information may become invalid after being pasted to avoid a case in which the user repeatedly pastes the invalid information, or information that the user needs to paste may be obtained through filtering based on a user intent to reduce interference of other information to the user.

It should be noted that, when detecting that the user selects content and performs a copy or cut operation, the electronic device may store the copied content or the cut content to the clipboard. The copied content and the cut content each may be a text, a symbol, an image, or the like. Types of the copied content and the cut content are not limited in embodiments of this application. For ease of description, a copy scenario is specifically used as an example for description in subsequent embodiments of this application. For details about the pasting method in a cut scenario, refer to the pasting method in the copy scenario.

The clipboard may be a storage area in a memory of the electronic device, and may be configured to store data copied or cut by the user. The data stored in the clipboard may be referred to as clipboard content. In some embodiments, the clipboard may store copied content of one or more copy operations, and mark a storage time of the copied content. When the copied content stored in the clipboard exceeds a limit of the storage area, the electronic device may delete a part of the copied content from the clipboard according to a rule such as a storage time sequence. For example, the electronic device may delete earliest stored copied content from the clipboard, so that copied content corresponding to a new copy operation can be stored in the clipboard. In some embodiments, the electronic device may include a clipboard application. By using the clipboard application, the user can view and edit data stored in the clipboard.

By using the pasting method provided in this application, the copied content may be obtained from the clipboard, and corresponding processing (for example, extraction, error correction, supplementation, sorting, and filtering) may be performed on the copied content to obtain the to-be-pasted content, to provide the to-be-pasted content for the user to paste, thereby improving copying and pasting experience of the user.

### Description of an electronic device

Herein, a software structure and a hardware structure of an electronic device 100 in this application are described.

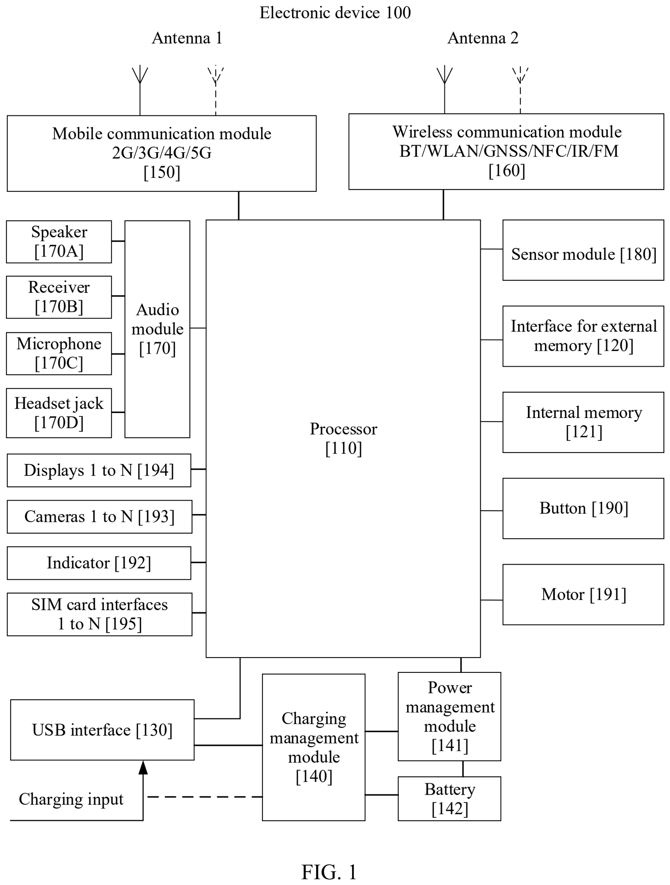

**FIG. 1** **is a diagram of an example of the hardware structure of the electronic device 100.**

As shown in FIG. 1, the electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some examples, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In this application, the memory may store a computer program, so that the controller or the processor can implement the pasting method in this application by using an interface or a protocol.

For example, the computer program stored in the memory may be used to: perform page parsing on a copy page to obtain copy page information, perform page parsing on a paste page to obtain paste page information, identify a paste scenario and a user intent based on the copy page information and the paste page information, intelligently extract copied content based on the paste scenario and the user intent to obtain to-be-pasted content, and perform one or more of the following processing on the to-be-pasted content: error correction, supplementation, sorting, filtering, and the like. The to-be-pasted content may include information that meets the user intent and matches an input box on the paste page and that is extracted from the copied content.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset.

The charging management module 140 is configured to receive charging input from a charger. The charger may be a wireless charger or a wired charger. The charging management module 140 may further supply power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 implements a display function through the GPU, the display 194, the application processor, and the like. The GPU is a microprocessor for image processing, and is connected to the display 194 and the application processor. The GPU is configured to perform mathematical and geometric computation for graphic rendering.

The display 194 is configured to display an image, a video, and the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The NPU is a neural-network (neural-network, NN) computing processor. The NPU quickly processes input information by referring to a structure of a biological neural network, for example, by referring to a transfer mode between human brain neurons; and may further continuously perform self-learning. Applications such as intelligent cognition of the electronic device 100 may be implemented through the NPU, for example, image recognition, facial recognition, speech recognition, text understanding, and text generation.

The interface for external memory 120 may be configured to connect to an external storage card, for example, a micro SD card, to extend a storage capability of the electronic device 100. The external memory card communicates with the processor 110 through the interface for external memory 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and sound recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The gyroscope sensor may be configured to determine a motion posture of the electronic device 100. In some embodiments, angular velocities of the electronic device 100 around three axes (that is, axes x, y, and z) may be determined by using the gyroscope sensor. The electronic device 100 may determine an offset angle of the electronic device 100 by using the gyroscope sensor.

The acceleration sensor may detect magnitudes of accelerations of the electronic device 100 in various directions (generally on three axes). In some embodiments, the acceleration sensor may be configured to identify a posture of the electronic device 100, and may be used in applications such as switching between a landscape mode and a portrait mode and a pedometer.

The gravity sensor may be configured to determine a tilt angle of the electronic device 100 relative to a horizontal plane. In some embodiments, a screen status of the electronic device 100 may be determined by using the gravity sensor, to adjust a screen to keep the screen horizontal.

In some embodiments, the electronic device 100 may determine a moving distance of the electronic device 100 in a period of time by using the acceleration sensor and the gravity sensor.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as conversation and data communication. In some examples, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, the software structure of the electronic device 100 is described by using an Android^{®} system with a layered architecture as an example.

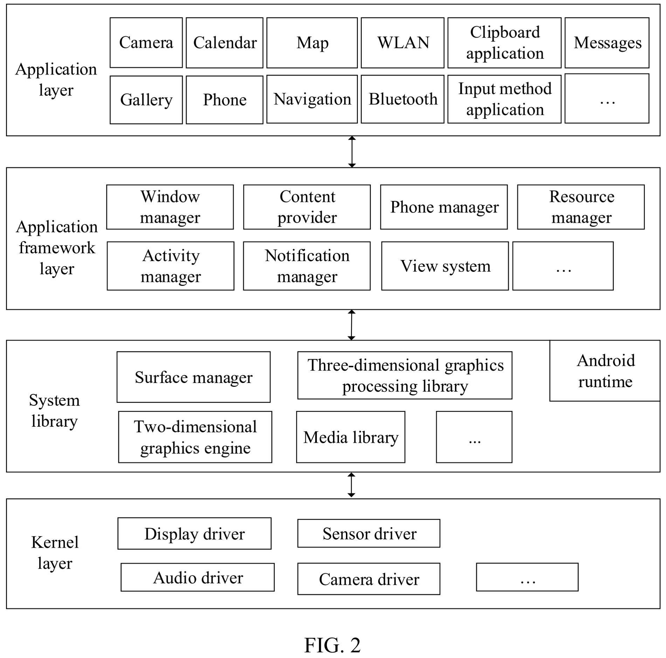

**FIG. 2** **is a diagram** of an **example of the software structure of the electronic device 100.**

In a layered architecture, software is divided into several layers, and each layer has a clear role and task. The layers communicate with each other through a software interface. In some embodiments, the Android^{®} system is divided into four layers that are respectively an application layer, an application framework layer, Android runtime (Android runtime) and a system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, a clipboard application, an input method application, and Messages. The clipboard application may be used to obtain clipboard content, and provide a user with a function of viewing the clipboard content and a function of editing the clipboard content. The input method application may be used to provide a function of inputting content such as a text and a symbol. Optionally, the input method application may further obtain the clipboard content, and provide the clipboard content when a user has an input need, to help the user quickly paste the clipboard content into an input box.

In a possible implementation, both the clipboard application and the input method application may provide a smart paste function for the user. The smart paste function may indicate to extract, from the clipboard content, to-be-pasted content that meets a user intent and that matches an input box on a paste page, and provide the to-be-pasted content on the paste page for the user to input the to-be-pasted content into the input box. The to-be-pasted content provided on the paste page may also be to-be-pasted content obtained through one or more of the following processing: error correction, supplementation, sorting, and filtering. In other words, the smart paste function may be used to accurately extract, from the clipboard content, content that the user wants to paste on the current paste page, thereby improving copying and pasting efficiency of the user.

Embodiments of this application impose no limitation on an application of performing one or more processing such as extraction, error correction, supplementation, sorting, and filtering on the clipboard content on the electronic device 100. In addition to the clipboard application and the input method application, the application of extracting the to-be-pasted content based on the clipboard content and performing one or more processing such as error correction, supplementation, sorting, and filtering on the to-be-pasted content may be another application on the electronic device 100. Optionally, one or more of processing such as extraction, error correction, supplementation, sorting, and filtering performed on the clipboard content may be jointly implemented by a plurality of applications. For example, the clipboard application may extract the clipboard content to obtain the to-be-pasted content. Then, the input method application may obtain the to-be-pasted content, and perform one or more processing such as error correction, supplementation, sorting, and filtering on the to-be-pasted content.

The application framework layer provides an API and a programming framework for an application at the application layer. The application framework layer includes some predefined functions.

As shown in FIG. 2, the application framework layer may include a window manager, a content provider, a view system, a phone manager, a resource manager, a notification manager, an activity manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in the status bar (for example, a pull-down notification bar), and may be configured to transmit a notification-type message. The displayed information may automatically disappear after a short pause without user interaction. For example, the notification manager is configured to: notify download completion, give a message notification, and the like. The notification manager may alternatively be a notification that appears in a top status bar of the system in a form of a graph or a scroll bar text, for example, a notification of an application that is run on the background, or may be a notification that appears on the screen in a form of a dialog window. For example, text information is prompted in the status bar, an alert tone is made, the electronic device vibrates, or an indicator blinks.

The activity manager is responsible for managing an activity (activity), and is responsible for starting, switching, and scheduling each component in the system, and managing and scheduling an application. The activity manager can be invoked by an upper-layer application to start a corresponding activity.

The Android runtime includes a kernel library and a virtual machine. The Android runtime is responsible for scheduling and management of the Android system.

The kernel library includes two parts: a function that needs to be called in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

### Clipboard content processing method

In some embodiments, the electronic device 100 may extract, based on clipboard content, to-be-pasted content that meets a user intent and that matches an input box on a paste page. In addition, the electronic device 100 may further perform one or more processing such as error correction, supplementation, sorting, and/or filtering on the to-be-pasted content, so that the to-be-pasted content better meets a need of a user for copying and pasting.

### 1. Extraction

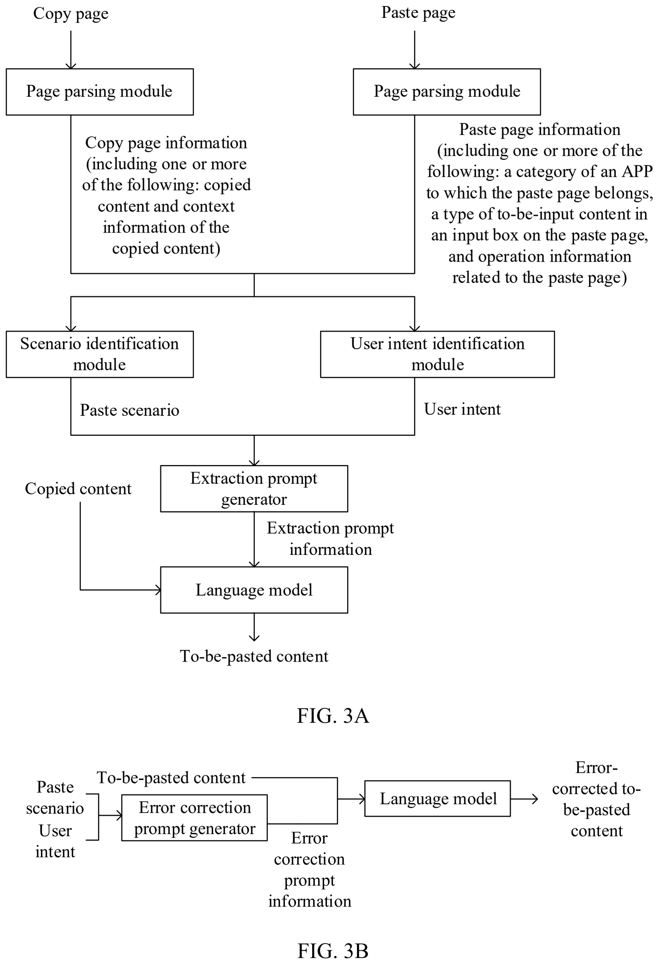

**FIG. 3A** **is a diagram of an example of a method for extracting to-be-pasted content according to an embodiment of this application.**

As shown in FIG. 3A, the electronic device 100 may include a page parsing module, a scenario identification module, a user intent identification module, an extraction prompt generator, and a language model.

**The page parsing module** may be configured to perform page parsing on a copy page to obtain copy page information, and may be configured to perform page parsing on a paste page to obtain paste page information.

Specifically, when detecting an operation of selecting and copying content, the electronic device 100 may store copied content in a clipboard. The copied content is the content selected in the copy operation. A page on which the copy operation is performed is the copy page. The electronic device 100 may perform page parsing on the copy page by using the page parsing module, to obtain copy page information. The copy page information may include one or more of the following: copied content and context information of the copied content. The context information of the copied content may include one or more pieces of information located before and/or after the copied content on the copy page. The context information of the copied content may include content such as a text, a symbol, and an image.

In a possible implementation, the electronic device 100 may extract, by using the page parsing module, a preset quantity of pieces of information located before/after the copied content on the copy page, and use the information as the context information of the copied content. A value of the preset quantity of pieces is not limited in embodiments of this application. For example, on a chat page of an instant messaging application, the copied content is a chat record on the chat page. In this case, the electronic device 100 may extract five chat records before the chat record and five chat records after the chat record, and use these chat records as the context information of the copied content.

In another possible implementation, the electronic device 100 may alternatively take a screenshot of the copy page, and perform image recognition on the screenshot of the copy page, to obtain the context information of the copied content. A method for obtaining the context information of the copied content by the electronic device 100 is not limited in embodiments of this application.

The electronic device 100 may determine a paste page, and perform page parsing on the paste page by using the page parsing module to obtain paste page information. The paste page information may include one or more of the following: a category of an APP to which the paste page belongs, a type of to-be-input content in an input box on the paste page, and operation information related to the paste page.

Herein, some methods for determining the paste page by the electronic device 100 are described as examples.

In a possible implementation, for the input box, when detecting an operation of performing input in the input box (for example, an operation of tapping the input box or an operation of touching and holding the input box), the electronic device 100 may determine a page including the input box as the paste page. The input box may be an area for the user to perform input. The electronic device 100 may input content such as a text, a symbol, or an image in the input box. Content that can be input in the input box is not limited in embodiments of this application. In other words, when the user needs to input information on a page, the page may be a paste page. The electronic device 100 may identify a paste scenario and a user intent based on the paste page, to provide to-be-pasted content that meets a requirement of the user.

In another possible implementation, when detecting a copy operation, the electronic device 100 may determine, as the paste page, a page that includes an input box and that is displayed in a preset time period starting after a moment at which the copy operation takes effect. In other words, in the preset time period after the user performs the copy operation, any page that includes an input box and that is displayed by the electronic device 100 may be the paste page. A value of the preset time period is not limited in embodiments of this application. It may be understood that, after the user performs the copy operation, a page on which pasting needs to be performed is jumped to, to paste the copied content. In this case, the page that includes the input box and that is displayed by the electronic device 100 in the preset time period after the user performs the copy operation may be the page on which the user needs to perform pasting.

The method for determining the paste page by the electronic device 100 is not limited in embodiments of this application.

In the foregoing paste page information, the category of the APP to which the paste page belongs may include but is not limited to: a social APP, a game APP, a payment APP, a shopping APP, an office APP, a reading APP, a movie/television play APP, a music APP, and the like. The category of the APP is not limited in embodiments of this application. The type of the to-be-input content in the input box on the paste page may include but is not limited to: a person name, a movie/television play name, a place name, a store name, a commodity name, a redemption code, a certificate number, a mobile phone number, an email address, and the like. One or more types of information may be input in the input box. The type of the to-be-input content in the input box is not limited in embodiments of this application. The operation information related to the paste page may include but is not limited to information about an operation performed on the paste page by the user and information about an operation for opening the paste page. In an implementation, the operation information related to the paste page includes the information about the operation performed on the paste page by the user. For example, one paste page may include a plurality of input boxes (for example, an input box for inputting a person name and an input box for inputting a mobile phone number). The information about the operation performed on the paste page by the user may include information about the input box tapped or touched and held by the user on the paste page (for example, a type of to-be-input content in the input box). The electronic device 100 may determine, based on an input box tapped by the user on the paste page, content that the user currently wants to input. In another implementation, the operation information related to the paste page includes the information of opening the paste page. For example, a home page of a shopping application and a commodity display page of a specific store on the shopping application each include an input box. The user may input a store name in the input box on the home page of the shopping application, to search for the store and access the commodity display page of the store. The foregoing operation for accessing the commodity display page of the store helps the electronic device 100 determine that a user intent is to search for a commodity in the store. Content of the operation information related to the paste page is not limited in embodiments of this application. Optionally, the paste page information may further include more content (for example, the context information of the input box).

**The scenario identification module** may be configured to identify a paste scenario based on the copy page information and the paste page information. In a possible implementation, the scenario identification module may identify the paste scenario based on a neural network model. A method for identifying the paste scenario is not limited in embodiments of this application. In a possible implementation, the scenario identification module may first pre-identify the paste scenario based on the copy page information, and then further identify the pre-identified paste scenario with reference to the paste page information, to determine a final identification result of the paste scenario.

For example, the copy page information includes information such as a movie name, a movie watching time, and a cinema address. The paste scenario pre-identified by the scenario identification module based on the copy page information may include a movie ticket buying scenario, a navigation scenario, a movie information searching scenario, and the like. Further, when the category of the APP to which the paste page belongs in the paste page information is a movie ticket buying APP, the scenario identification module may determine, with reference to the pre-identified paste scenario and the paste page information, that the paste scenario is the movie ticket buying scenario. Alternatively, when the category of the APP to which the paste page belongs in the paste page information is a navigation APP, the scenario identification module may determine, with reference to the pre-identified paste scenario and the paste page information, that the paste scenario is the navigation scenario.

**The user intent identification module** may be configured to identify the user intent based on the copy page information and the paste page information. The user intent may be an intent of performing copying and pasting by the user. In a possible implementation, the user intent identification module may identify the user intent based on a neural network model. A method for identifying the user intent is not limited in embodiments of this application. In a possible implementation, the user intent identification module may first pre-identify the user intent based on the copy page information, and then further identify, with reference to the paste page information, the pre-identified user intent, to determine a final identification result of the user intent.

For example, the copy page information includes information such as a movie name, a movie watching time, and a cinema address. The user intent pre-identified by the user intent identification module based on the copy page information may include: an intent of buying a movie of a cinema, an intent of navigating to a cinema, and an intent of searching for movie information. Further, when the category of the APP to which the paste page belongs in the paste page information is a movie ticket buying APP, the scenario identification module may determine, with reference to the pre-identified user intent and the paste page information, that the user intent is the intent of buying a movie of a cinema. Alternatively, when the category of the APP to which the paste page belongs in the paste page information is a navigation APP, the scenario identification module may determine, with reference to the pre-identified user intent and the paste page information, that the user intent is the intent of navigating to a cinema.

**The extraction prompt generator** may be configured to generate extraction prompt information based on the paste scenario and the user intent. The extraction prompt information may include a text or a statement, and may be used to guide the language model to extract, from the copied content, the to-be-pasted content that meets the user intent and that matches the input box on the paste page.

The extraction prompt generator may be a type of prompt generator. The prompt generator may be configured to generate prompt information (prompt). A prompt may be in a natural language (that is, a hard prompt (hard prompt/discrete prompt)) that can be understood by human beings. For example, the prompt may be a text or a statement in the natural language. Alternatively, a prompt may be machine-readable content, and belongs to a non-natural language (that is, a soft prompt (soft prompt/continuous prompt)). For example, the soft prompt may be an embedding (embedding), and is a semantic vector representation that is converted from one word to be processed by a computer. The hard prompt is more explainable. The soft prompt can more flexibly eliminate a parameter limitation of the language model. The prompt may be used to start and guide the language model to generate output of a specified type, topic, or format. For example, in the natural language processing field, the prompt may include a group of questions and answers or task descriptions. For example, the prompt is "Give three names to a pet" or "Translate this sentence from English to French". For another example, the prompt may further include a question and answer example. The prompt to which the task description "Give three names to a pet" belongs may include the following question and answer examples: "Pet type: Cat, Pet name: Name 1, Name 2, and Name 3"; and "Pet type: Dog, Pet name: Name 4, Name 5, and Name 6". It may be understood that the question and answer example included in the prompt may be used to guide the language model to answer a question of the user in a manner of the question and answer example. The language model may generate, based on the prompt, a text that meets a requirement and ensure that an output result is related to the prompt.

The extraction prompt information may be referred to as an extraction prompt.

For example, if the paste scenario is the movie ticket buying scenario, and the user intent is the intent of buying a movie of a cinema, the extraction prompt information generated by the extraction prompt generator may include: extracting a movie name and cinema information from given content. The given content is copied content input to the language model. For another example, if the paste scenario is the navigation scenario, and the user intent is the intent of navigating to a cinema, the extraction prompt information generated by the extraction prompt generator may include: extracting a cinema address from given content. The extraction prompt information is merely an example for description of this application, and should not constitute a limitation on this application.

**The language model** may indicate an artificial intelligence (artificial intelligence, AI) model used to process a language (or a symbol system), and may be used to generate, based on a prompt, a text that meets a requirement, and ensure that an output result is related to the prompt. The language model may include a language model implemented based on the probability theory and statistics (namely, a statistical language model), a language model implemented based on deep learning and a neural network (namely, a neural network language model), and the like. An implementation method of the language model is not limited in embodiments of this application. For example, the electronic device 100 may implement the pasting method in this application by using a large language model (large language model, LLM). The LLM may be a neural network model, and may learn syntax and semantics of a natural language, to generate a human-readable text. The LLM may be obtained through training based on a large-scale corpus. The corpus may include massive text data. The LLM can process various natural language processing tasks, for example, natural language generation, text error correction, text supplementation, text classification, text summary, machine translation, and speech recognition.

In some embodiments, the electronic device 100 may use the copied content and the extraction prompt information as input of the language model. The language model may extract the to-be-pasted content from the copied content according to an indication of the extraction prompt information. The to-be-pasted content may include the information that meets the user intent and matches the input box on the paste page and that is extracted from the copied content.

For example, the copied content includes information such as a movie name, a movie watching time, and a cinema address. It can be learned from the foregoing embodiment that, if the paste scenario is the navigation scenario, and the user intent is the intent of navigating to a cinema, the extraction prompt information generated by the extraction prompt generator may include: extracting the cinema address from the given content. When the copied content and the extraction prompt information are input to the language model, the to-be-pasted content output by the language model may include the cinema address. The electronic device may provide the to-be-pasted content on the paste page (that is, a page on which an address is to be input on a map application). In this way, the user may directly choose to input the to-be-pasted content (that is, the cinema address) into the input box on the paste page, to search for and navigate to the cinema address. Therefore, without moving a cursor in the entire content, the user accurately selects content that the user wants to copy (for example, only selecting and copying the cinema address). In addition, the user does not need to delete redundant information piece by piece after copying and pasting the entire content (for example, deleting information such as a movie name and a movie watching time and retaining only the cinema address after pasting the copied content).

In some embodiments, the to-be-pasted content may be structured information. The structured information may indicate data that is recorded in a preset format and that has a clear structure. For example, the structured information may be organized into a row-column structure, where rows and columns may be used to define specific content of the structured information.

For example, when the to-be-pasted content includes a movie name and a cinema name, the electronic device 100 may generate the to-be-pasted content in a format shown in Table 1 below.

**Table 1**

| |
|---|
| Movie name |
| Cinema name |

For another example, when the to-be-pasted content includes names of a plurality of movies/television plays played on a plurality of playback platforms, the electronic device 100 may generate the to-be-pasted content in a format shown in Table 2 below.

**Table 2**

| Playback platform | Movie/Television play |
|---|---|
| Playback platform 1 | Movie/Television play 1 |
| | Movie/Television play 2 |
| Playback platform 2 | Movie/Television play 3 |
| | Movie/Television play 4 |

The structures of the to-be-pasted content shown in Table 1 and Table 2 are merely examples for description of embodiments of this application, and should not constitute a limitation on this application.

In a possible implementation, when detecting operations of selecting and copying content, the electronic device 100 may perform page parsing on the copy page by using the page parsing module, to obtain the copy page information. Then, the electronic device 100 may pre-identify the paste scenario by using the scenario identification module based on the copy page information, and pre-identify the user intent by using the user intent identification module based on the copy page information. Based on the pre-identified pasted scenario and the pre-identified user intent, the electronic device 100 may generate the extraction prompt information by using the extraction prompt generator, and pre-extract the to-be-pasted content from the copied content by using the language model based on the extraction prompt information. The electronic device 100 may store the pre-extracted to-be-pasted content. The pre-extracted to-be-pasted content may be associated with the copied content stored in the clipboard.

It may be understood that, because there may be a plurality of paste scenarios pre-identified based on the copy page information, and there may also be a plurality of pre-identified user intents, the pre-extracted to-be-pasted content may also include a plurality of pieces of information. The plurality of pieces of information may separately meet different user intents and match different paste scenarios.

For example, the electronic device 100 may store the pre-extracted to-be-pasted content according to Table 3 below.

**Table 3**

| Copied content | Pre-identified paste scenario | Pre-identified user intent | Pre-extracted to-be-pasted content |
|---|---|---|---|
| Copied content 1 | Paste scenario 1 | User intent 1 | Information 1 |
| | Paste scenario 2 | User intent 2 | Information 2 |
| | Paste scenario 3 | User intent 3 | Information 3 |
| Copied content 2 | Paste scenario 4 | User intent 4 | Information 4 |
| | Paste scenario 5 | User intent 5 | Information 5 |
| | Paste scenario 6 | User intent 6 | Information 6 |
| ... | ... | ... | ... |

In Table 3, the copied content 1 and the copied content 2 may be respectively content selected and copied in two copy operations. It can be learned that the to-be-pasted content pre-extracted by the electronic device 100 based on the copied content 1 may include the information 1, the information 2, and the information 3. The information 1 may be generated by the extraction prompt generator by using the language model based on the paste scenario 1 and the user intent 1. In other words, the information 1 may be to-be-pasted content that meets the user intent 1 and that matches the paste scenario 1. The information 2 may be generated by the extraction prompt generator by using the language model based on the paste scenario 2 and the user intent 2. In other words, the information 2 may be to-be-pasted content that meets the user intent 2 and that matches the paste scenario 2. The information 3 may be generated by the extraction prompt generator by using the language model based on the paste scenario 3 and the user intent 3. In other words, the information 3 may be to-be-pasted content that meets the user intent 3 and that matches the paste scenario 3. The to-be-pasted content pre-extracted by the electronic device 100 based on the copied content 2 may include the information 4, the information 5, and the information 6. For the information 4, the information 5, and the information 6, refer to the descriptions of the information 1, the information 2, and the information 3. Details are not described herein again.

In some embodiments, one paste scenario may correspond to a plurality of user intents. When there are a plurality of types of to-be-input content in one input box on the paste page, the electronic device may identify a plurality of user intents. When the paste page includes a plurality of input boxes, the electronic device may also identify a plurality of user intents. For example, when the paste page is a home page of a shopping application, the user may need to input a store name or a commodity name in an input box on the home page of the shopping application. Based on the home page of the shopping application, the electronic device may determine that the paste scenario is a shopping scenario, and the user intent includes an intent of searching for the store name and an intent of searching for the commodity name. For another example, a new-contact adding page includes an input box for inputting information such as a name, a phone number, and a work unit. When the paste page is the new-contact adding page, the electronic device may determine that the paste scenario is a new-contact adding scenario, and the user intent includes an intent of filling in the name, an intent of filling in the phone number, and an intent of filling in the work unit.

In some other embodiments, different paste scenarios may alternatively correspond to a same user intent. When the paste page is a new-contact adding page, the electronic device may determine that the paste scenario is a new-contact adding scenario. When the paste page is a registration information entry interface, the electronic device may determine that the paste scenario is an information entry scenario. For the new-contact adding scenario and the information entry scenario, the user intent may include an intent of filling in the name, an intent of filling in the phone number, and the like.

Table 3 is merely an example of storing the pre-extracted to-be-pasted content in embodiments of this application, and should not constitute a limitation on this application.

Further, when the paste page is determined, the electronic device 100 may perform page parsing on the paste page by using the page parsing module, to obtain the paste page information. Then, the electronic device 100 may identify the paste scenario by using the scenario identification module based on the paste page information, and identify the user intent by using the user intent identification module based on the paste page information. The electronic device 100 may obtain pre-extracted to-be-pasted content associated with the latest copied content before the paste page is determined.

The electronic device 100 may determine whether a paste scenario and a user intent that respectively match the paste scenario and the user intent that are identified based on the paste page information exist in a paste scenario and a user intent that are pre-identified based on the latest copied content.

If exists, the electronic device 100 may screen for, in the pre-extracted to-be-pasted content, information that meets the user intent and that matches the paste scenario (the user intent and the paste scenario may be the user intent and the paste scenario that are identified based on the paste page information). The electronic device 100 may provide the information obtained through screening on the paste page for the user to select and input the information into the input box on the paste page. For example, the copied content 1 in Table 3 is the latest copied content before the electronic device 100 determines the paste page. The electronic device 100 identifies the paste scenario 2 and the user intent 2 based on the paste page information. It can be learned from Table 3 that the electronic device 100 may screen for, in the pre-extracted to-be-pasted information, the information 2 that meets the user intent 2 and that matches the paste scenario 2. The electronic device 100 may provide the information 2 on the paste page for the user to select and input the information 2 into the input box on the paste page.

If not exist, the electronic device 100 may generate the extraction prompt information by using the extraction prompt generator based on the paste scenario and the user intent that are identified based on the paste page information. Then, the electronic device 100 may input the extraction prompt information and the latest copied content into the language model, and extract, from the copied content by using the language model, the to-be-pasted content that meets the user intent and that matches the paste scenario (the user intent and the paste scenario may be the user intent and the paste scenario that are identified based on the paste page information).

Optionally, in addition to the latest copied content before the paste page is determined, the electronic device 100 may further obtain copied content obtained in last k times before the paste page is determined, and analyze whether the copied content in the last k times includes information that the user wants to paste onto the current paste page. Herein, k may be an integer greater than 1. A specific value of k is not limited in embodiments of this application.

It can be learned from the foregoing embodiment that, after detecting the copy operation of the user, the electronic device 100 may pre-identify the paste scenario and the user intent, and pre-extract the to-be-pasted content. Then, when accessing the paste page, the electronic device 100 may parse the paste page and identify the paste scenario and the user intent based on the paste page. When the paste scenario and the user intent that are identified based on the paste page respectively match the paste scenario and the user intent that are pre-identified based on the copy page, the electronic device 100 may screen for related information in the pre-extracted to-be-pasted content for the user to paste. In this way, when accessing the paste page, the electronic device 100 can quickly provide a paste option for the user based on the pre-extracted to-be-pasted content, and does not need to generate the extraction prompt information by using the extraction prompt generator and extract the to-be-pasted content by using the language model. The foregoing method can reduce an interaction delay. After opening the paste page, the user can more quickly obtain a paste option that meets a personal paste requirement.

In another possible implementation, when detecting operations of selecting and copying content, the electronic device 100 may perform page parsing on the copy page by using the page parsing module, to obtain the copy page information. The electronic device 100 may store the copy page information. In other words, in the copy scenario, the electronic device 100 may store the copied content in the clipboard, and may further store the copy page information such as the context information of the copied content in a memory of the electronic device 100.

Optionally, the electronic device 100 may store copy page information in the latest k1 times of copying. Herein, k1 may be a positive integer. A specific value of k1 is not limited in embodiments of this application.

When the paste page is determined, the electronic device 100 may perform page parsing on the paste page by using the page parsing module, to obtain the paste page information. The electronic device 100 may obtain page copy information in the latest time of copying before the paste page is determined. The electronic device 100 may identify the paste scenario and the user intent based on the copy page information in the latest time of copying and the paste page information. Then, the electronic device 100 may use the paste scenario and the user intent as input of the extraction prompt generator, and generate the extraction prompt information by using the extraction prompt generator. The electronic device 100 may extract, from the copied content based on the extraction prompt information by using the language model, the to-be-pasted content that meets the user intent and that matches the paste scenario. The matching to-be-pasted content may indicate information that matches the input box on the paste page.

Optionally, in addition to the copy page information in the last time of copying before the paste page is determined, the electronic device 100 may further obtain copy page information in the latest k2 times of copying before the paste page is determined, to identify the paste scenario and the user intent with reference to the copy page information in the latest k2 times of copying and the paste page information. Herein, k2 may be a positive integer less than or equal to k1. A specific value of k2 is not limited in embodiments of this application.

In other words, in this application, that the electronic device 100 extracts target content from the copied content with reference to the copy page information and the paste page information may include: first performing pre-extraction based on the copy page information, and then extracting the target content from the copied content based on the paste page information; and extracting the target content from the copied content after the paste scenario and the user intent are determined based on both the copy page information and the paste page information.

It can be learned from the method shown in FIG. 3A that the electronic device 100 may analyze the paste scenario and the user intent with reference to the copy page information and the paste page information, to extract, from the copied content, the to-be-pasted content that meets the user intent and that matches the paste scenario. In the foregoing method, when the content copied by the user includes much redundant information, content that the user wants to copy and paste can be accurately extracted from the copied content. In this way, the user may not need to move the cursor during copying to perform a cumbersome operation of selecting the copied content, and does not need to paste the copied content and then delete the redundant information piece by piece. In addition, when the copied content includes the plurality of pieces of information that the user wants to copy and paste, but the plurality of pieces of information are spaced, the electronic device 100 may extract, based on the paste scenario and the user intent, the plurality of pieces of information as the to-be-pasted content and display the to-be-pasted content on the paste page. In this way, the user does not need to repeatedly switch between APPs and perform a plurality of copy and paste operations. The foregoing method can effectively improve copying and pasting efficiency of the user, and improve copying and pasting experience of the user.

### 2. Error correction

**FIG. 3B** **is a diagram of an example of a method for performing error correction on to-be-pasted content according to an embodiment of this application.**

As shown in FIG. 3B, the electronic device 100 may include an error correction prompt generator and a language model. For the language model, refer to the description in FIG. 3A. Details are not described herein again.

**The error correction prompt generator** may be configured to generate error correction prompt information based on a paste scenario and a user intent. The error correction prompt information may include a text or a statement, and may be used to guide the language model to perform error correction on the to-be-pasted content, to obtain error-corrected to-be-pasted content.

The error correction prompt generator may be a type of prompt generator. The error correction prompt information generated by the error correction prompt generator may be referred to as an error correction prompt. This is different from the extraction prompt generator.

For example, if the paste scenario is a movie ticket buying scenario, and the user intent is an intent of buying a movie of a cinema, the error correction prompt information generated by the error correction prompt generator may include: determining whether a movie name and a cinema address in given content are correct, and correcting the movie name and the cinema address if the movie name and the cinema address are incorrect. For another example, if the paste scenario is a navigation scenario, and the user intent is an intent of navigating to a cinema, the error correction prompt information generated by the error correction prompt generator may include: determining whether a cinema address in given content is correct, and correcting the cinema address if the cinema address is incorrect. The error correction prompt information is merely an example for description of this application, and should not constitute a limitation on this application.

In some embodiments, the electronic device 100 may use the to-be-pasted content and the error correction prompt information as input of the language model. The to-be-pasted content may be to-be-pasted content extracted based on the method shown in FIG. 3A. The language model may determine, based on a public knowledge base according to an indication of the error correction prompt information, whether an error exists in the to-be-pasted content, perform correction when an error exists in the to-be-pasted content, and output the error-corrected to-be-pasted content.

The public knowledge base may store public knowledge in one or more fields such as music, movie and television, science and technology, and agriculture. Data in the public knowledge base may be obtained through crawling in databases such as websites and applications by using a data crawling device. A method for establishing the public knowledge base is not limited in embodiments of this application.

For example, the to-be-pasted content includes a movie name "XY movie" and a cinema address "AA cinema". It can be learned from the foregoing description that if the paste scenario is the movie ticket buying scenario, and the user intent is the intent of buying a movie of a cinema, the error correction prompt information generated by the error correction prompt generator may include: determining whether the movie name and the cinema address in the given content are correct, and correcting the movie name and the cinema address if the movie name and the cinema address are incorrect. When the to-be-pasted content and the error correction prompt information are input into the language model, the language model may determine, based on the public knowledge base, whether the movie name and the cinema address are erroneous. For example, the movie name is erroneous, and the movie name should be "xx movie". The cinema address is correct. In this case, the language model may correct the movie name, and output error-corrected to-be-pasted content may include: the movie name "xx movie" and the cinema address "AA cinema".

It can be learned from the method shown in FIG. 3B that, after the to-be-pasted content is extracted with reference to the copy page information and the paste page information, the electronic device 100 may further perform error correction on the to-be-pasted content. In this way, even if an error exists in information in the copied content, after error correction, the electronic device 100 may provide correct content for the user to paste, to avoid impact on use effect and experience of the user due to the erroneous copied content.

### 3. Supplementation

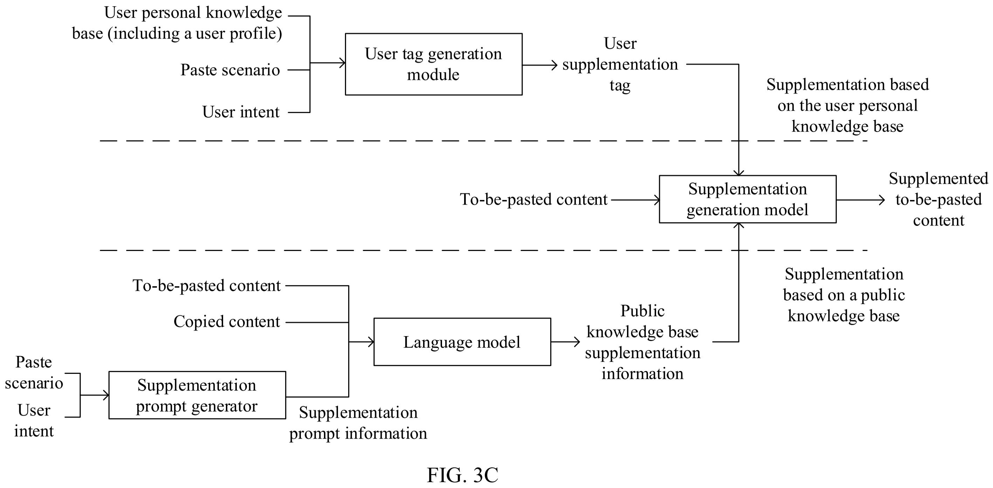

**FIG. 3C** **is a diagram of an example of a method for performing supplementation on to-be-pasted content according to an embodiment of this application.**

As shown in FIG. 3C, the electronic device 100 may include a user tag generation module, a supplementation prompt generator, a language model, and a supplementation generation model. For the language model, refer to the description in FIG. 3A. Details are not described herein again.

**The user tag generation module** may be configured to generate a user supplementation tag based on a user personal knowledge base, a paste scenario, and a user intent. The user supplementation tag may be a tag that conforms to a user personal feature and that is related to the paste scenario and the user intent.

The user personal knowledge base may include user information that indicates features such as a user identity, a user preference, and a user habit, for example, a user profile. In some embodiments, data included in the user personal knowledge base may be collected and inferred through analysis in a process in which the user uses the electronic device 100. For example, the electronic device 100 may collect one or more types of the following data: a place that is frequently searched for and visited by the user on a map application, a commodity that is frequently browsed and bought by the user on a shopping application, a video that is frequently watched by the user on a video playing application, use duration of an APP used by the user, and the like. Based on the foregoing collected data, one or more of the following user personal features can be further obtained through analysis: an age group of the user, a family address and a company address of the user, a type of a video that the user likes to watch, a type of clothing that the user likes to wear, a type of food that the user likes to eat, a hobby of the user, and the like. Data content included in the personal knowledge base and a method for establishing the user personal knowledge base are not limited in embodiments of this application.

In a possible implementation, the user tag generation module may generate the user supplementation tag based on a trained neural network model. An implementation method for generating the user supplementation tag based on the user personal knowledge base, the paste scenario, and the user intent is not limited in embodiments of this application.

For example, if the paste scenario is a movie ticket buying scenario, and the user intent is an intent of buying a movie of a cinema, the user tag generation module may determine, based on the user personal knowledge base, information about a cinema frequently visited by the user (for example, a cinema name and a cinema address), to generate the user supplementation tag. The user supplementation tag may include the information about the cinema frequently visited by the user. For another example, if the paste scenario is a shopping scenario, and the user intent is an intent of searching for a store name or a commodity name of a dress, the user tag generation module may determine, based on the user personal knowledge base, a type of clothing that the user likes to wear. For example, information in the user personal knowledge base may indicate that the user is a fan of maxi dresses. The user supplementation tag generated by the user tag generation module may include a maxi dress.

**The supplementation prompt generator** may be configured to generate supplementation prompt information based on the paste scenario and the user intent. The supplementation prompt information may include a text or a statement, and may be used to guide the language model to generate public knowledge base supplementation information based on to-be-pasted content and/or copied content. The public knowledge base supplementation information may be information that needs to be supplemented in the to-be-pasted content and that is determined based on the public knowledge base.

The supplementation prompt generator may be a type of prompt generator. The supplementation prompt information generated by the supplementation prompt generator may be referred to as a supplementation prompt. This is different from the extraction prompt generator and the error correction prompt generator.

For example, if the paste scenario is a movie/television play searching scenario, and the user intent is an intent of searching for a movie/television play on a movie/television play playback platform, the supplementation prompt information generated by the supplementation prompt generator may include: supplementing information about a playback platform to which a movie/television play belongs in given content. Optionally, the supplementation prompt information generated by the supplementation prompt generator may further include: supplementing a name of a movie/television play in the given content. The supplementation prompt information is merely an example for description of this application, and should not constitute a limitation on this application.

In some embodiments, the electronic device 100 may use the supplementation prompt information as input of the language model, and use the to-be-pasted content and/or the copied content as input of the language model. The to-be-pasted content may be to-be-pasted content extracted based on the method shown in FIG. 3A, or may be error-corrected to-be-pasted content based on the method shown in FIG. 3B. The language model may determine, based on the public knowledge base according to an indication of the supplementation prompt information, the information that needs to be supplemented in the to-be-pasted content, to output the public knowledge base supplementation information. The information that needs to be supplemented may be information related to the supplementation prompt information.

For example, the copied content includes names of a plurality of movies/television plays played on a plurality of playback platforms (for example, a playback platform 1 and a playback platform 2). The to-be-pasted content includes names, extracted from the copied content, of a plurality of movies/television plays. The plurality of movies/television plays may be played on the playback platform 1. It can be learned from the foregoing embodiment that, if the paste scenario is the movie/television play searching scenario, and the user intent is the intent of searching for a movie/television play on the playback platform 1, the supplementation prompt information generated by the supplementation prompt generator may include: supplementing information about the playback platform to which the movie/television play belongs in the given content. The language model may determine, based on the public knowledge base, a playback platform to which each movie/television play belongs in the copied content (or in the copied content but not extracted to the to-be-pasted content). For example, the copied content includes a name of a movie/television play 1. A playback platform to which the movie/television play 1 belongs is the playback platform 1. In this case, the public knowledge base supplementation information generated by the language model may include that the playback platform to which the movie/television play 1 belongs is the playback platform 1.

It should be noted that, when supplementation is performed based on the public knowledge base, the electronic device 100 may input only the to-be-pasted content or only the copied content into the language model based on the supplementation prompt information, or input both the to-be-pasted content and the copied content into the language model.

For example, if the supplementation prompt information is supplementing the information about the playback platform to which the movie/television play belongs in the given content, the electronic device 100 may input only the copied content into the language model, or input both the to-be-pasted content and the copied content into the language model. It may be understood that, if the paste scenario is the movie/television play searching scenario, and the user intent is the intent of searching for the movie/television play on the playback platform 1, the to-be-pasted content extracted by the electronic device 100 based on the method shown in FIG. 3A may include the name of the movie/television play played on the playback platform 1. In other words, the playback platform to which the movie/television play belongs and that is included in the to-be-pasted content is known, and the language model does not need to perform further identification.

For another example, if the supplementation prompt information is supplementing the given content with the name of the movie/television play, the electronic device 100 may input only the to-be-pasted content into the language model. It may be understood that, when supplementation needs to be performed on the to-be-pasted content, if a name of a movie/television play in the to-be-pasted content is incomplete (for example, the to-be-pasted content includes an abbreviation of the name of the movie/television play), the language model may only need to perform supplementation on the name of the movie/television play in the to-be-pasted content.

**The supplementation generation model** may be used to supplement the to-be-pasted content based on the user personal knowledge base and/or the public knowledge base, to generate supplemented to-be-pasted content. The to-be-pasted content input into the supplementation generation model may be to-be-pasted content extracted based on the method shown in FIG. 3A, or may be error-corrected to-be-pasted content based on the method shown in FIG. 3B. The supplementation generation model may be a neural network-based model. An implementation of the supplementation generation model is not limited in embodiments of this application.

In some embodiments, the electronic device 100 may supplement the to-be-pasted content based on the user personal knowledge base. Specifically, the electronic device 100 may use the user supplementation tag and the to-be-pasted content as input of the supplementation generation model, and obtain supplemented to-be-pasted content by using the supplementation generation model.

For example, the to-be-pasted content may include a movie name. When the user supplementation tag includes the information about the cinema frequently visited by the user, for example, a cinema name "AA cinema", the supplemented to-be-pasted content generated by the supplementation generation model may further include the cinema name "AA cinema" in addition to the movie name. The electronic device 100 may provide the supplemented to-be-pasted content on the paste page (for example, a movie ticket buying page). The supplemented to-be-pasted content may help the user quickly search for a movie ticket of a specified power supply at the cinema frequently visited by the user.

For another example, the to-be-pasted content may include a name of a store for selling dresses. When the user supplementation tag includes the maxi dress, the supplemented to-be-pasted content generated by the supplementation generation model may further include the text "maxi dress" in addition to the store name. The electronic device 100 may provide the supplemented to-be-pasted content on the paste page (for example, a search page of a shopping application), that is, a text corresponding to the store name and the maxi dress. It may be understood that there may be a plurality of stores with same store names but different commodities on the shopping application. The supplemented to-be-pasted content may help the user quickly find the store that the user wants to find.

In some other embodiments, the electronic device 100 may supplement the to-be-pasted content based on the public knowledge base. Specifically, the electronic device 100 may use the public knowledge base supplementation information and the to-be-pasted content as input of the supplementation generation model, and obtain supplemented to-be-pasted content by using the supplementation generation model.

For example, the to-be-pasted content includes names of a plurality of movies/television plays. The plurality of movies/television plays in the to-be-pasted content may be all played on the playback platform 1. The to-be-pasted content does not include the name of the movie/television play 1. When the public knowledge base supplementation information includes that the playback platform to which the movie/television play 1 belongs is the playback platform 1, the supplementation generation model may add the name of the movie/television play 1 to the to-be-pasted content. In other words, the supplemented to-be-pasted content includes the name of the movie/television play 1. The electronic device 100 may provide the supplemented to-be-pasted content on the paste page (for example, a search page of the playback platform 1). It may be understood that, when a movie/television play played on the playback platform 1 is extracted from the copied content to generate the to-be-pasted content, extraction may not be fully performed, and names of one or more movies/television plays played on the playback platform 1 in the copied content are omitted. Supplementing the to-be-pasted content based on the public knowledge base may be supplementing the to-be-pasted content with a name of a movie/television play that belongs to the playback platform 1 in the copied content but has not been extracted to the to-be-pasted content. In this way, the to-be-pasted content can be fully extracted from the copied content, to help the user conveniently search, on the search page of the playback platform 1, the copied content for any movie/television play that belongs to the playback platform 1.

In some other embodiments, the electronic device 100 may supplement the to-be-pasted content based on the user personal knowledge base and the public knowledge base. The electronic device 100 may use the to-be-pasted content, and the user supplementation tag and the to-be-pasted content as input of the supplementation generation model, and obtain supplemented to-be-pasted content by using the supplementation generation model. For example, when the paste scenario is the movie ticket buying scenario, and the user intent is the intent of buying a movie of a cinema, the electronic device 100 may supplement the to-be-pasted content with the cinema address based on the user personal knowledge base, and supplement the to-be-pasted content with the movie name based on the public knowledge base.

It can be learned from the method shown in FIG. 3C that the electronic device 100 may supplement the to-be-pasted content based on the user personal knowledge base and/or the public knowledge base, to provide the user with the to-be-pasted content that conforms to an expression habit or a search habit of the user. In addition, the foregoing method can improve the to-be-pasted content, and avoid omission of information that may be needed by the user in the copied content.

### 4. Sorting

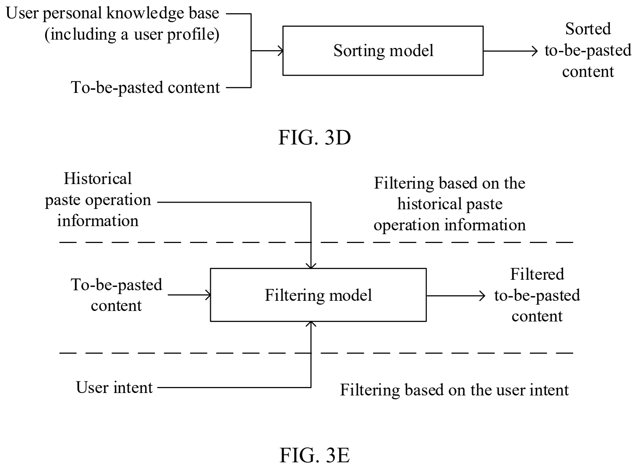

**FIG. 3D** **is a diagram of an example of a method for performing sorting on to-be-pasted content according to an embodiment of this application.**

As shown in FIG. 3D, the electronic device 100 may include a sorting model.

**The sorting model** may be used to sort information in the to-be-pasted content based on a user personal knowledge base, to generate sorted to-be-pasted content. The electronic device 100 may sort, by using the sorting model, information that better conforms to a user preference and that is in the to-be-pasted content. In a possible implementation, the sorting model may be a neural network-based model. An implementation method of the sorting model is not limited in embodiments of this application.

The to-be-pasted content input into the sorting model may be to-be-pasted content extracted based on the method shown in FIG. 3A, or may be error-corrected to-be-pasted content based on the method shown in FIG. 3B, or may be to-be-pasted content obtained through supplementation based on the method shown in FIG. 3C.

For example, the to-be-pasted content includes names of a plurality of movies/television plays. The sorting model may sort the plurality of movies/television plays based on the user personal knowledge base. The sorting model may calculate a degree of interest to the user in the plurality of movies/television plays. A name of a movie/television play with a higher degree of interest to the user may be sorted in the front. This can facilitate the user in preferentially selecting a movie/television play of interest to the user.

It can be learned from the method shown in FIG. 3D that the electronic device 100 may sort a plurality of pieces of information in the to-be-pasted content. The to-be-pasted content may be sorted to facilitate the user in preferentially pasting information of interest to the user on a paste page.

### 5. Filtering

**FIG. 3E** **is a diagram of an example of a method for performing filtering on to-be-pasted content according to an embodiment of this application.**

As shown in FIG. 3E, the electronic device 100 may include a filtering model.

**The filtering model** may be used to filter the to-be-pasted content based on historical paste operation information and/or a user intent, to generate filtered to-be-pasted content. The historical paste operation information may indicate related information about pasting of the to-be-pasted content. For example, the historical paste operation information may include but is not limited to: whether the to-be-pasted content is pasted, a quantity of times that the to-be-pasted content is pasted, a time, a specific APP to which the to-be-pasted content is pasted, and the like.

The electronic device 100 may filter out, by using the filtering model, information that has been pasted and that becomes invalid in the to-be-pasted content, or may filter out, by using the filtering model when a user intent changes, information that does not meet a current user intent and that is in the to-be-pasted content. In a possible implementation, the filtering model may be a neural network-based model. An implementation method of the filtering model is not limited in embodiments of this application.

The to-be-pasted content input into the filtering model may be to-be-pasted content extracted based on the method shown in FIG. 3A, or may be error-corrected to-be-pasted content based on the method shown in FIG. 3B, or may be to-be-pasted content obtained through supplementation based on the method shown in FIG. 3C, or may be to-be-pasted content obtained through filtering based on the method shown in FIG. 3D.

For example, the to-be-pasted content includes a plurality of redemption codes, for example, a redemption code 1. One redemption code can be used only once. When the redemption code 1 in the to-be-pasted content has been pasted, the electronic device 100 may generate historical paste operation information related to the redemption code 1. The historical paste operation information may be used to indicate that the redemption code 1 has been pasted. When accessing a redemption code input page, the electronic device 100 may filter out the redemption code 1 in the to-be-pasted content by using the filtering model, and display, on the redemption code input page, a redemption code other than the redemption code 1 in the to-be-pasted content. In this way, the following case can be avoided: The user forgets which redemption code in the to-be-pasted content has been pasted and used, and repeatedly pastes an invalid redemption code.

For another example, the to-be-pasted content includes a clothing store name and a clothing name. When accessing a home page of a shopping application (the home page may be a paste page), the electronic device 100 may provide the to-be-pasted content, to help the user paste, in a search box on the home page, the store name or the clothing name in the to-be-pasted content. It may be understood that, based on the home page of the shopping application, a user intent that can be identified by the electronic device 100 may include an intent of searching for a store and an intent of searching for a commodity. When accessing a commodity search page of a clothing store on the shopping application, the electronic device 100 may filter out the store name in the to-be-pasted content by using the filtering model, and display the clothing name in the to-be-pasted content on the commodity search page. In this way, after opening a commodity search page of a store on the shopping application, the user may quickly search for a corresponding commodity by using information obtained through filtering the to-be-pasted content. It may be understood that the user usually searches the commodity search page of the clothing store for a commodity in the clothing store instead of searching for another store name. In other words, based on the commodity search page of the shopping clothing store, the electronic device 100 can identify that the user intent is the intent of searching for a commodity. Therefore, the electronic device 100 may filter out the store name in the to-be-pasted content.

It can be learned from the method shown in FIG. 3E that by filtering the to-be-pasted content, information may become invalid after being pasted to avoid a case in which the user repeatedly pastes the invalid information, or information that the user needs to paste may be obtained through filtering based on a user intent to reduce interference of other information to the user.

In some embodiments, after extracting the to-be-pasted content based on the method shown in FIG. 3A, the electronic device 100 may perform error correction, supplementation, sorting, and filtering on the to-be-pasted content according to the methods shown in FIG. 3B to FIG. 3E, and then provide processed to-be-pasted content for the user (for example, display the processed to-be-pasted content on the paste page). A sequence of the four processing items: error correction, supplementation, sorting, and filtering is not limited in embodiments of this application. For example, the electronic device 100 may first perform error correction on the to-be-pasted content, then supplement error-corrected to-be-pasted content, sort supplemented to-be-pasted content, and finally filter sorted to-be-pasted content. Alternatively, after sequentially performing error correction and supplementation on the to-be-pasted content, the electronic device 100 may first filter supplemented content, and then sort filtered to-be-pasted content.

In some other embodiments, the electronic device 100 may perform one or more of error correction, supplementation, sorting, and filtering on the to-be-pasted content. For example, the electronic device 100 may perform only error correction on the to-be-pasted content, and then provide the user with error-corrected to-be-pasted content. Alternatively, the electronic device 100 may perform only supplementation on the to-be-pasted content, and then provide the user with supplemented to-be-pasted content. Alternatively, the electronic device 100 may perform only sorting on the to-be-pasted content, and then provide the user with sorted to-be-pasted content. Alternatively, the electronic device 100 may perform only filtering on the to-be-pasted content, and then provide the user with filtered to-be-pasted content. Alternatively, the electronic device 100 may perform error correction and supplementation on the to-be-pasted content, and then provide the user with error-corrected and supplemented to-be-pasted content. Alternatively, the electronic device 100 may perform error correction and sorting on the to-be-pasted content, and then provide the user with error-corrected and sorted to-be-pasted content. Alternatively, the electronic device 100 may perform error correction and filtering on the to-be-pasted content, and then provide the user with error-corrected and filtered to-be-pasted content. Alternatively, the electronic device 100 may perform supplementation and sorting on the to-be-pasted content, and then provide the user with supplemented and sorted to-be-pasted content. Alternatively, the electronic device 100 may perform supplementation and filtering on the to-be-pasted content, and then provide the user with supplemented and filtered to-be-pasted content. Alternatively, the electronic device 100 may perform sorting and filtering on the to-be-pasted content, and then provide the user with sorted and filtered to-be-pasted content. Alternatively, the electronic device 100 may perform error correction, supplementation, and sorting on the to-be-pasted content, and then provide the user with error-corrected, supplemented, and sorted to-be-pasted content. Alternatively, the electronic device 100 may perform error correction, supplementation, and filtering on the to-be-pasted content, and then provide the user with error-corrected, supplemented, and filtered to-be-pasted content. Alternatively, the electronic device 100 may perform error correction, sorting, and filtering on the to-be-pasted content, and then provide the user with error-corrected, sorted, and filtered to-be-pasted content. Alternatively, the electronic device 100 may perform supplementation, sorting, and filtering on the to-be-pasted content, and then provide the user with supplemented, sorted, and filtered to-be-pasted content.

Based on the clipboard content processing method, the following describes some paste scenarios provided in this application.

### Paste scenario 1: movie ticket buying scenario and navigation scenario

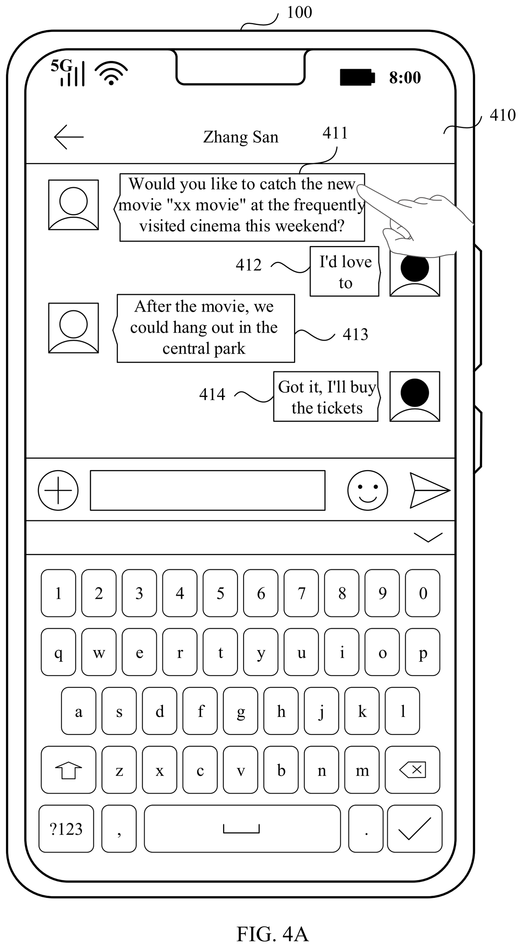

**FIG. 4A to FIG. 4I** **are some diagrams of an example of a movie ticket buying** scenario.

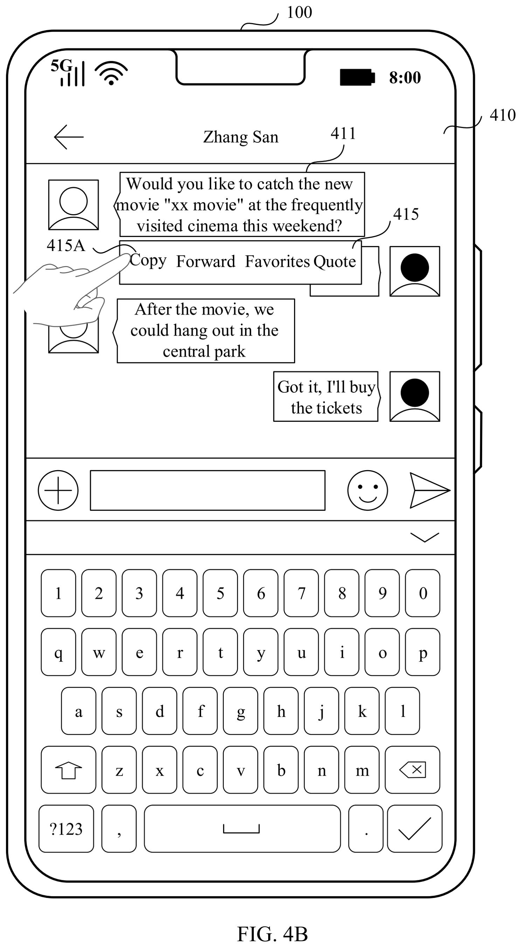

As shown in FIG. 4A, the electronic device 100 may display a user interface 410. The user interface 410 may be a chat page of an instant messaging application. The user interface 410 may include a chat record 411 to a chat record 414. In response to an operation performed on the chat record 411 shown in FIG. 4A, for example, a touch and hold operation, the electronic device 100 may display content in the chat record 411 in a selected state shown in FIG. 4B, and may display a function option box 415 shown in FIG. 4B. The function option box may include a function option used to perform an operation on the chat record 411, for example, a copy option 415A, a forward option, a favorites option, and a quote option.

As shown in FIG. 4B, an entire text in the chat record 411 is displayed in the selected state. The selected state may be, for example, a state in which a background color of the selected text is deepened. A display style of the selected state is not limited in embodiments of this application. In some embodiments, in response to an operation of moving a cursor on the chat record 411, the electronic device 100 may adjust the text in the selected state. To be specific, the user may manually adjust the selected text, for example, select only a part of the text in the chat record 411. When the entire text in the chat record 411 is selected, in response to an operation performed on the copy option 415A shown in FIG. 4B, for example, a tap operation, the electronic device 100 may store the entire text in the chat record 411 to a clipboard. In other words, the entire text in the chat record 411 may be copied content. The user interface 410 may be a copy page.

It can be learned from the method shown in FIG. 3A that the electronic device 100 may perform page parsing on the user interface 410 to obtain copy page information. The copy page information may include context information of the copied content. For example, the context information of the copied content shown in FIG. 4B may include the chat record 412, the chat record 413, and the chat record 414 shown in FIG. 4A.

Herein, description is provided by using an example in which the user copies the chat record 411 shown in FIG. 4B and then opens a ticket buying application that is used to buy a movie ticket and that is on the electronic device 100.

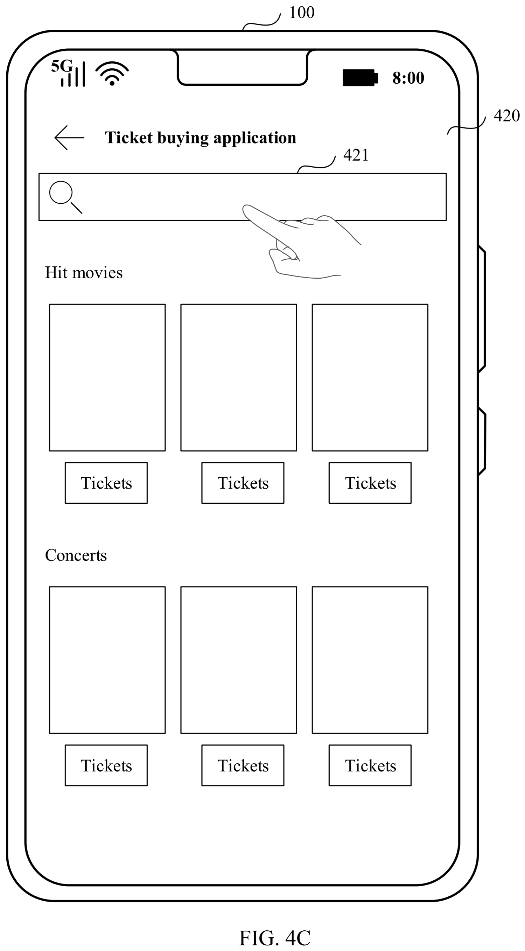

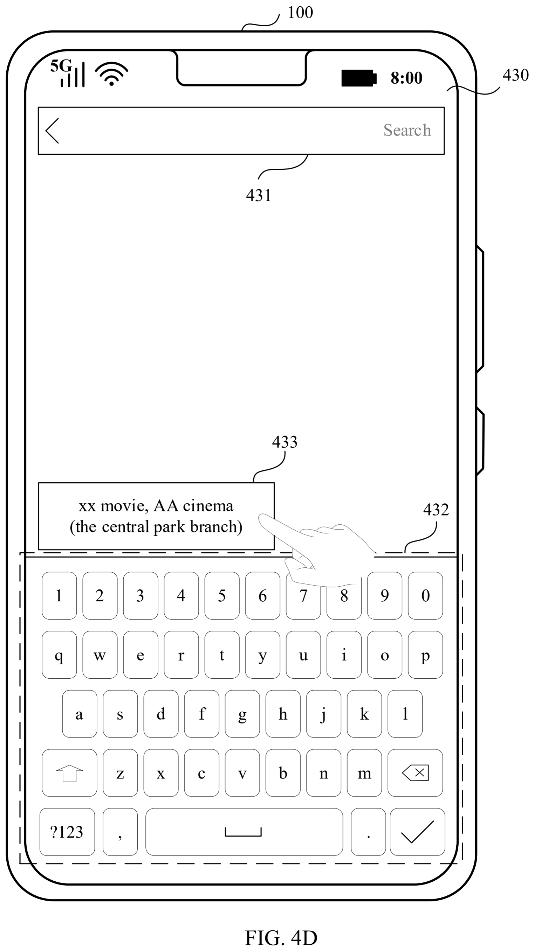

As shown in FIG. 4C, in response to the operation of opening the ticket buying application, the electronic device 100 may display a user interface 420. The user interface 420 may include an input box 421. The input box 421 may be used to input and search for information such as a movie and a cinema. In response to an operation performed on the input box 421 shown in FIG. 4C, for example, a tap operation, the electronic device 100 may display a user interface 430 shown in FIG. 4D.

As shown in FIG. 4D, the user interface 430 may include an input box 421 and an input keyboard 432. The input box 421 may be an input box the same as the input box 421 shown in FIG. 4C, and may be used to input and search for information such as a movie and a cinema. The input keyboard 432 may be used by the user to perform input in the input box 431. The input keyboard 432 may be provided by an input method application.

It should be noted that, when detecting the operation performed on the input box 421 shown in FIG. 4C, the electronic device 100 may determine the user interface 420 as a paste page, and perform page parsing to obtain paste page information. The paste page information may include a category of an APP (that is, a ticket buying APP) to which the user interface 420 belongs, an input box (that is, the input box 421) tapped on the user interface 420, and a type (that is, a movie name and/or a cinema name) of to-be-input content in the input box 421. In addition, the user interface 430 shown in FIG. 4D is jumped to and displayed by the electronic device 100 in response to the operation performed on the input box 421 shown in FIG. 4C. The user interface 430 may also be a paste page. The user interface 430 and the user interface 420 belong to the same APP, and the input box 431 and the input box 421 are also the same. Therefore, paste page information obtained through parsing based on the user interface 430 may be the same as paste page information obtained through parsing based on the user interface 420.

Based on the copy page information determined based on the user interface 410 shown in FIG. 4A and the paste page information determined based on the user interface 420 shown in FIG. 4C, the electronic device 100 may identify that a paste scenario is a movie ticket buying scenario, and identify that a user intent is an intent of buying a movie ticket. Based on the paste scenario and the user intent, the electronic device 100 may generate extraction prompt information for extracting the movie name and cinema information from given content. The electronic device 100 inputs the copied content and the extraction prompt information into a language model, and may extract to-be-pasted content: "xx movie" and "frequently visited cinema" from the copied content by using the language model.

Further, the electronic device 100 may supplement the extracted to-be-pasted content by using the method shown in FIG. 3C. In a possible implementation, the electronic device 100 may supplement the to-be-pasted content based on a user personal knowledge base. For example, information in the user personal knowledge base may indicate that the cinema frequently visited by the user is an AA cinema (the central park branch). The electronic device 100 may generate, by using a user tag generation module, a user supplementation tag indicating that the cinema frequently visited by the user is the AA cinema (the central park branch). Based on the user supplementation tag, the electronic device 100 may supplement the to-be-pasted content to obtain: xx movie, AA cinema (the central park branch).

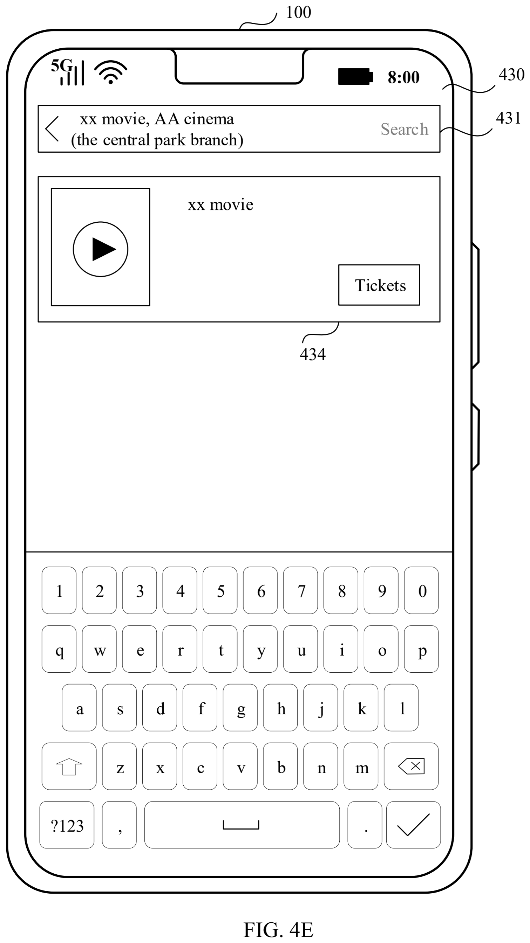

When jumping to the user interface 430 shown in FIG. 4D, the electronic device 100 may provide a paste option 433 on the user interface 430. The paste option 433 may include the supplemented to-be-pasted content. In response to an operation performed on the paste option 433 shown in FIG. 4D, for example, a tap operation, the electronic device 100 may display a user interface 430 shown in FIG. 4E.

As shown in FIG. 4E, the electronic device 100 may input content in the paste option 433 in the input box 431. After detecting that "xx movie, AA cinema (the central park branch)" is input into the input box 431, the ticket buying application on the electronic device 100 may display a search result 434 shown in FIG. 4E. The search result 434 may be a search result for buying a movie ticket of the xx movie at the AA cinema (the central park branch). In this way, the user can quickly buy the movie ticket of the xx movie at the AA cinema (the central park branch) based on the search result 434.

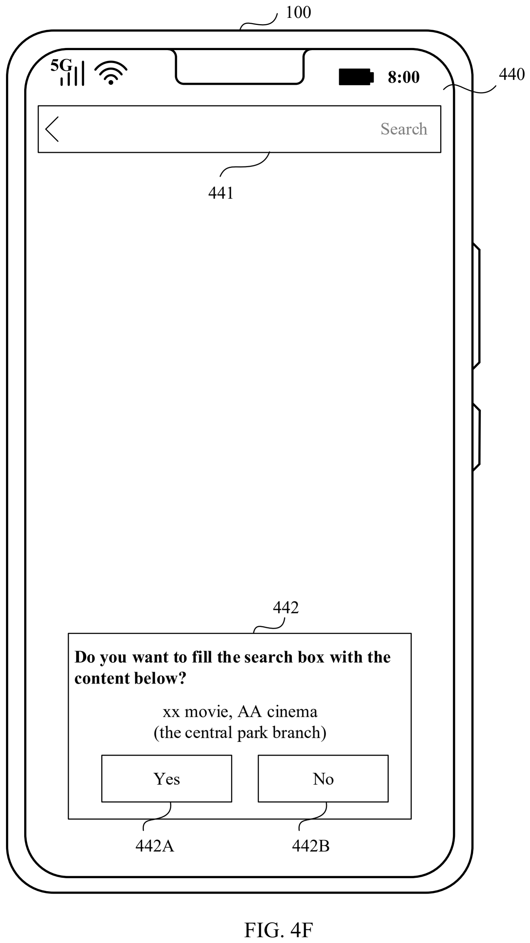

In some other embodiments, in response to the operation performed on the input box 421 shown in FIG. 4C, the electronic device 100 may display a user interface 440 shown in FIG. 4F.

As shown in FIG. 4F, the user interface 440 may include an input box 441 and a prompt box 442. The input box 441 may be an input box the same as the input box 421 shown in FIG. 4C. The prompt box 442 may include the supplemented to-be-pasted content, to prompt the user to input the supplemented content into the input box 441. The prompt box 442 may include a confirm-to-fill control 442A and a close control 442B. The confirm-to-fill control 442A may be used to trigger the electronic device 100 to input the supplemented content into the input box 441. The close control 442B may be used to trigger the electronic device 100 to close the prompt box 442.

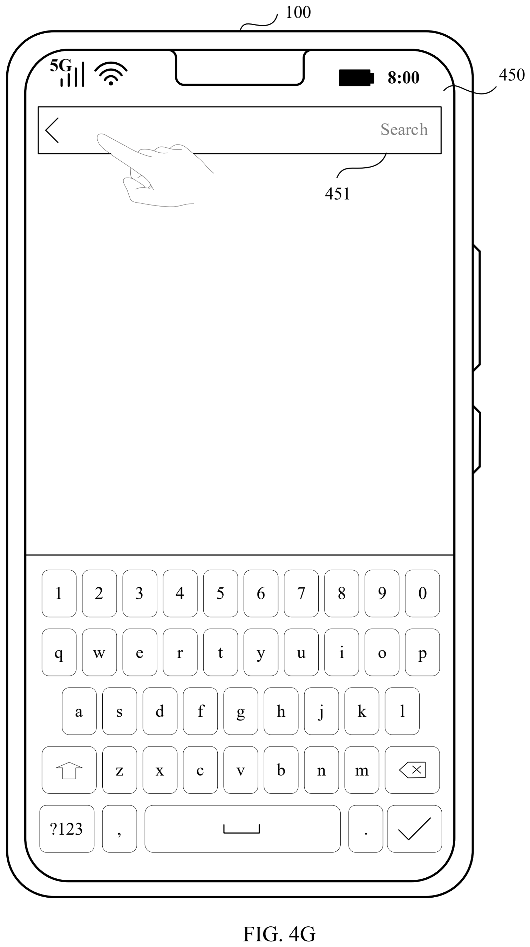

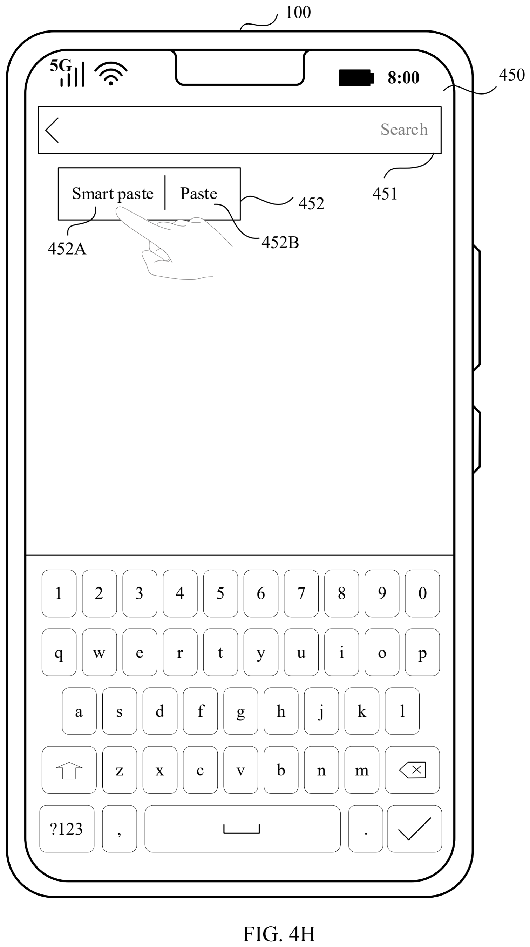

Alternatively, in response to an operation performed on the input box 421 shown in FIG. 4C, the electronic device 100 may display a user interface 450 shown in FIG. 4G. The user interface 450 may include an input box 451. The input box 451 may be an input box the same as the input box 421 shown in FIG. 4C. In response to an operation performed on the input box 451 shown in FIG. 4G, for example, a touch and hold operation, the electronic device 100 may display a prompt box 452 shown in FIG. 4H.

As shown in FIG. 4H, the prompt box 452 may include a smart paste option 452A and a paste option 452B. The smart paste option 452A may be used to trigger the electronic device 100 to provide the to-be-pasted content determined according to the pasting method in this application. The paste option 452B may be used to trigger the electronic device 100 to input the latest copied content into the input box 451. The latest copied content may be the entire text "Would you like to catch the new movie "xx movie" at the frequently visited cinema this weekend?" in the chat record 411 shown in FIG. 4B.

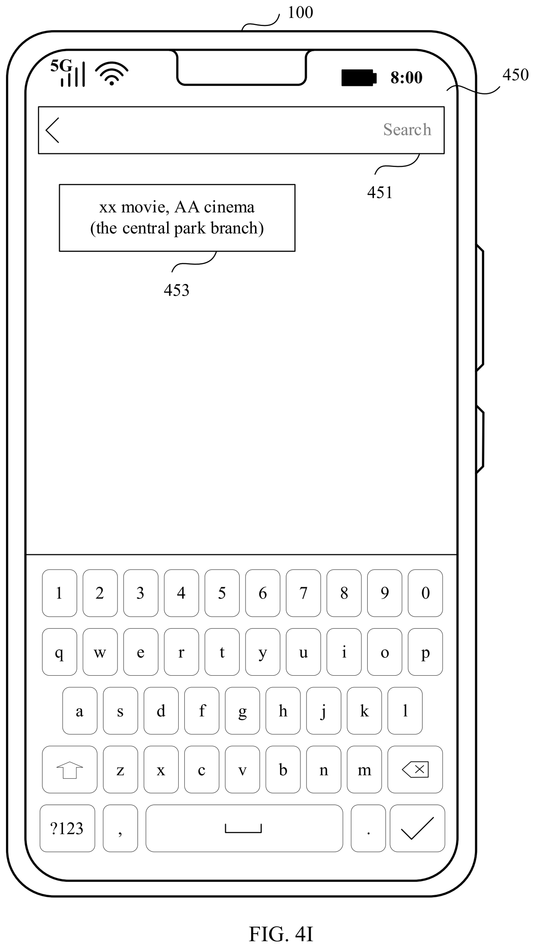

In response to an operation performed on the smart paste option 452A shown in FIG. 4H, for example, a tap operation, the electronic device 100 may display a paste option 453 shown in FIG. 4I. The paste option 453 may include the supplemented to-be-pasted content "xx movie, AA cinema (the central park branch)". In response to an operation performed on the paste option 453, the electronic device 100 may input content in the paste option 453 into the input box 451.

In some embodiments, in response to the operation performed on the input box 421 shown in FIG. 4C, the electronic device 100 may further directly input the extracted and supplemented to-be-pasted content into the input box 421 (that is, input the to-be-pasted content into the input box 431 shown in FIG. 4D).

It can be learned from the scenario shown in FIG. 4A to FIG. 4I that the user may directly copy the entire text in the chat record 411 shown in FIG. 4B, and does not need to adjust the selected and copied text by moving the cursor. After copying the entire content in the chat record 411, the user may directly input, into the input box 431 by using the paste option 433, the movie name and the cinema name that the user wants to search for in the user interface 430 shown in FIG. 4D, and does not need to delete redundant information piece by piece after the entire content in the chat record 411 is pasted into the input box 431. This can effectively improve copying and pasting efficiency of the user, and improve copying and pasting experience of the user.

In other words, a piece of content (for example, the chat record 411 shown in FIG. 4B) may include both one or more pieces of information that the user wants to copy and redundant information that the user does not need to copy. Based on the pasting method in this application, the user may directly copy the piece of content, and does not need to adjust a position of the cursor to select a part of the piece of content for copying. The electronic device 100 may accurately extract, from the piece of content, content that the user wants to paste on the paste page. In addition, when the piece of content includes an indirect expression of the content needed by the user (for example, the cinema address is expressed as the "frequently visited cinema" in the chat record 411), the electronic device 100 may supplement the extracted to-be-pasted content, and supplement the indirect expression to obtain a direct expression of the content needed by the user, so that the to-be-pasted content better meets copying and pasting needs of the user.

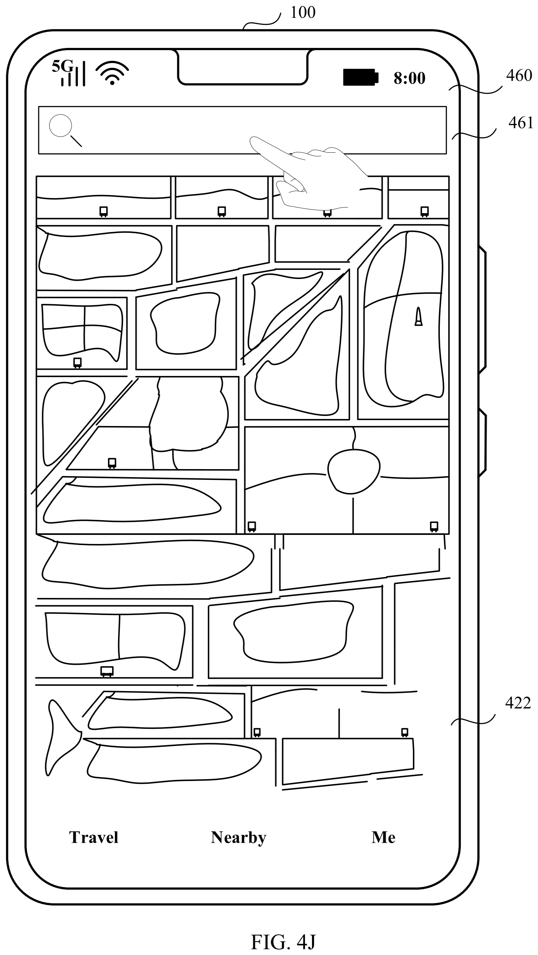

**FIG. 4J to FIG. 4L** **are some diagrams of an example of a navigation scenario.**

Herein, description is provided by using an example in which the user copies the chat record 411 shown in FIG. 4B and then opens a map application on the electronic device 100.

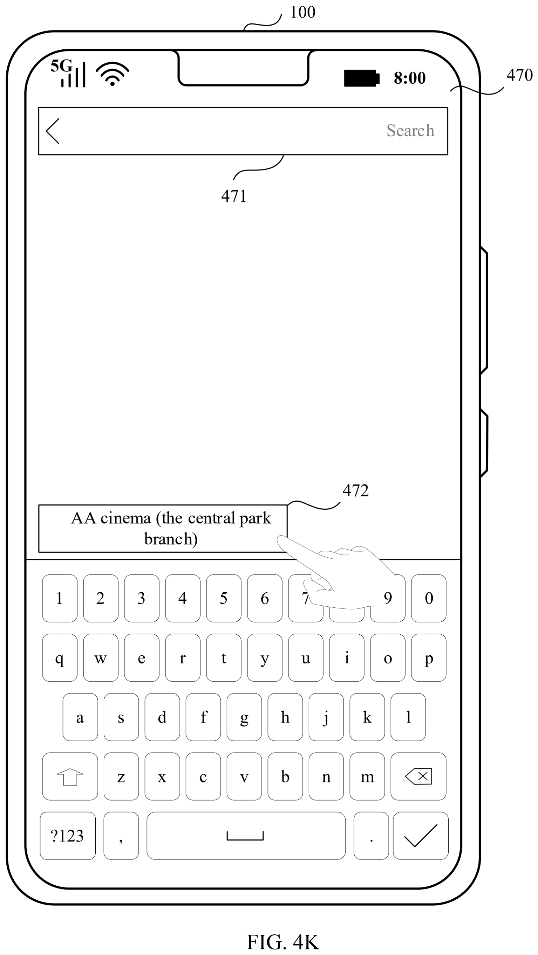

As shown in FIG. 4J, in response to the operation of opening the map application, the electronic device 100 may display a user interface 460. The user interface 460 may include an input box 461. The input box 461 may be used to input and search for information such as an address. In response to an operation performed on the input box 461 shown in FIG. 4J, for example, a tap operation, the electronic device 100 may display a user interface 430 shown in FIG. 4K.

As shown in FIG. 4K, the user interface 430 may include an input box 471. The input box 471 may be an input box the same as the input box 461 shown in FIG. 4J.

When detecting the operation performed on the input box 461 shown in FIG. 4J, the electronic device 100 may determine the user interface 460 as a paste page, and perform page parsing to obtain paste page information. The paste page information may include a category of an APP (that is, the navigation APP) to which the user interface 460 belongs, an input box (that is, the input box 461) tapped on the user interface 460, and a type (that is, an address) of to-be-input content in the input box 461. In addition, the user interface 470 shown in FIG. 4K is jumped to and displayed by the electronic device 100 in response to the operation performed on the input box 461 shown in FIG. 4J. The user interface 470 may also be a paste page. The user interface 470 and the user interface 460 belong to the same APP, and the input box 471 and the input box 461 are also the same. Therefore, paste page information obtained through parsing based on the user interface 470 may be the same as paste page information obtained through parsing based on the user interface 460.

Based on the copy page information determined based on the user interface 410 shown in FIG. 4A and the paste page information determined based on the user interface 460 shown in FIG. 4J, the electronic device 100 may identify that a paste scenario is a navigation scenario, and identify that a user intent is an intent of navigating to a cinema. Based on the paste scenario and the user intent, the electronic device 100 may generate extraction prompt information for extracting the cinema information from the given content. The electronic device 100 inputs the copied content and the extraction prompt information into a language model, and may extract to-be-pasted content: "frequently visited cinema" from the copied content by using the language model.

Further, the electronic device 100 may supplement the extracted to-be-pasted content by using the method shown in FIG. 3C. In a possible implementation, the electronic device 100 may supplement the to-be-pasted content based on a user personal knowledge base. For example, information in the user personal knowledge base may indicate that the cinema frequently visited by the user is the AA cinema (the central park branch). The electronic device 100 may generate, by using the user tag generation module, the user supplementation tag indicating that the cinema frequently visited by the user is the AA cinema (the central park branch). Based on the user supplementation tag, the electronic device 100 may supplement the to-be-pasted content to obtain: AA cinema (the central park branch).

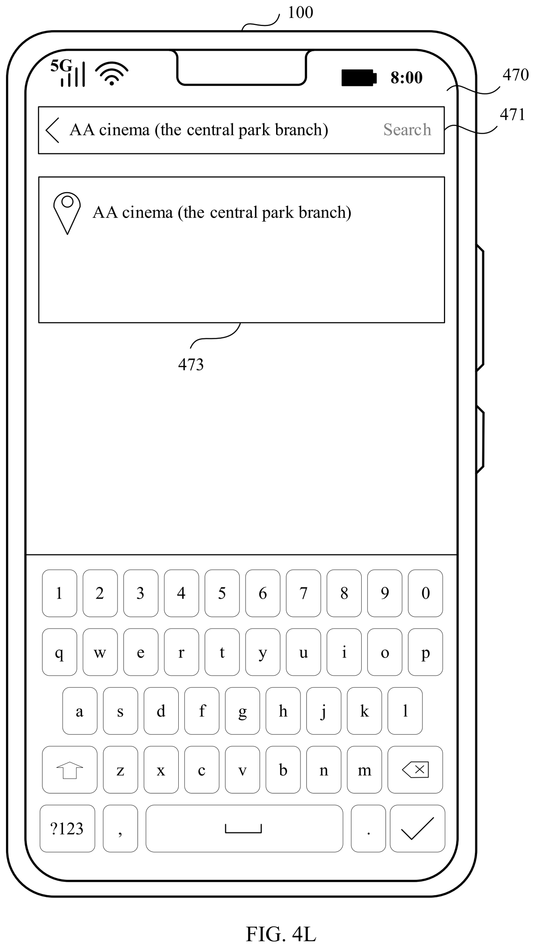

When jumping to the user interface 470, the electronic device 100 may display, on the user interface 470, a paste option 472 shown in FIG. 4K. The paste option 472 may include the supplemented to-be-pasted content. In response to an operation performed on the paste option 472 shown in FIG. 4K, for example, a tap operation, the electronic device 100 may display a user interface 470 shown in FIG. 4L.

As shown in FIG. 4L, the electronic device 100 may input content in the paste option 472 in the input box 471. After detecting that "AA cinema (the central park branch)" is input into the input box 471, the map application on the electronic device 100 may display a search result 473 shown in FIG. 4L. The search result 473 may be a search result used to navigate to the AA cinema (the central park branch). In this way, the user can quickly navigate to the AA cinema (the central park branch) based on the search result 473.

Optionally, after receiving a touch and hold operation performed on the input box 471 shown in FIG. 4K, the electronic device 100 may also provide a paste option corresponding to the to-be-pasted content "AA cinema (the central park branch)", so that the user pastes the to-be-pasted content "AA cinema (the central park branch)" into the input box 471. For a specific interaction manner, refer to the scenario shown in FIG. 4F to FIG. 4I. A method for providing the paste option corresponding to the to-be-pasted content on the electronic device 100 is not limited in embodiments of this application.

It can be learned from the scenario shown in FIG. 4J to FIG. 4L that the user may directly copy the entire text in the chat record 411 shown in FIG. 4B, and does not need to adjust the selected and copied text by moving the cursor. After copying the entire content in the chat record 411, the user may directly input, into the input box 471 by using the paste option 472, the cinema name that the user wants to search for in the user interface 470 shown in FIG. 4K, and does not need to delete redundant information piece by piece after the entire content in the chat record 411 is pasted into the input box 431. This can effectively improve copying and pasting efficiency of the user, and improve copying and pasting experience of the user.

In addition, with reference to the movie ticket buying scenario and the navigation scenario, it can be learned that for same copied content, the electronic device 100 may extract different to-be-pasted content based on different paste scenarios and user intents, to meet pasting requirements of the user in different paste scenarios.

In some embodiments, the copied content shown in FIG. 4B may belong to content copied in the latest m1 times before the electronic device 100 displays the user interface 420 shown in FIG. 4C, and may belong to content copied in the latest m1 times before the electronic device 100 displays the user interface 460 shown in FIG. 4J. Herein, m1 may be a positive integer. Optionally, both the user interface 420 shown in FIG. 4C and the user interface 460 shown in FIG. 4J may be interfaces displayed by the electronic device 100 within a preset time period after the copy operation shown in FIG. 4B is detected. For example, the preset time period may be 1 minute, 2 minutes, or 5 minutes. A value of the preset time period is not limited in embodiments of this application.

### Paste scenario 2: shopping scenario

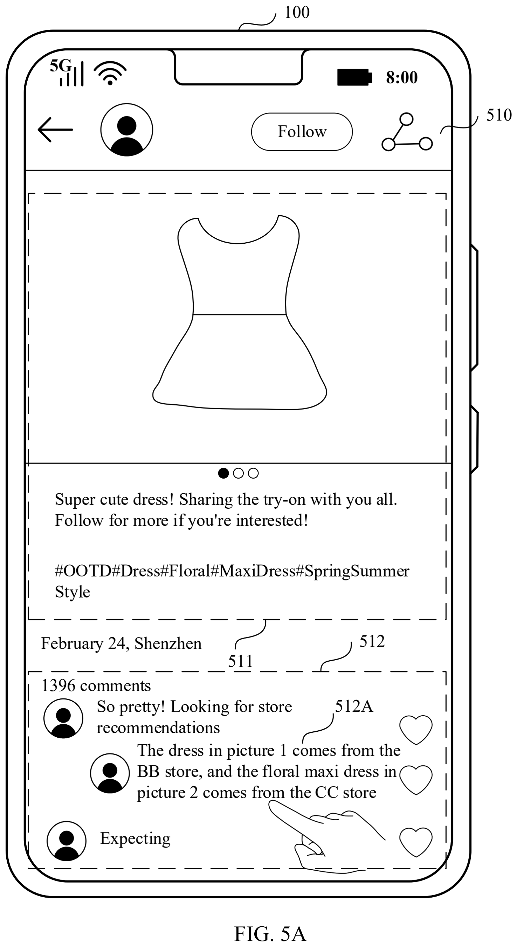

**FIG. 5A to FIG. 5G** **are some diagrams of an example of a shopping scenario.**

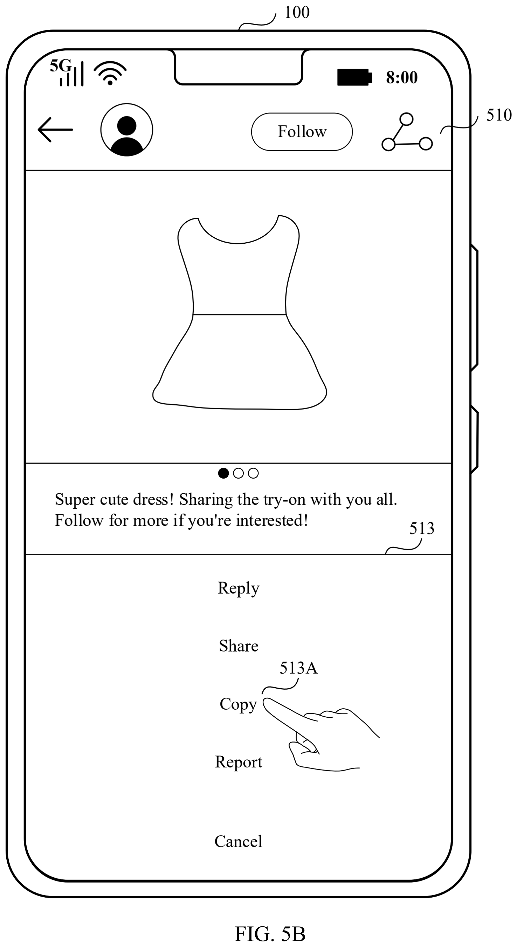

As shown in FIG. 5A, the electronic device 100 may display a user interface 510. The user interface 510 may be a page of a social application. The user interface 510 may include a shared-content display area 511 and a comment display area 512. The shared-content display area 511 may display content shared by a user on the social application. For example, the shared content may include information shown in FIG. 5A, such as a picture and a text for describing a dress. The comment display area 512 may include one or more comments. These comments may be comments on the shared content, replies, and the like. The comment display area 512 may include a comment 512A. In response to an operation performed on the comment 512A shown in FIG. 5A, for example, a touch and hold operation, the electronic device 100 may display a function option box 513 shown in FIG. 5B.

As shown in FIG. 5B, the function option box 513 may include options used to perform operations on the comment 512A, for example, a copy option 513A, a reply option, and a share option. In response to an operation performed on the copy option 513A shown in FIG. 5B, for example, a tap operation, the electronic device 100 may store an entire text in the comment 512A to a clipboard. In other words, the entire text in the comment 512A may be copied content. The user interface 510 may be a copy page.

It can be learned from the method shown in FIG. 3A that the electronic device 100 may perform page parsing on the user interface 510 to obtain copy page information. The copy page information may include context information of the copied content. For example, the context information of the copied content (that is, the comment 512A) shown in FIG. 5A may include the shared content in the shared-content display area 511 shown in FIG. 5A and comments before and after the comment 512A in the comment display area 512.

Herein, description is provided by using an example in which the user copies the comment 512A shown in FIG. 5A and then opens a shopping application on the electronic device 100.

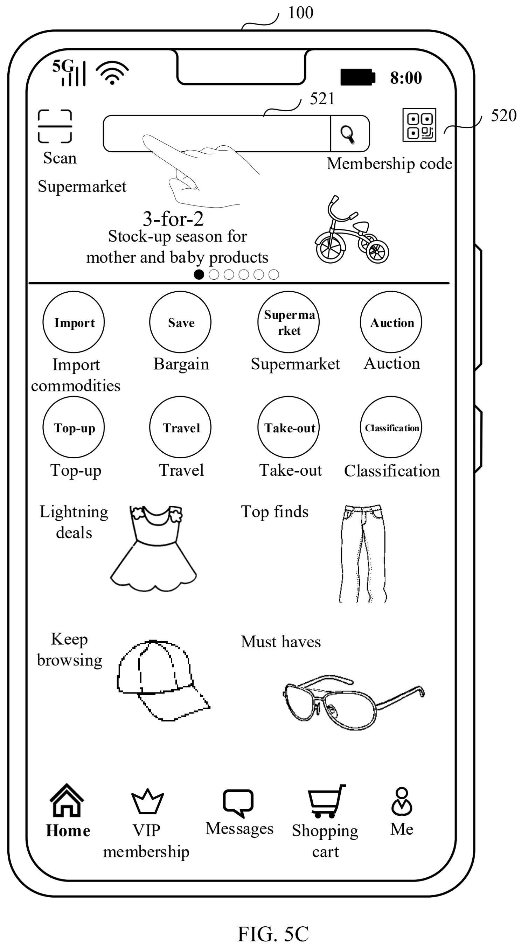

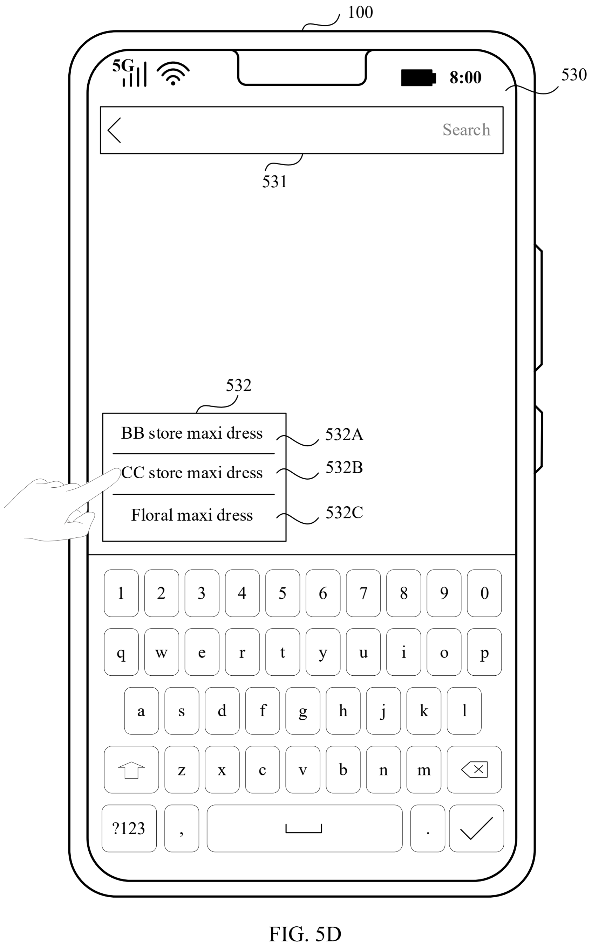

As shown in FIG. 5C, in response to the operation of opening the shopping application, the electronic device 100 may display a user interface 520. The user interface 520 may include an input box 521. The input box 521 may be used to input and search for information such as a store and a commodity. In response to an operation performed on the input box 521 shown in FIG. 5C, for example, a tap operation, the electronic device 100 may display a user interface 530 shown in FIG. 5D.

As shown in FIG. 5D, the user interface 530 may include an input box 531. The input box 531 may be an input box the same as the input box 521 shown in FIG. 5C, and may be used to input and search for information such as a store and a commodity.

It should be noted that, when detecting the operation performed on the input box 521 shown in FIG. 5C, the electronic device 100 may determine the user interface 520 as a paste page, and perform page parsing to obtain paste page information. The paste page information may include a category of an APP (that is, a shopping APP) to which the user interface 520 belongs, an input box (that is, the input box 521) tapped on the user interface 520, and a type (that is, a store name and/or a commodity name) of to-be-input content in the input box 521. In addition, the user interface 530 shown in FIG. 5D is jumped to and displayed by the electronic device 100 in response to the operation performed on the input box 521 shown in FIG. 5C. The user interface 530 may also be a paste page. The user interface 530 and the user interface 520 belong to the same APP, and the input box 531 and the input box 521 are also the same. Therefore, paste page information obtained through parsing based on the user interface 530 may be the same as paste page information obtained through parsing based on the user interface 520.

Based on the copy page information determined based on the user interface 510 shown in FIG. 5A and the paste page information determined based on the user interface 520 shown in FIG. 5C, the electronic device 100 may identify that a paste scenario is a shopping scenario, and identify that a user intent is an intent of searching for a store name or a commodity name of a dress. Based on the paste scenario and the user intent, the electronic device 100 may generate extraction prompt information for extracting the store name and the commodity name from given content. The electronic device 100 inputs the copied content and the extraction prompt information into a language model, and may extract to-be-pasted content: BB store, CC store, and floral maxi dress from the copied content by using the language model.

Further, the electronic device 100 may supplement the extracted to-be-pasted content by using the method shown in FIG. 3C. In a possible implementation, the electronic device 100 may supplement the to-be-pasted content based on a user personal knowledge base. For example, information in the user personal knowledge base may indicate that the user is a fan of maxi dresses. The electronic device 100 may generate a user supplementation tag: Fan of maxi dresses by using a user tag generation module. Based on the user supplementation tag, the electronic device 100 may supplement the to-be-pasted content to obtain: BB store + maxi dress, CC store + maxi dress, and floral maxi dress. It may be understood that a combination of a store name and a clothing type may help the user more accurately find a desired store.

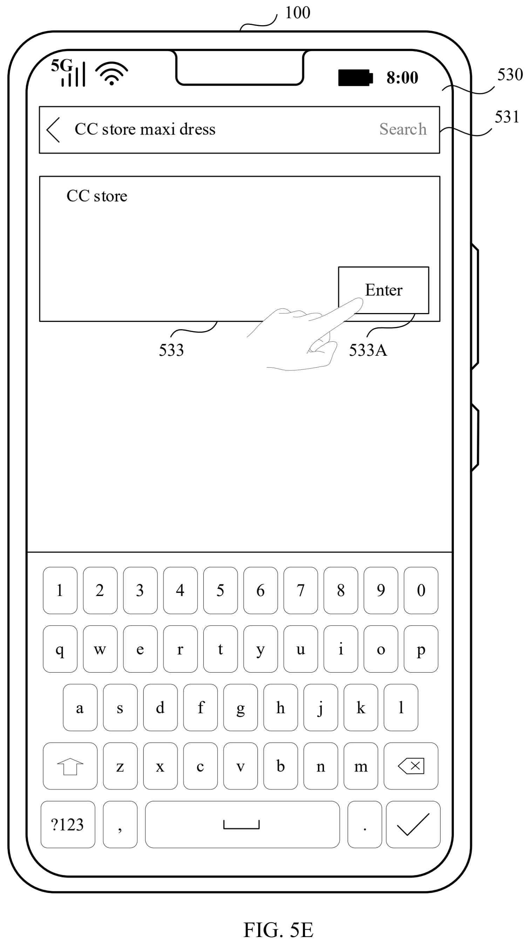

When jumping to the user interface 530 shown in FIG. 5D, the electronic device 100 may display a prompt box 532. The prompt box 532 may display the supplemented to-be-pasted content. For example, the electronic device 100 may provide a plurality of pieces of information in the to-be-pasted content respectively as a plurality of paste options for the user. The prompt box 532 may include a paste option 532A, a paste option 532B, and a paste option 532C. The paste option 532A may be used to input "BB store maxi dress" in the to-be-pasted content into the input box 531. The paste option 532B may be used to input "CC store maxi dress" in the to-be-pasted content into the input box 531. The paste option 532C may be used to input "floral maxi dress" in the to-be-pasted content into the input box 531. In response to an operation performed on the paste option 532B shown in FIG. 5D, the electronic device 100 may display a user interface 530 shown in FIG. 5E.

As shown in FIG. 5E, the electronic device 100 may input content in the paste option 532B in the input box 531. After detecting that "CC store maxi dress" is input into the input box 531, the shopping application on the electronic device 100 may display a search result 533 shown in FIG. 5E. The search result may be a search result for accessing a commodity display page of the CC store on the shopping application. In this way, the user can quickly open the commodity display page of the CC store by using the search result 533, to search for a needed commodity.

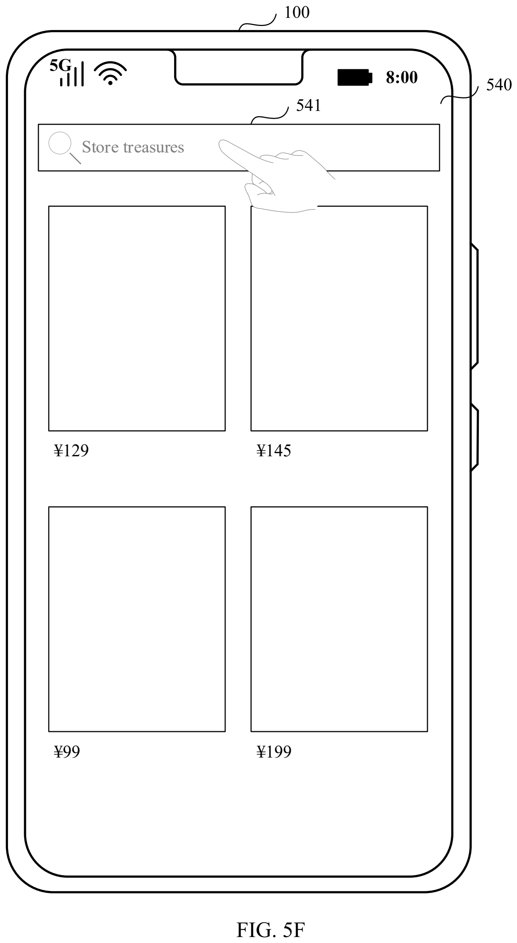

As shown in FIG. 5E, the search result 533 may include an enter option 533A. In response to an operation performed on the enter option 533A, the electronic device 100 may display a user interface 540 shown in FIG. 5F. The user interface 540 may be a commodity display page of the CC store.

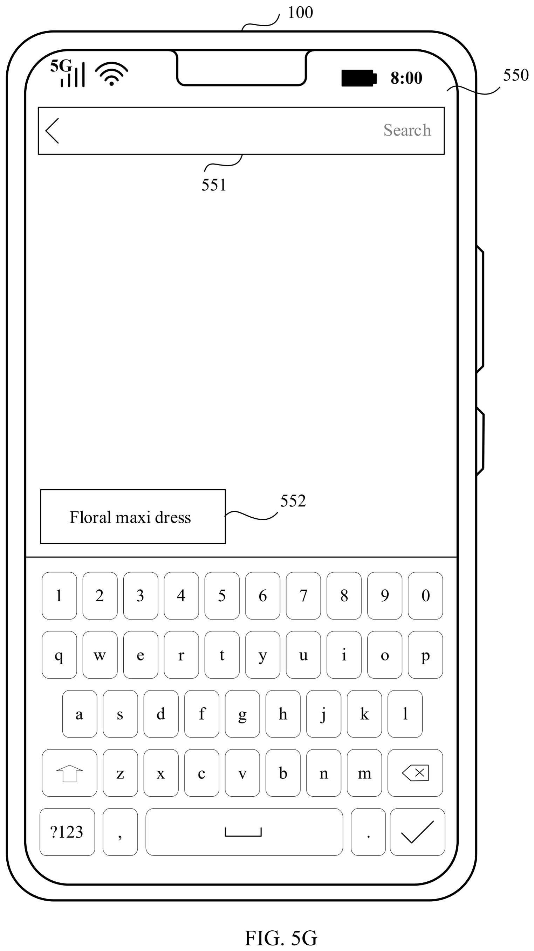

As shown in FIG. 5F, the user interface 540 may include an input box 541. The input box 541 may be used to input and search for information such as a commodity in the CC store. In response to an operation performed on the input box 541 shown in FIG. 5F, for example, a tap operation, the electronic device 100 may display a user interface 550 shown in FIG. 5G.

As shown in FIG. 5G, the user interface 550 may include an input box 551. The input box 551 may be an input box the same as the input box 541 shown in FIG. 5F, and may be used to input and search for information such as a commodity in the CC store.

It should be noted that, when detecting the operation performed on the input box 541 shown in FIG. 5F, the electronic device 100 may determine the user interface as a paste page, and perform page parsing to obtain paste page information. The paste page information may include a category of an APP (that is, a shopping APP) to which the user interface 540 belongs, a type (that is, a commodity name) of to-be-input content in the input box 541, and operation information (that is, operation information of the enter option 533A shown in FIG. 5E) for accessing the paste page. In addition, the user interface 550 shown in FIG. 5G is jumped to and displayed by the electronic device 100 in response to the operation performed on the input box 541 shown in FIG. 5F. The user interface 550 may also be a paste page. The user interface 550 and the user interface 540 belong to the same APP, and the input box 551 and the input box 541 are also the same. Therefore, paste page information obtained through parsing based on the user interface 550 may be the same as paste page information obtained through parsing based on the user interface 540.

Based on the copy page information determined based on the user interface 510 shown in FIG. 5A and the paste page information determined based on the user interface 540 shown in FIG. 5F, the electronic device 100 may identify that a paste scenario is a shopping scenario, and identify that a user intent is an intent of searching for a commodity in a store. In a possible implementation, because the electronic device 100 has extracted to-be-pasted content based on a page (that is, the user interface 520 shown in FIG. 5C) on the APP to which the user interface 540 belongs, the electronic device 100 may obtain corresponding information through filtering the to-be-pasted content based on the user intent identified when the user interface 540 is displayed, so that the user inputs the corresponding information into the input box 541 on the user interface 540. The user intent identified by the electronic device 100 based on the user interface 540 is the intent of searching for a commodity in a store. Based on the user intent, the electronic device 100 may filter the to-be-pasted content displayed in the prompt box 532 shown in FIG. 5D. The electronic device 100 may filter out the store name in the to-be-pasted content, and retain the commodity name in the to-be-pasted content. In other words, the electronic device 100 may filter out the paste option 532A and the paste option 532B shown in FIG. 5D.

As shown in FIG. 5G, when jumping to the user interface 550, the electronic device 100 may display a paste option 552. Content in the paste option 552 may be information retained after the to-be-pasted content is filtered. It can be learned that the paste option 552 is the same as the paste option 532C shown in FIG. 5D. In this way, the user can quickly paste, in the input box 551 by using the paste option 552, the commodity name in the content copied by the user, to search for the corresponding commodity in the selected store.

In some embodiments, the copied content shown in FIG. 5A may belong to content copied in the latest m1 times before the electronic device 100 displays the user interface 520 shown in FIG. 5C, and may belong to content copied in the latest m1 times before the electronic device 100 displays the user interface 540 shown in FIG. 5F. Herein, m1 may be a positive integer. Optionally, both the user interface 520 shown in FIG. 5C and the user interface 540 shown in FIG. 5F may be interfaces displayed by the electronic device 100 within a preset time period after the copy operation shown in FIG. 5A and FIG. 5B is detected.

It can be learned from the scenario shown in FIG. 5A to FIG. 5G that the user may directly copy the entire text in the comment 512A shown in FIG. 5A. The comment 512A may include a plurality of pieces of information that the user needs to copy in a case of the related paste scenario and the user intent. The electronic device 100 may provide the plurality of pieces of information respectively as different paste options for the user, or combine one or more pieces of information in the plurality of pieces of information as a paste option and provide the paste option for the user. In this way, more paste options can be provided for the user, to better meet copying and pasting needs of the user. This facilitates the user in selecting and pasting one or more pieces of information in the copied content into the input box on the paste page.

In addition, if the electronic device 100 has extracted to-be-pasted content from copied content based on a paste page on an APP, when jumping to another paste page on the APP, the electronic device 100 may filter the extracted to-be-pasted content based on a user intent corresponding to the another paste page, and does not need to re-extract to-be-pasted content. In this way, to-be-pasted content provided on different paste pages can better meet different intents of users, and an interaction delay can be reduced. The to-be-pasted content can be more quickly provided for the users after the paste pages are displayed.

### Paste scenario 3: movie/television play searching scenario

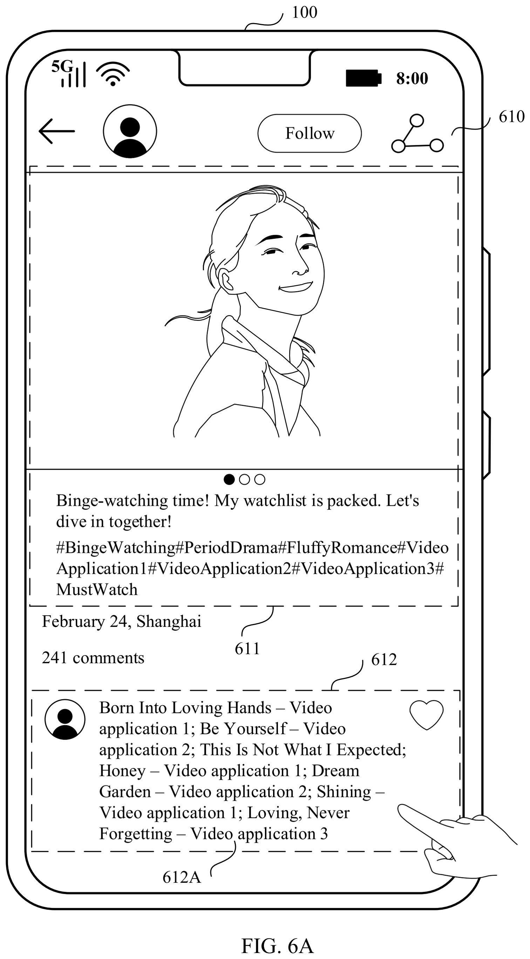

**FIG. 6A to FIG. 6F** **are some diagrams of an example of a movie/television play searching scenario.**

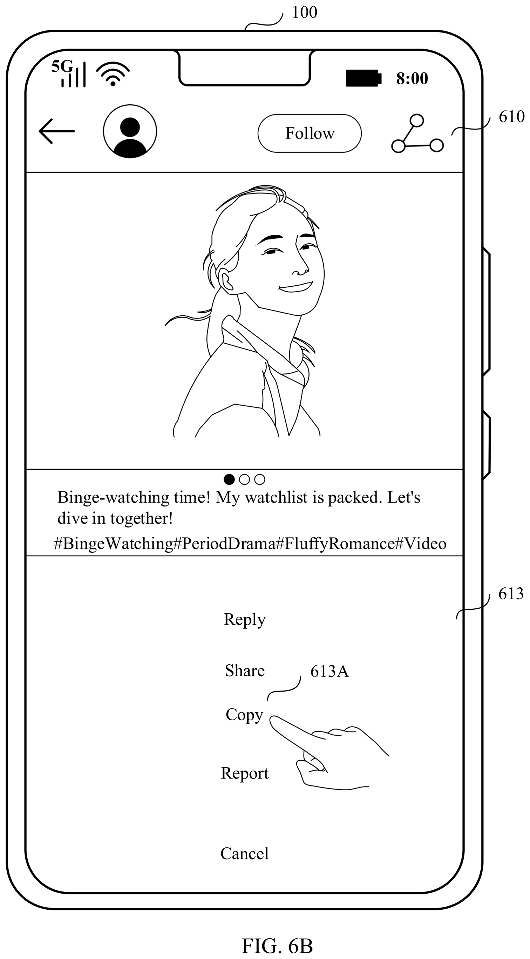

As shown in FIG. 6A, the electronic device 100 may display a user interface 610. The user interface 610 may be a page of a social application. The user interface 610 may include a shared-content display area 611 and a comment display area 612. The shared-content display area 611 may display content shared by a user on the social application. For example, the shared content may include information about a movie/television play shown in FIG. 6A. The comment display area 612 may include one or more comments. These comments may be comments on the shared content, replies, and the like. The comment display area 612 may include a comment 612A. In response to an operation performed on the comment 612A shown in FIG. 6A, for example, a touch and hold operation, the electronic device 100 may display a function option box 613 shown in FIG. 6B.

As shown in FIG. 6B, the function option box 613 may include a copy option 613A. In response to an operation performed on the copy option 613A shown in FIG. 6B, for example, a tap operation, the electronic device 100 may store an entire text in the comment 612A to a clipboard. In other words, the entire text in the comment 612A may be copied content. The user interface 610 may be a copy page.

It can be learned from the method shown in FIG. 3A that the electronic device 100 may perform page parsing on the user interface 610 to obtain copy page information. The copy page information may include context information of the copied content. For example, the context information of the copied content (that is, the comment 612A) shown in FIG. 6A may include the shared content in the shared-content display area 611 shown in FIG. 6A and comments before and after the comment 612A in the comment display area 612.

Herein, description is provided by using an example in which the user copies the comment 612A shown in FIG. 6A and then opens one or more video applications on the electronic device 100. One of the video applications may be a playback platform of movies/television plays.

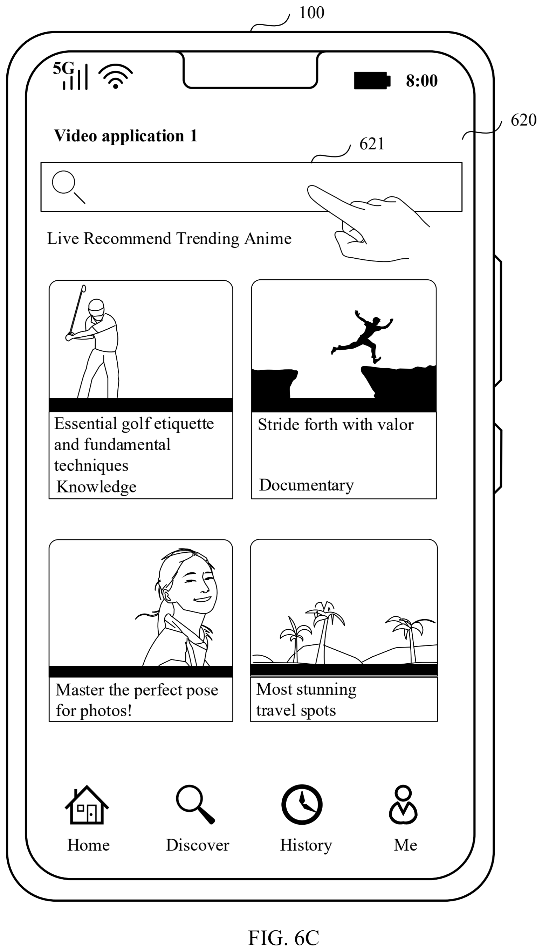

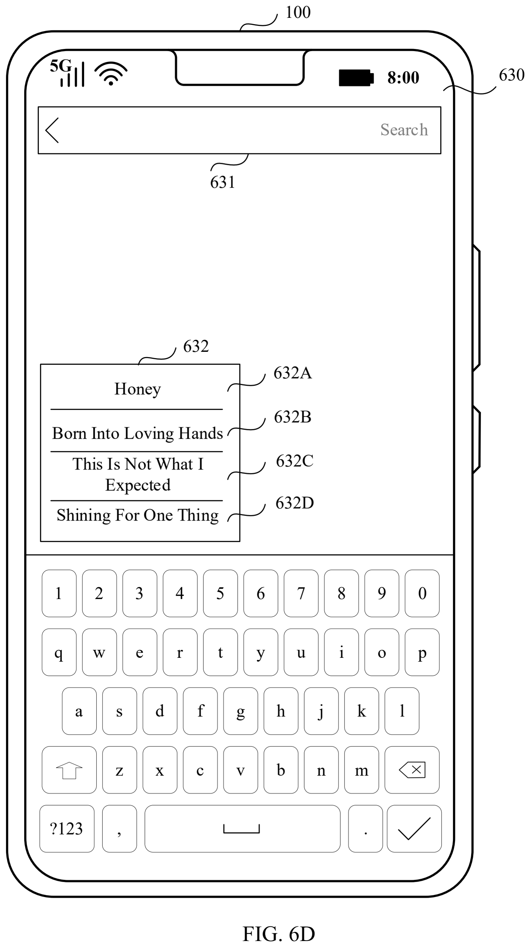

As shown in FIG. 6C, in response to an operation of opening a video application 1, the electronic device 100 may display a user interface 620. The user interface 620 may include an input box 621. The input box 521 may be used to input and search for information such as a movie/television play and an actor. In response to an operation performed on the input box 621 shown in FIG. 6C, for example, a tap operation, the electronic device 100 may display a user interface 630 shown in FIG. 6D.

As shown in FIG. 6D, the user interface 630 may include an input box 631. The input box 631 may be an input box the same as the input box 621 shown in FIG. 6C, and may be used to input and search for information such as a movie/television play and an actor.

It should be noted that, when detecting the operation performed on the input box 621 shown in FIG. 6C, the electronic device 100 may determine the user interface 620 as a paste page, and perform page parsing to obtain paste page information. The paste page information may include a category of an APP (that is, a video playing APP) to which the user interface 620 belongs, an input box (that is, the input box 621) tapped on the user interface 620, and a type (for example, a movie/television play name and/or an actor name) of to-be-input content in the input box 621. In addition, the user interface 630 shown in FIG. 6D may also be a paste page. The user interface 630 and the user interface 620 belong to the same APP, and the input box 631 and the input box 621 are also the same. Therefore, paste page information obtained through parsing based on the user interface 630 may be the same as paste page information obtained through parsing based on the user interface 620.

Based on the copy page information determined based on the user interface 610 shown in FIG. 6A and the paste page information determined based on the user interface 620 shown in FIG. 6C, the electronic device 100 may identify that a paste scenario is a movie/television play searching scenario, and identify that a user intent is an intent of searching the video application 1 for a movie/television play. Based on the paste scenario and the user intent, the electronic device 100 may generate extraction prompt information for extracting, from given content, a movie/television play belonging to the video application 1. It may be understood that currently, there are a plurality of applications for the user to watch a video. A movie/television play may be played only on some video applications. The movie/television play belonging to the video application 1 may indicate a movie/television play played on the video application 1. The electronic device 100 inputs the copied content and the extraction prompt information into a language model, and may extract to-be-pasted content: Born into Loving Hands, Honey, and Shining from the copied content by using the language model.

It may be understood that the comment 612A includes names of movies/television plays and video applications to which some movies/television plays belong. It can be learned from the comment 612A that movies/television plays belonging to the video application 1 include: Born into Loving Hands, Honey, and Shining; movies/television plays belonging to the video application 2 include: Be Yourself, and Dream Garden; and movies/television plays belonging to the video application 3 include: Loving, Never Forgetting. A video application of a movie/television play named "This Is Not What I Expected" is not specified in the comment 612A. Therefore, when the video application 1 is opened, the to-be-pasted content extracted by the electronic device 100 may be a name that is of the movie/television play belonging to the video application 1 and that is in the copied content.

The names of the movies/television plays are merely examples for description of this application.

Further, the electronic device 100 may perform error correction on the extracted to-be-pasted content by using the method shown in FIG. 3B. Specifically, the electronic device 100 may use the paste scenario and the user intent as input of an error correction prompt generator, and obtain, by using the error correction prompt generator, error correction prompt information for determining whether a movie/television play name in given content is correct and performing error correction on an incorrect movie/television play name. The electronic device 100 may input the extracted to-be-pasted content and the error correction prompt information into the language model, and perform error correction on the to-be-pasted content by using the language model. Error correction may be implemented based on a public knowledge base. For example, information in the public knowledge base indicates that the name of the movie/television play "Shining" is incorrect, and a correct name should be "Shining for One Thing". In this case, the electronic device 100 may change "Shining" in the to-be-pasted content to "Shining for One Thing". Error-corrected to-be-pasted content may include: Born into Loving Hands, Honey, and Shining for One Thing.

Then, the electronic device 100 may supplement, by using the method shown in FIG. 3C, the error-corrected to-be-pasted content. In a possible implementation, the electronic device 100 may supplement, based on the public knowledge base, the error-corrected to-be-pasted content. The electronic device 100 may use the paste scenario and the user intent as input of a supplementation prompt generator, and obtain, by using the supplementation prompt generator, supplementation prompt information: supplementing information about a playback platform to which a movie/television play belongs in given content. For example, the given content may be content that is in the copied content but has not been extracted to the to-be-pasted content. The electronic device 100 may input the copied content, the error-corrected to-be-pasted content, and the supplementation prompt information into the language model, and obtain public knowledge base supplementation information by using the language model. The public knowledge base supplementation information may include information that is about a playback platform to which a movie/television play belongs and that is in the copied content but has not been extracted to the to-be-pasted content. For example, the public knowledge base supplementation information may include that a playback platform to which the television play "This Is Not What I Expected" belongs includes the video application 1 and the video application 2. The electronic device 100 may input the error-corrected to-be-pasted content and the public knowledge base supplementation information into a supplementation generation model, and obtain, by using the supplementation generation model, supplemented to-be-pasted content: Born into Loving Hands, Honey, Shining for One Thing, and This Is Not What I Expected. It can be learned that even if the comment 612A shown in FIG. 6A does not explicitly indicate a video application to which the movie/television play "This Is Not What I Expected" belongs, the electronic device 100 may determine, by using the supplementation method, that the video application to which the movie/television play "This Is Not What I Expected" belongs includes the video application 1, to supplement the extracted to-be-pasted content with "This Is Not What I Expected". This can avoid a case in which a movie/television play belonging to the video application 1 in the copied content is omitted in the extracted to-be-pasted content.

Finally, the electronic device 100 may further sort the supplemented to-be-pasted content by using the method shown in FIG. 3D. Specifically, the electronic device 100 may sort the supplemented to-be-pasted content based on a user personal knowledge base. For example, information in the user personal knowledge base may indicate that movies/television plays with degrees of interest to the user in descending order are respectively: Honey, Born into Loving Hands, This Is Not What I Expected, and Shining for One Thing. The electronic device 100 may sort the to-be-pasted content based on the degrees of interest to the user for the movies/television plays, to obtain sorted to-be-pasted content: Honey, Born into Loving Hands, This Is Not What I Expected, and Shining for One Thing. The electronic device 100 may provide each movie/television play name as a separate paste option for the user.

In a possible implementation, the electronic device 100 may detect whether the to-be-pasted content includes a plurality of pieces of information of a same type. The plurality of pieces of information of the same type may be, for example, names of a plurality of movies/television plays, a plurality of person names, a plurality of store names, a plurality of commodity names, and a plurality of place names. When the to-be-pasted content includes the plurality of pieces of information of the same type, the electronic device 100 may provide the plurality of pieces of information of the same type respectively as different paste options for the user. It may be understood that the user usually needs to input only one of the plurality of pieces of information of the same type into the input box at a time. The plurality of pieces of information of the same type are provided for the user respectively as different paste options, to facilitate the user in selecting and pasting needed information into the input box. Optionally, the electronic device 100 may further sort the plurality of pieces of information of the same type by using the method shown in FIG. 3D, to provide sorted to-be-pasted content for the user.

When jumping to the user interface 630 shown in FIG. 6D, the electronic device 100 may display a prompt box 632. The prompt box 632 may display the sorted to-be-pasted content. The prompt box 632 may include a paste option 632A, a paste option 632B, a paste option 632C, and a paste option 632D. The paste option 632A may be used to input the movie/television play name "Honey" into the input box 631. The paste option 632B may be used to input the movie/television play name "Born into Loving Hands" into the input box 631. The paste option 632C may be used to input the movie/television play name "This Is Not What I Expected" into the input box 631. The paste option 632D may be used to input the movie/television play name "Shining for One Thing" into the input box 631. It can be learned that the to-be-pasted content in the prompt box 632 is displayed according to the order of the degrees of interest to the user. A movie/television play (such as "Honey") of the highest degree of interest to the user may be displayed at the topmost position. It may be understood that sorting of the degrees of interest is merely an example for description of this application, and should not constitute a limitation on this application.

In this way, after copying the comment 612A shown in FIG. 6A, the user opens the video application 1, and can quickly input, in the input box 631 of the video application 1 by using the paste options in the prompt box 632, the name that is of the movie/television play belonging to the video application 1 and that is in the comment 612A.

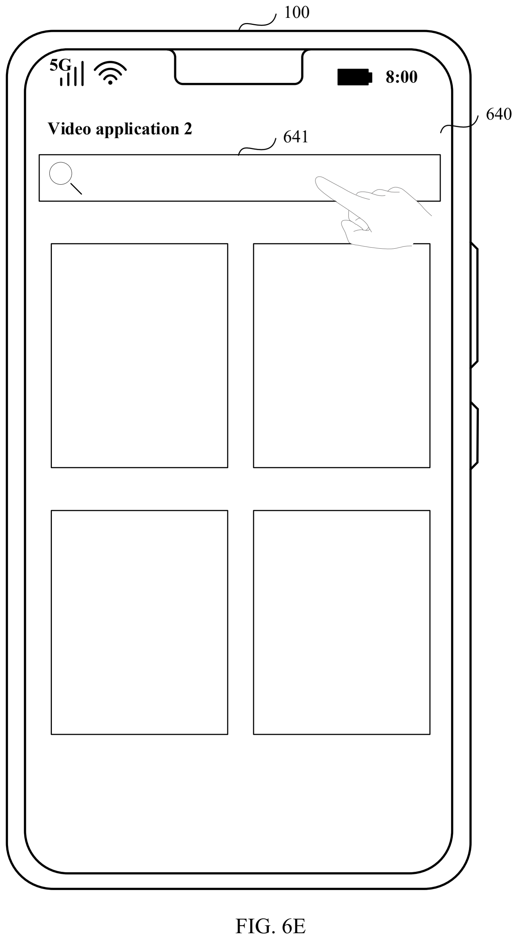

In addition, if the user further opens the video application 2 on the electronic device 100 after copying the comment 612A shown in FIG. 6A, the electronic device 100 may display the user interface 640 shown in FIG. 6E. The user interface 640 may be a user interface of the video application 2.

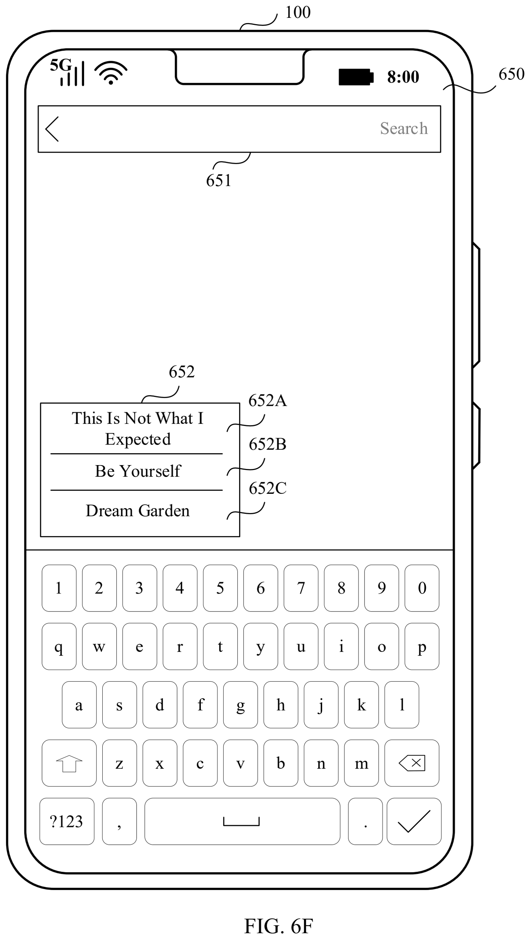

As shown in FIG. 6E, the user interface 640 may include an input box 641. The input box 641 may be used to input and search for information such as a movie/television play and an actor. In response to an operation performed on the input box 641 shown in FIG. 6E, for example, a tap operation, the electronic device 100 may display a user interface 650 shown in FIG. 6F.

As shown in FIG. 6F, the user interface 650 may include an input box 651. The input box 651 may be an input box the same as the input box 641 shown in FIG. 6E, and may be used to input and search for information such as a movie/television play and an actor.

It should be noted that, when detecting the operation performed on the input box 621 shown in FIG. 6E, the electronic device 100 may determine the user interface 640 as a paste page, and perform page parsing to obtain paste page information. The paste page information may include a category of an APP (that is, a video playing APP) to which the user interface 640 belongs, an input box (that is, the input box 641) tapped on the user interface 640, and a type (for example, a movie/television play name and/or an actor name) of to-be-input content in the input box 641.

The electronic device 100 may extract to-be-pasted content according to the method in the foregoing embodiment, and perform error correction, supplementation, and sorting on the to-be-pasted content. For details, refer to the foregoing processing process of determining the to-be-pasted content when the user interface 620 of the video application 1 is a paste page in FIG. 6C and FIG. 6D.

The to-be-pasted content extracted by the electronic device 100 when the user interface 640 shown in FIG. 6E is a paste page may be a name that is of a movie/television play belonging to the video application 2 and that is in the copied content (that is, the comment 612A shown in FIG. 6A). For example, after the electronic device 100 extracts the to-be-pasted content when the user interface 640 is a paste page, and performs error correction, supplementation, and sorting on the to-be-pasted content, the obtained to-be-pasted content may be: This Is Not What I Expected, Be Yourself, and Dream Garden. The movie/television play "This Is Not What I Expected" may be a movie/television play with the highest degree of interest to the user in the to-be-pasted content. The movie/television play "Dream Garden" may be a movie/television play with the lowest degree of interest to the user in the to-be-pasted content.

When jumping to the user interface 650 shown in FIG. 6F, the electronic device 100 may display a prompt box 652. The prompt box 652 may display the error-corrected, supplemented, and sorted to-be-pasted content. The prompt box 652 may include a paste option 652A, a paste option 652B, and a paste option 652C. The paste option 652A may be used to input the movie/television play name "This Is Not What I Expected" into the input box 651. The paste option 652B may be used to input the movie/television play name "Be Yourself" into the input box 651. The paste option 652C may be used to input the movie/television play name "Dream Garden" into the input box 651. In this way, after copying the comment 612A shown in FIG. 6A, the user opens the video application 2, and can quickly input, in the input box 651 of the video application 2 by using the paste options in the prompt box 652, the name that is of the movie/television play belonging to the video application 2 and that is in the comment 612A.

In some embodiments, the copied content shown in FIG. 6A may belong to content copied in the latest m1 times before the electronic device 100 displays the user interface 620 shown in FIG. 6C, and may belong to content copied in the latest m1 times before the electronic device 100 displays the user interface 640 shown in FIG. 6E. Herein, m1 may be a positive integer. Optionally, both the user interface 620 shown in FIG. 6C and the user interface 640 shown in FIG. 6E may be interfaces displayed by the electronic device 100 within a preset time period after the copy operation shown in FIG. 6A and FIG. 6B is detected.

It can be learned from the scenario shown in FIG. 6A to FIG. 6F that the user may directly copy the entire text in the comment 612A shown in FIG. 6A. The electronic device 100 may perform error correction on the to-be-pasted content extracted from the comment 612A. In this way, even if an error exists in information in the copied content, after error correction, the electronic device 100 may provide correct content for the user to paste, to avoid impact on use effect and experience of the user due to the erroneous copied content. In addition, the electronic device 100 may further supplement the to-be-pasted content, to provide the user with more complete to-be-pasted content. Omission of information that may be needed by the user in the copied content can be avoided by using the supplemented to-be-pasted content. The electronic device 100 may further sort the to-be-pasted content to facilitate the user in preferentially selecting and pasting information of interest to the user.

In addition, it can be learned from the prompt box 632 provided on the video application 1 shown in FIG. 6D and the prompt box 652 provided on the video application 2 shown in FIG. 6F that for the same copied content, the electronic device 100 may extract different to-be-pasted content based on different paste scenarios and user intents, to meet pasting requirements of the user in different paste scenarios.

### Paste scenario 4: redemption code redemption scenario

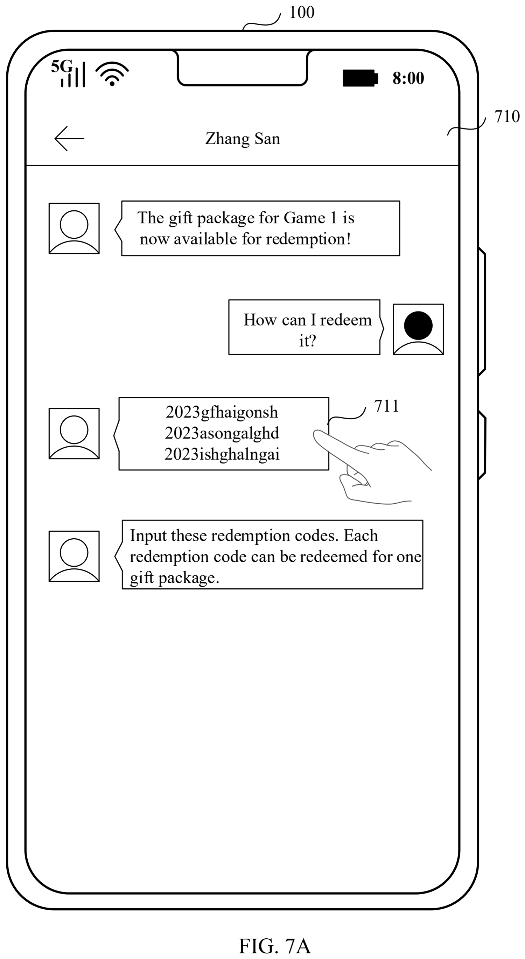

**FIG. 7A to FIG. 7H** **are some diagrams of an example of a redemption code redemption scenario.**

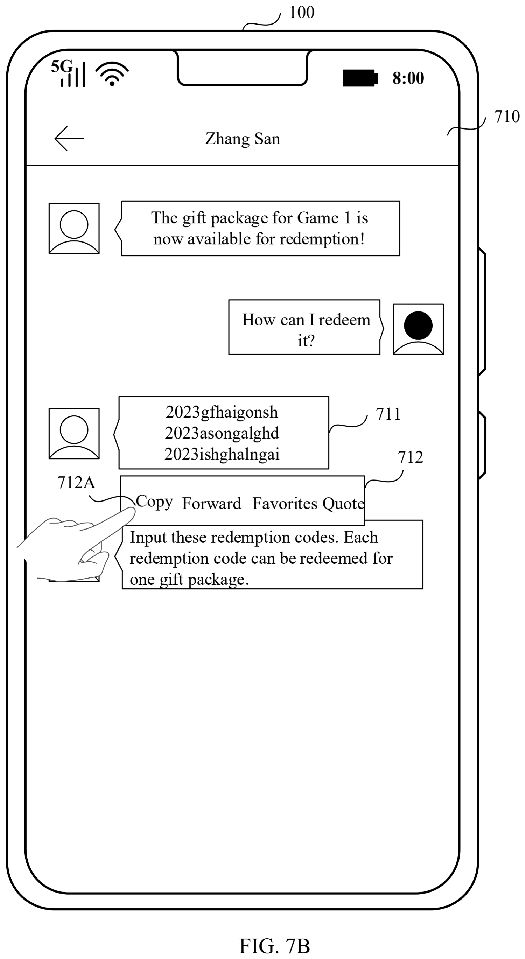

As shown in FIG. 7A, the electronic device 100 may display a user interface 710. The user interface 710 may be a chat page of an instant messaging application. The user interface 710 may include a chat record 711. In response to an operation performed on the chat record 711 shown in FIG. 7A, for example, a touch and hold operation, the electronic device 100 may display content in the chat record 711 in a selected state shown in FIG. 7B, and may display a function option box 712 shown in FIG. 7B. The function option box 712 may include a copy option 712A.

As shown in FIG. 7B, when an entire text in the chat record 711 is selected, in response to an operation performed on the copy option 712A, for example, a tap operation, the electronic device 100 may store the entire text in the chat record 711 to a clipboard. In other words, the entire text in the chat record 711 may be copied content. The user interface 710 may be a copy page.

It can be learned from the method shown in FIG. 3A that the electronic device 100 may perform page parsing on the user interface 710 to obtain copy page information. The copy page information may include context information of the copied content. For example, the context information of the copied content shown in FIG. 7B may include one or more chat records before and after the chat record 711 shown in FIG. 4A: "The gift package for Game 1 is now available for redemption!", "How can I redeem it?", and "Input these redemption codes. Each redemption code can be redeemed for one gift package".

Herein, description is provided by using an example in which the user copies the chat record 711 shown in FIG. 7B and then opens a Game 1 application on the electronic device 100.

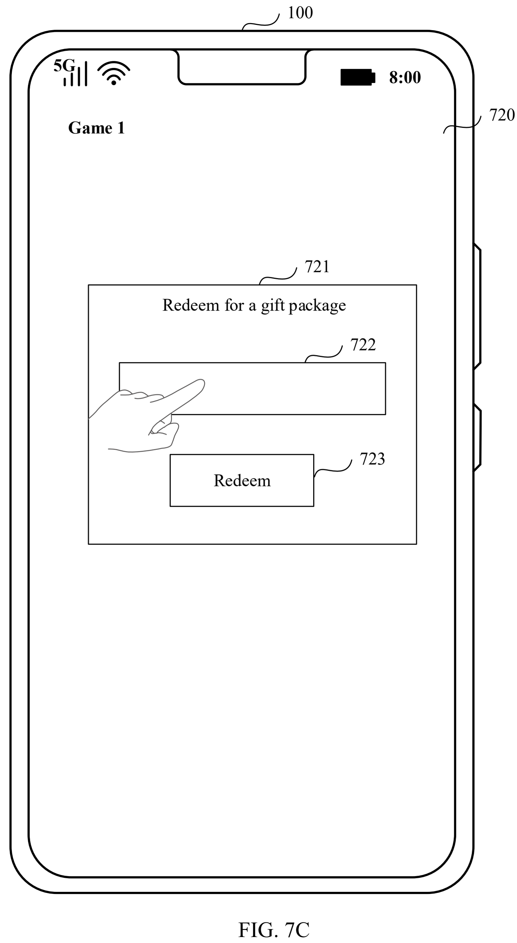

As shown in FIG. 7C, the electronic device 100 may display a user interface 720. The user interface 720 may be an interface for inputting and redeeming a redemption code for a gift package on the Game 1 application. The user interface 720 may include a prompt box 721. The prompt box 721 may include an input box 722 and a confirmation control 723. The input box 722 may be used to input a redemption code. The confirmation control 723 may be configured to: trigger the electronic device 100 to detect whether the redemption code input into the input box 722 meets a requirement, and implement gift package redemption when the redemption code meets the requirement. It may be understood that one redemption code becomes an invalid redemption code after being used once and cannot be used again.

In response to the operation performed on the input box 722 shown in FIG. 7C, the electronic device 100 may determine the user interface 720 as a paste page, and perform page parsing to obtain paste page information. The paste page information may include a category of an APP (that is, a game APP) to which the user interface 720 belongs, an input box (that is, the input box 722) tapped on the user interface 720, and a type (that is, a redemption code) of to-be-input content in the input box 722.

Based on the copy page information determined based on the user interface 710 shown in FIG. 7A and the paste page information determined based on the user interface 720 shown in FIG. 7C, the electronic device 100 may identify that a paste scenario is a redemption code redemption scenario, and identify that a user intent is an intent of redeeming a redemption code for a gift package. Based on the paste scenario and the user intent, the electronic device 100 may generate extraction prompt information for extracting a redemption code from given content. The electronic device 100 inputs the copied content and the extraction prompt information into a language model, and may extract to-be-pasted content: 2023gthaigonsh, 2023asongalghd, and 2023ishghalngai from the copied content by using the language model. It can be learned that the to-be-pasted content may include three redemption codes. The redemption codes are merely examples for description of this application.

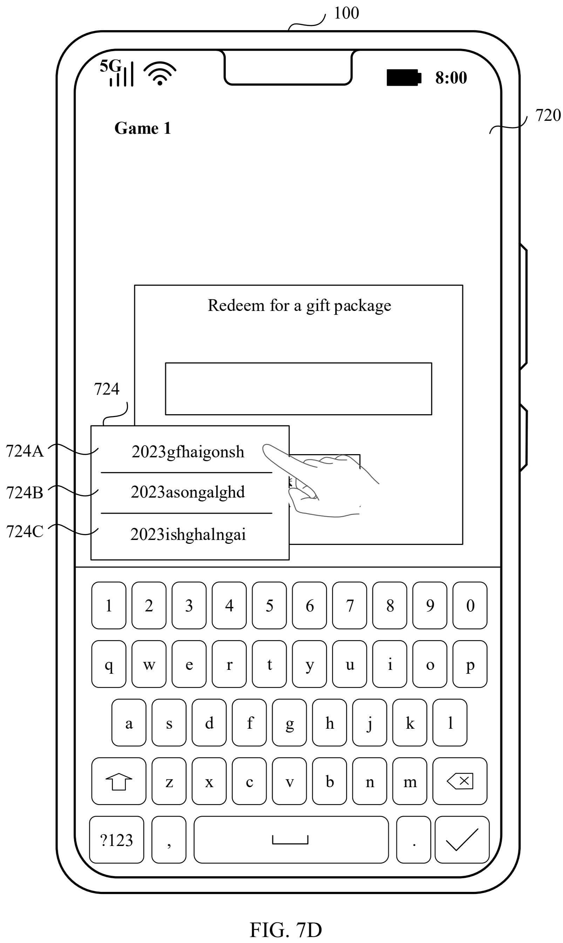

In some embodiments, the electronic device 100 may identify that the plurality of redemption codes in the to-be-pasted content are of a same type. The electronic device 100 may provide the plurality of redemption codes in the to-be-pasted content respectively as different paste options for the user. Optionally, the electronic device 100 may further determine, based on historical paste operation information, whether the plurality of redemption codes in the to-be-pasted content have been pasted. When none of the plurality of redemption codes is pasted, the electronic device 100 may provide a prompt box 724 shown in FIG. 7D.

To be specific, in response to the operation performed on the input box 722 shown in FIG. 7C, the electronic device 100 may determine the to-be-pasted content, and provide, on the user interface 720, the to-be-pasted content shown in FIG. 7D.

As shown in FIG. 7D, the user interface 720 may include a prompt box 724. The to-be-pasted content may be displayed in the prompt box 724. The prompt box 724 may include a paste option 724A, a paste option 724B, and a paste option 724C. These paste options may be paste options respectively corresponding to the plurality of redemption codes in the to-be-pasted content. In this way, the user may select, by using these paste options, a redemption code and input the redemption code into the input box 722, to implement redemption for a gift package.

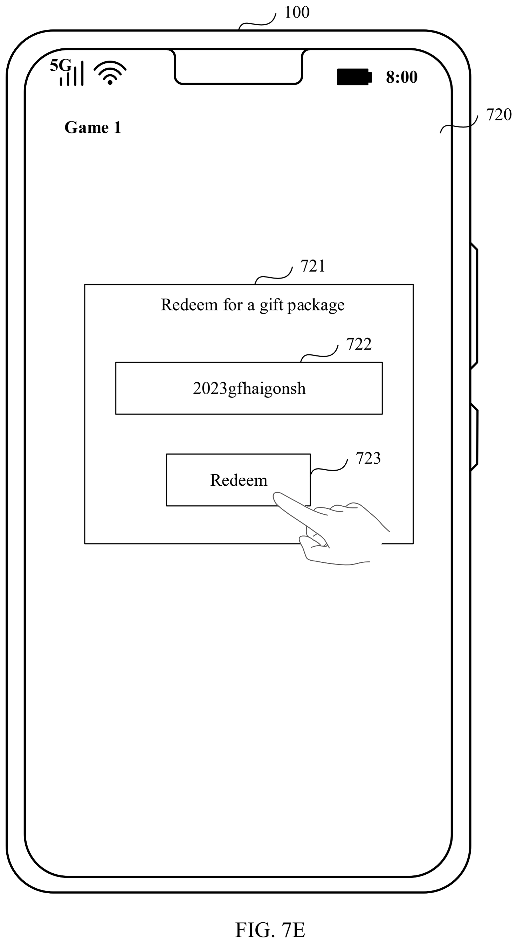

As shown in FIG. 7D, in response to an operation of selecting the paste option 724A, the electronic device 100 may display the user interface 720 shown in FIG. 7E.

As shown in FIG. 7E, the electronic device 100 may input the redemption code "2023gfhaigonsh" corresponding to the paste option 724A into the input box 722. In response to an operation performed on the confirmation control 723, the electronic device 100 may redeem the redemption code "2023gfhaigonsh" for a gift package.

In a possible implementation, in response to the operation of selecting the paste option 724A shown in FIG. 7D to paste the redemption code "2023gfhaigonsh" corresponding to the paste option 724A into the input box 722, the electronic device 100 may mark the redemption code "2023gfhaigonsh". For example, the electronic device 100 may add, to historical paste operation information, information that the redemption code "2023gfhaigonsh" has been pasted.

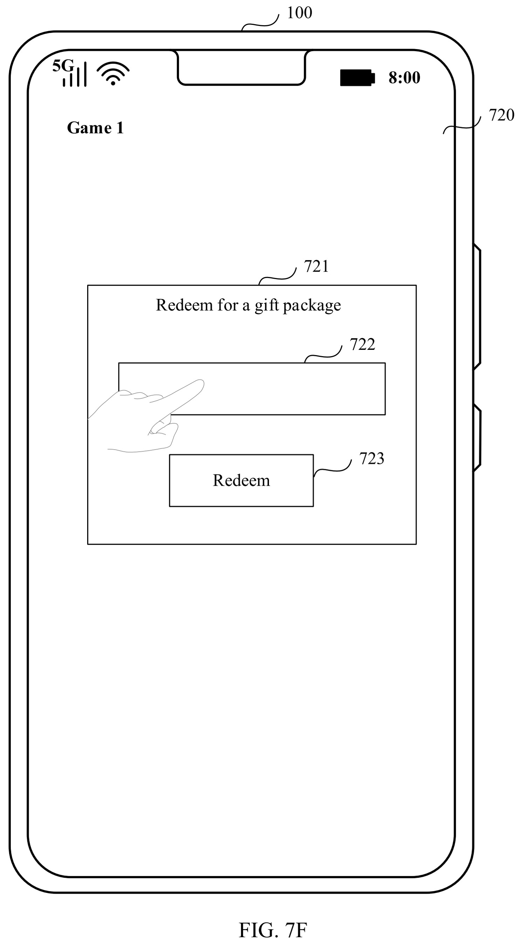

As shown in FIG. 7F, the electronic device 100 may display again the interface (that is, the user interface 720) for inputting and redeeming a redemption code for a gift package on the Game 1 application. Because the electronic device 100 has extracted the to-be-pasted content by using the user interface 720 as the paste page, when detecting an operation performed on the input box 722 again, the electronic device 100 may filter the extracted to-be-pasted content based on the method shown in FIG. 3E.

The electronic device 100 may filter the to-be-pasted content based on the historical paste operation information. It can be learned from the foregoing description that the historical paste operation information includes the information that the redemption code "2023gfhaigonsh" has been pasted. Therefore, the electronic device 100 may filter out the redemption code "2023gthaigonsh" in the to-be-pasted content, and provide a remaining redemption code as a paste option for the user.

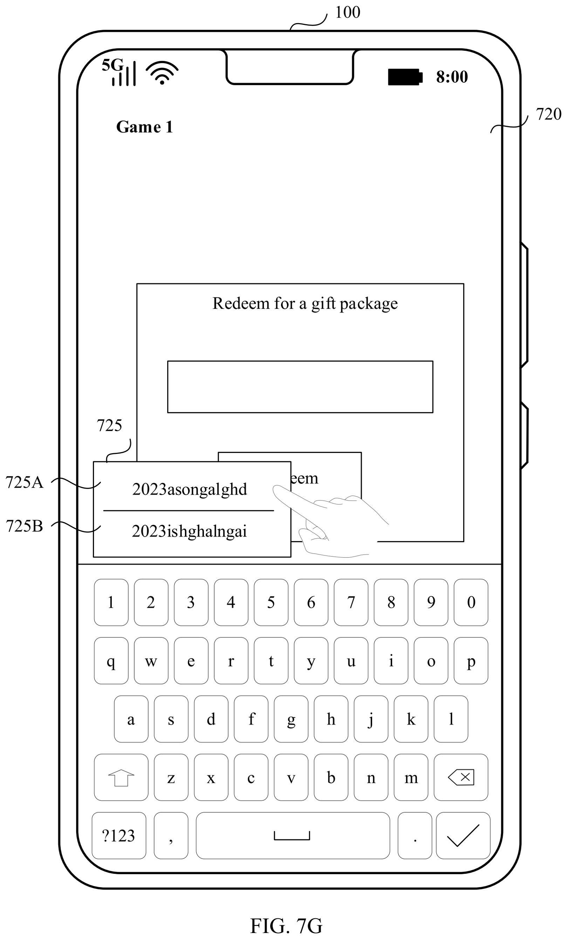

To be specific, in response to an operation performed on the input box 722 shown in FIG. 7F, the electronic device 100 may obtain the to-be-pasted content through filtering, and display, on the user interface 720, the filtered to-be-pasted content shown in FIG. 7G.

As shown in FIG. 7G, the user interface 720 may include a prompt box 725. The filtered to-be-pasted content may be displayed in the prompt box 725. The prompt box 725 may include a paste option 725A and a paste option 725B. It can be learned that the paste option 725A is based on the paste option 724B shown in FIG. 7D. The paste option 725B is the paste option 724C shown in FIG. 7D. In this way, the user may input an unused redemption code into the input box 722 by using the paste options shown in FIG. 7G.

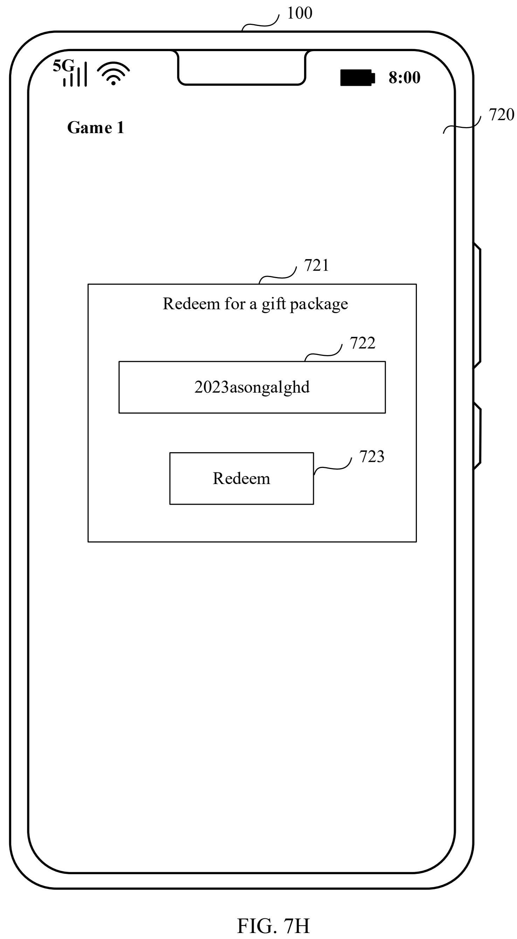

As shown in FIG. 7G, in response to an operation of selecting the paste option 725A, the electronic device 100 may display the user interface 720 shown in FIG. 7H.

As shown in FIG. 7H, the electronic device 100 may paste the redemption code "2023asongalghd" corresponding to the paste option 725A into the input box 722. Similarly, in response to the operation of selecting the paste option 725A shown in FIG. 7G to paste the redemption code "2023asongalghd" corresponding to the paste option 725A into the input box 722, the electronic device 100 may mark the redemption code "2023asongalghd". For example, the electronic device 100 may add, to the historical paste operation information, information that the redemption code "2023asongalghd" has been pasted. In this way, when the electronic device 100 displays the user interface 720 again, the electronic device 100 may filter out the redemption code "2023asongalghd" from the to-be-pasted content provided for the user. By using the foregoing method, interference from a pasted and used redemption code to redemption performed by using a redemption code selected by the user can be reduced, and a case in which the user repeatedly selects a pasted and used redemption code for redemption again can be avoided.

In some embodiments, the copied content shown in FIG. 7B may belong to the content copied in the latest m1 times before the electronic device 100 displays the user interface 720 shown in FIG. 7C. Herein, m1 may be a positive integer. Optionally, the user interface 720 shown in FIG. 7C may be an interface displayed by the electronic device 100 within a preset time period after the copy operation shown in FIG. 7A and FIG. 7B is detected.

It can be learned from the scenario shown in FIG. 7A to FIG. 7H that the electronic device 100 may analyze the paste scenario and the user intent with reference to the copy page information and the paste page information, to extract, from the copied content, the to-be-pasted content that meets the user intent and that matches the paste scenario. The electronic device 100 may further provide a plurality of pieces of information of a same type in the to-be-pasted content respectively as different paste options for the user. In this way, more paste options can be provided for the user, to better meet copying and pasting needs of the user. This facilitates the user in selecting and pasting one or more pieces of information in the copied content into the input box on the paste page. In addition, the electronic device 100 may further filter the to-be-pasted content. In this way, when a part of information in the to-be-pasted content becomes invalid after being pasted, a case in which the user repeatedly pastes the invalid information can be reduced, and interference from other information to the user can be reduced.

### Paste scenario 5: contact adding scenario

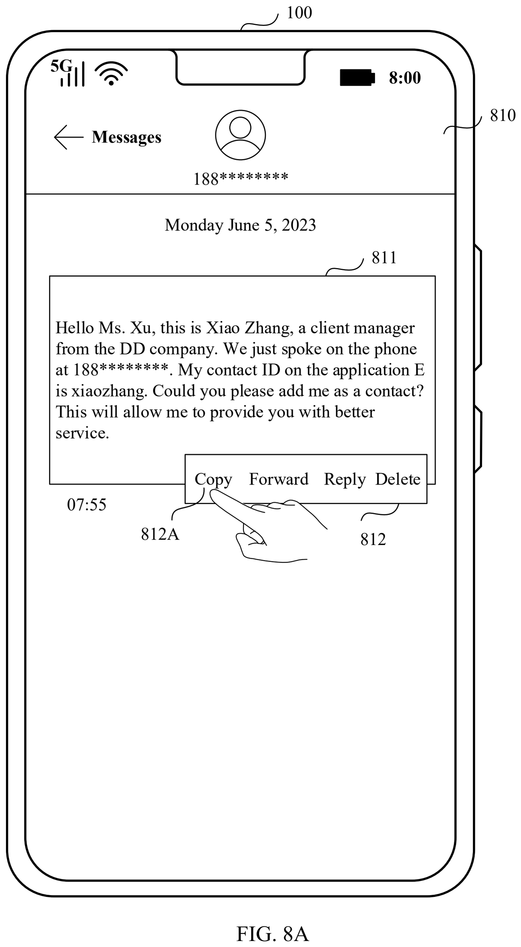

**FIG. 8A to FIG. 8I** **are some diagrams of a contact adding scenario.**

As shown in FIG. 8A, the electronic device 100 may display a user interface 810. The user interface 810 may be an interface of a Messages application. The user interface 810 may include an SMS message 811. For example, the SMS message 811 may include an identity of a user whose name is "Xiao Zhang": a client manager from the DD company, a mobile phone number: 188********, and a contact ID in an application E: xiaozhang. The application E may be an instant messaging application.

In some embodiments, in response to an operation performed on the SMS message 811, for example, a touch and hold operation, the electronic device 100 may display a function option box 812 shown in FIG. 8A. The function option box 812 may include a copy option 812A. When an entire text in the SMS message 811 is selected, in response to an operation such as a tap operation performed on the copy option 812A shown in FIG. 8A, the electronic device 100 may store the entire text in the SMS message 811 to a clipboard. In other words, the entire text in the SMS message 811 may be copied content. The user interface 810 may be a copy page.

It can be learned from the method shown in FIG. 3A that the electronic device 100 may perform page parsing on the user interface 810 to obtain copy page information. The copy page information may include context information of the copied content. For example, the context information of the copied content shown in FIG. 8A may include information displayed before and after the SMS message 811. In some embodiments, the context information of the copied content may alternatively be empty. In other words, no other information is displayed before and after the copied content on the copy page.

Herein, description is provided by using an example in which the user copies the SMS message 811 shown in FIG. 8A and then opens the application E on the electronic device 100.

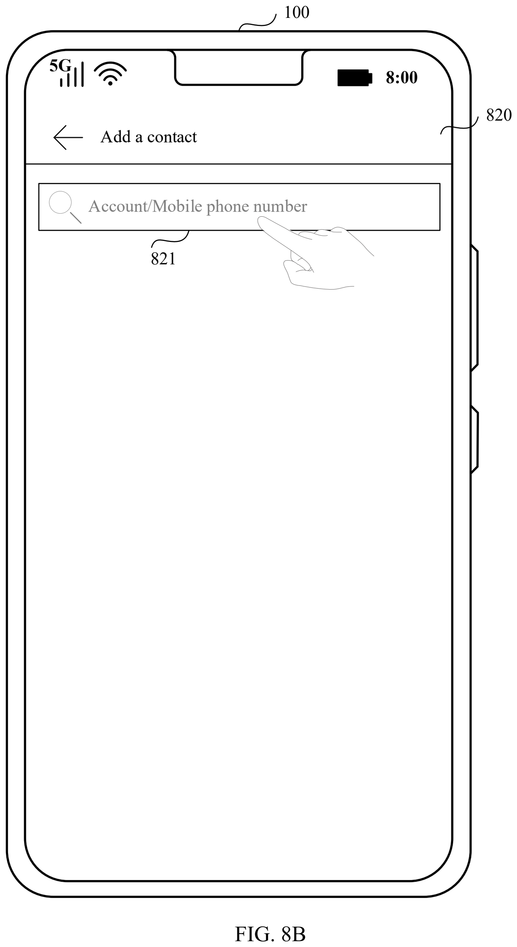

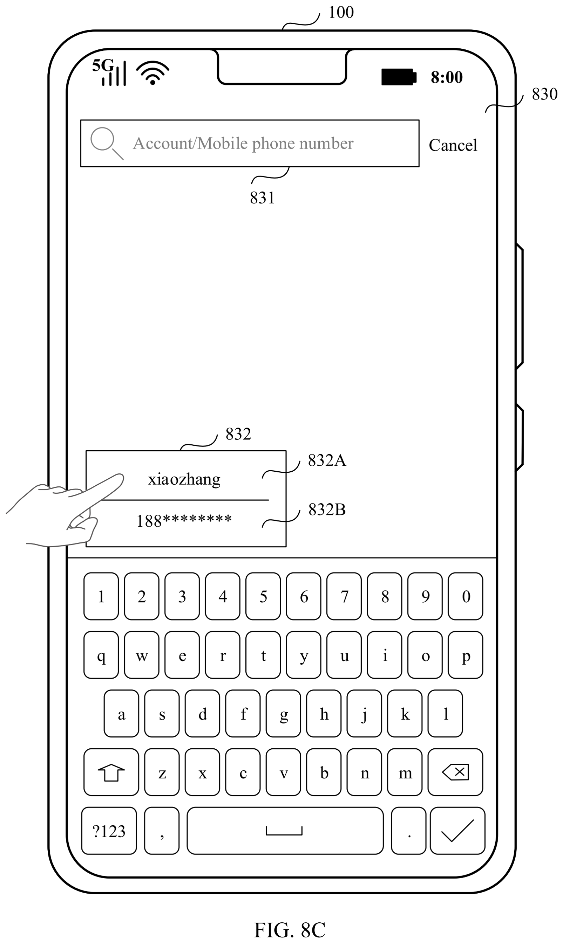

As shown in FIG. 8B, the electronic device 100 may display a user interface 820. The user interface 820 may be a contact adding interface of the application E. The user interface 820 may include an input box 821. The input box 821 may be used to input and search for information such as an account or a mobile phone number. In response to an operation performed on the input box 821 shown in FIG. 8B, for example, a tap operation, the electronic device 100 may display a user interface 830 shown in FIG. 8C.

As shown in FIG. 8C, the user interface 830 may include an input box 831. The input box 831 may be an input box the same as the input box 821 shown in FIG. 8B, and may be used to input and search for information such as an account or a mobile phone number.

It should be noted that, when detecting the operation performed on the input box 821 shown in FIG. 8B, the electronic device 100 may determine the user interface 820 as a paste page, and perform page parsing to obtain paste page information. The paste page information may include a category of an APP (that is, a communication APP) to which the user interface 820 belongs, an input box (that is, the input box 821) tapped on the user interface 820, and a type (for example, an account or a mobile phone number) of to-be-input content in the input box 821. In addition, the user interface 830 shown in FIG. 8C is jumped to and displayed by the electronic device 100 in response to the operation performed on the input box 821 shown in FIG. 8B. The user interface 830 may also be a paste page. The user interface 830 and the user interface 820 belong to the same APP, and the input box 831 and the input box 821 are also the same. Therefore, paste page information obtained through parsing based on the user interface 830 may be the same as paste page information obtained through parsing based on the user interface 820.

Based on the copy page information determined based on the user interface 810 shown in FIG. 8A and the paste page information determined based on the user interface 820 shown in FIG. 8B, the electronic device 100 may identify that a paste scenario is a contact adding scenario, and identify that a user intent is an intent of searching the application E for a to-be-added contact. Based on the paste scenario and the user intent, the electronic device 100 may generate extraction prompt information for extracting a mobile phone number and an account in the application E from given content. Both the mobile phone number and the account in the application E may be used to uniquely identify, in the application E, a user that creates an account in the application E. The electronic device 100 inputs the copied content and the extraction prompt information into a language model, and may extract to-be-pasted content: xiaozhang, and 188******** from the copied content by using the language model.

The electronic device 100 may provide the to-be-pasted content on the paste page. For example, when jumping to the user interface 830 shown in FIG. 8C, the electronic device 100 may display a prompt box 832. The to-be-pasted content may be displayed in the prompt box 832. The prompt box 832 may include a paste option 832A and a paste option 832B. The paste option 832A may be used to input the account "xiaozhang" in the application E into the input box 831. The paste option 832B may be used to input the mobile phone number "188********" into the input box 831. It can be learned that the electronic device 100 may provide the mobile phone number and the account in the application E respectively as different paste options for the user. In other words, the electronic device 100 may provide a plurality of pieces of information in the to-be-pasted content respectively as different paste options for the user. This may help the user select one of the two pieces of information: the mobile phone number and the account in the application E to search for a related contact.

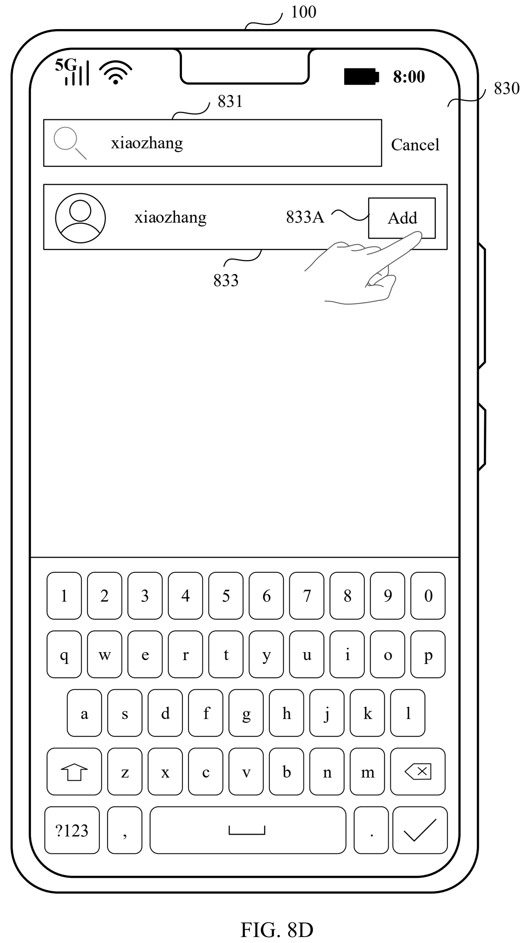

As shown in FIG. 8C, in response to an operation of selecting the paste option 832A, the electronic device 100 may display the user interface 830 shown in FIG. 8D.

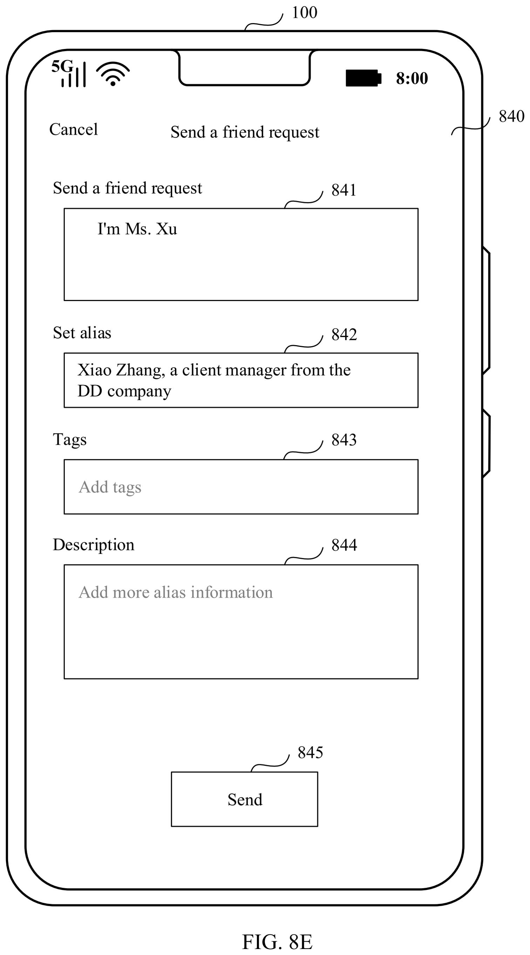

As shown in FIG. 8D, the electronic device 100 may input the content "xiaozhang" in the paste option 832A into the input box 831. After detecting that "xiaozhang" is input into the input box 831, the application E on the electronic device 100 may display a search result 833 shown in FIG. 8D. The search result 833 may be a search result of searching for a contact whose account is "xiaozhang" in the application E. The search result 833 may include an add control 833A. The add control 833A may be used to add the contact whose account is "xiaozhang". In response to an operation performed on the add control 833A shown in FIG. 8D, the electronic device 100 may display a user interface 840 shown in FIG. 8E.

As shown in FIG. 8E, the user interface 840 may be a contact adding request interface of the application E. The user interface 840 may include a request information input box 841, an alias input box 842, a tags input box 843, a description input box 844, and a send control 845. The request information input box 841 may be used to input information sent to a peer end (that is, a to-be-added contact) when a request is input to add a contact. For example, the user may input information such as a name of the user, an identity of the user, and a purpose of adding a contact into the request information input box 841, so that the to-be-added contact knows who the user is, to quickly agree to the request for addition. The alias input box 842 may be used to input alias information of a contact, for ease of learning who the contact is after the contact is added. For example, the user may input information such as a name and an identity of a contact into the alias input box 842. The tags input box 843 may be used to input a tag of a contact, to help classify the contact. The description input box 844 may be used to input more alias information of a contact. The send control 845 may be used to trigger the electronic device 100 to send content in the request information input box 841 to the to-be-added contact. The user interface 840 may include more or fewer input boxes. This is not limited in embodiments of this application.

In some embodiments, when the user interface 840 shown in FIG. 8E is displayed, the electronic device 100 may determine the user interface 840 as a paste page, and perform page parsing to obtain paste page information. The paste page information may include a category of an APP (that is, a communication APP) to which the user interface 840 belongs, and a type of to-be-input content in the input box included in the user interface 840. Because the user interface 840 includes a plurality of input boxes, the type of the to-be-input content in the input box included in the user interface 840 may include: a type of to-be-input content in the request information input box 841 (for example, a name and an identity of a user requesting to add a contact), and a type of to-be-input content in the alias input box 842 (for example, a name and an identity of a user to add a contact).

Based on the copy page information determined based on the user interface 810 shown in FIG. 8A and the paste page information determined based on the user interface 840 shown in FIG. 8E, the electronic device 100 may identify that a paste scenario is a contact adding scenario, and identify that a user intent is an intent of requesting to add a contact. Based on the paste scenario and the user intent, the electronic device 100 may generate extraction prompt information for extracting identity information of the user and identity information of the to-be-added contact from the given content. The electronic device 100 inputs the copied content and the extraction prompt information into a language model, and may extract to-be-pasted content: Ms. Xu, and Xiao Zhang, a client manager from the DD company from the copied content by using the language model. It can be learned that "Ms. Xu" is the identity information of the user, and "Xiao Zhang, a client manager from the DD company" is the identity information of the to-be-added contact.

The electronic device 100 may provide the to-be-pasted content on the paste page (that is, the user interface 840). In a possible implementation, when jumping to the user interface 840 shown in FIG. 8E, the electronic device 100 may directly fill the corresponding input boxes respectively with the to-be-pasted content based on types of to-be-input content in the input boxes included in the user interface 840. For example, the electronic device 100 may fill the request information input box 841 with the identity information "Ms. Xu" of the user, and fill the alias input box 842 with the identity information "Xiao Zhang, a client manager from the DD company" of the to-be-added contact. In this way, the user may not need to manually input information in the contact adding request interface. This can improve efficiency and experience of the user in adding a contact. In another possible implementation, information in the request information input box 841 and the alias input box 842 shown in FIG. 8E may be filled in by the electronic device 100 based on paste options that are provided by the electronic device 100 and that are selected by the user. The electronic device 100 may provide a plurality of pieces of information in the to-be-pasted content respectively as different paste options for the user. For example, the electronic device 100 may display, on the user interface 840, a paste option corresponding to the information "Ms. Xu" and a paste option (not shown in FIG. 8E) corresponding to the information "Xiaozhang, a client manager from the DD company". For a scenario in which the electronic device 100 displays the paste options, refer to the embodiments shown in FIG. 5D, FIG. 6D, FIG. 6F, and FIG. 7D. When an input focus is on the request information input box 841, the electronic device 100 may input "Ms. Xu" into the request information input box 841 in response to an operation of selecting, by the user, the paste option corresponding to the information "Ms. Xu". When an input focus is on the alias input box 842, the electronic device 100 may input "Xiao Zhang, a client manager from the DD company" into the alias input box 842 in response to an operation of selecting, by the user, the paste option corresponding to the information "Xiao Zhang, a client manager from the DD company".

In some embodiments, when a paste page includes a plurality of input boxes, the electronic device 100 may provide a paste option corresponding to to-be-pasted content that matches a type of to-be-input content in an input box which an input focus is on. For example, in FIG. 8E, the user interface 840 includes the request information input box 841 and the alias input box 842. In response to an operation (for example, a tap operation) performed on the request information input box 841, the electronic device 100 may determine that an input focus is on the request information input box 841. The electronic device 100 may select the identity information "Ms. Xu" from the extracted to-be-pasted content, and provide, on the user interface 840, the paste option corresponding to the identity information "Ms. Xu". In response to an operation performed on the paste option corresponding to the identity information "Ms. Xu", the electronic device 100 may fill the request information input box 841 with the identity information "Ms. Xu" of the user. In response to an operation (for example, a tap operation) performed on the alias input box 842, the electronic device 100 may determine that an input focus is on the alias input box 842. The electronic device 100 may select, from the extracted to-be-pasted content, the identity information "Xiao Zhang, a client manager from the DD company" of the to-be-added contact, and provide, on the user interface 840, a paste option corresponding to the identity information "Xiao Zhang, a client manager from the DD company" of the to-be-added contact. In response to an operation performed on the paste option corresponding to the identity information "Xiao Zhang, a client manager from the DD company" of the to-be-added contact, the electronic device 100 may fill the alias input box 842 with the identity information "Xiao Zhang, a client manager from the DD company" of the to-be-added contact.

Optionally, when jumping to the contact adding request interface (for example, the user interface 840 shown in FIG. 8E), the electronic device 100 may determine whether the to-be-added contact is a contact in the copied content (the SMS message 811 shown in FIG. 8A). In other words, the electronic device 100 may determine whether a contact searched for on the electronic device 100 in the user interface 830 shown in FIG. 8D is the contact in the copied content. If the electronic device 100 detects that the information input into the input box 831 on the user interface 830 is input based on the paste option (for example, the paste option 832A or the paste option 832B shown in FIG. 8C) provided by the electronic device 100, the electronic device 100 may determine that the to-be-added contact is the contact in the copied content. In this case, after jumping to the user interface 840, the electronic device 100 may provide the to-be-pasted content shown in FIG. 8E on the user interface 840. It may be understood that, in addition to the account and the mobile phone number used for searching for the contact, the copied content shown in FIG. 8A further includes the identity information of the user and the identity information of the to-be-added contact. If the user searches for the contact by using the account or the mobile phone number in the copied content, the user usually fills in the identity information of the user and the identity information of the to-be-added contact in the copied content on the contact adding request interface. According to the foregoing method, the related to-be-pasted content can be more accurately provided for the user on the contact adding request interface, thereby improving use experience of the user in adding a to-be-added contact after copying information about the contact.

A method in which the electronic device 100 provides the to-be-pasted content on the paste pages shown in FIG. 8C and FIG. 8E is not limited in embodiments of this application. In some embodiments, when the user interface 830 shown in FIG. 8C is the paste page, the electronic device 100 extracts the to-be-pasted content from the copied content shown in FIG. 8A. In this case, in addition to the mobile phone number of the to-be-added contact and the account in the application E, the electronic device 100 may further extract the identity information of the user and the identity information of the to-be-added contact. Then, the electronic device 100 may paste the to-be-pasted content on the paste pages shown in FIG. 8C and FIG. 8E. Optionally, when jumping to the paste page shown in FIG. 8E, the electronic device 100 may filter the to-be-pasted content based on the user intent determined based on the paste page shown in FIG. 8E. The electronic device 100 may filter out the mobile phone number of the to-be-added contact and the account in the application E in the to-be-pasted content, to provide the identity information of the user and the identity information of the to-be-added contact on the user interface shown in FIG. 8E.

Herein, a pasting process in a contact adding scenario is described by using an example in which the user copies the SMS message 811 shown in FIG. 8A and then opens the contacts application on the electronic device 100.

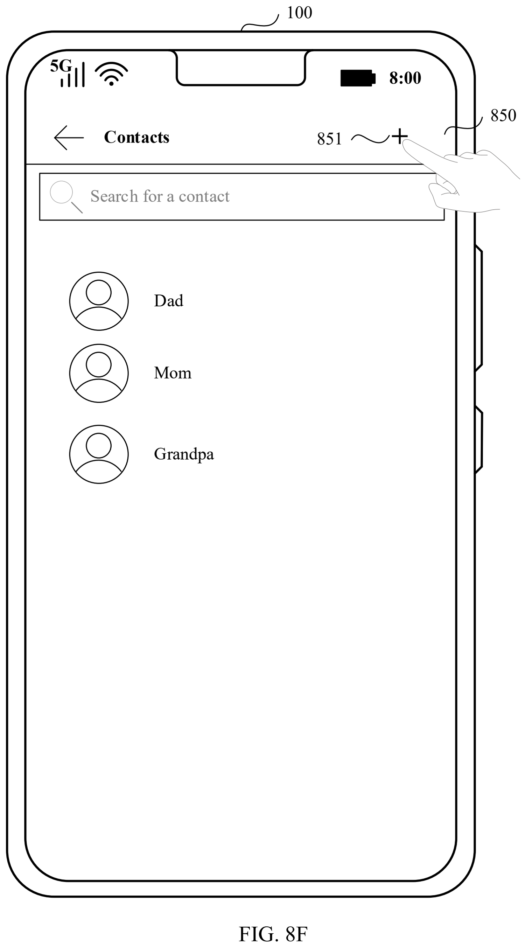

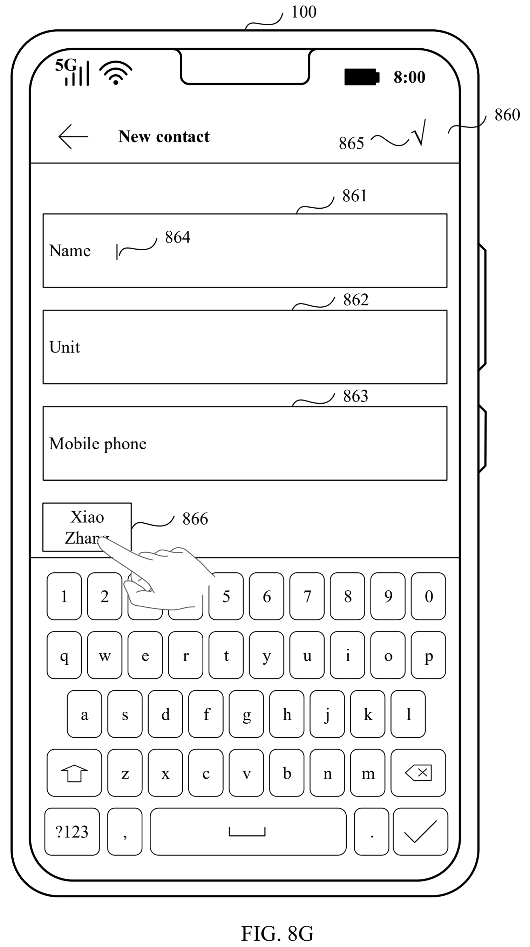

As shown in FIG. 8F, the electronic device 100 may display a user interface 850. The user interface 850 may be a user interface of a contacts application. The contacts application may be an APP for storing contact information. The user interface 850 may include an add control 851. In response to an operation performed on the add control 851 shown in FIG. 8F, for example, a tap operation, the electronic device 100 may display a user interface 860 shown in FIG. 8G.

As shown in FIG. 8G, the user interface 860 may include a name input box 861, a unit input box 862, a mobile phone number input box 863, a cursor 864, and a completion control 865. The name input box 861 may be used to input a name of a contact. The unit input box 862 may be used to input a work unit of a contact. The mobile phone number input box 863 may be used to input a mobile phone number of a contact. The cursor 864 may be used to indicate a position of an input focus. For example, if the cursor 864 is in the name input box 861 shown in FIG. 8G, it may indicate that the input focus is currently in the name input box 861. The electronic device 100 may input information input by the user into the input box which the input focus is on. The completion control 865 may be used to trigger the electronic device 100 to save contact information input on the user interface 860.

When jumping to the user interface 860, the electronic device 100 may determine the user interface 860 as a paste page, and perform page parsing to obtain paste page information. The paste page information may include a category of an APP type (that is, a communication APP) to which the user interface 860 belongs, a type (for example, a person name) of to-be-input content in the name input box 861, a type (for example, a company name) of to-be-input content in the unit input box 862, and a type (for example, a mobile phone number) of to-be-input content in the mobile phone number input box 863.

Based on the copy page information determined based on the user interface 810 shown in FIG. 8A and the paste page information determined based on the user interface 860 shown in FIG. 8G, the electronic device 100 may identify that a paste scenario is a contact adding scenario, and identify that a user intent is an intent of saving contact information. Based on the paste scenario and the user intent, the electronic device 100 may generate extraction prompt information for extracting the name, the unit, and the mobile phone number of the to-be-added contact from given content. The electronic device 100 inputs the copied content and the extraction prompt information into a language model, and may extract to-be-pasted content: Xiao Zhang, the DD company, and 188******** from the copied content by using the language model.

The electronic device 100 may provide the to-be-pasted content on the paste page.

In a possible implementation, the electronic device 100 may provide a part of information in the to-be-pasted content as a paste option for the user. If an operation of selecting the paste option by the user is detected, the electronic device 100 may fill the plurality of input boxes on the user interface shown in FIG. 8G respectively with a plurality of pieces of information in the to-be-pasted content.

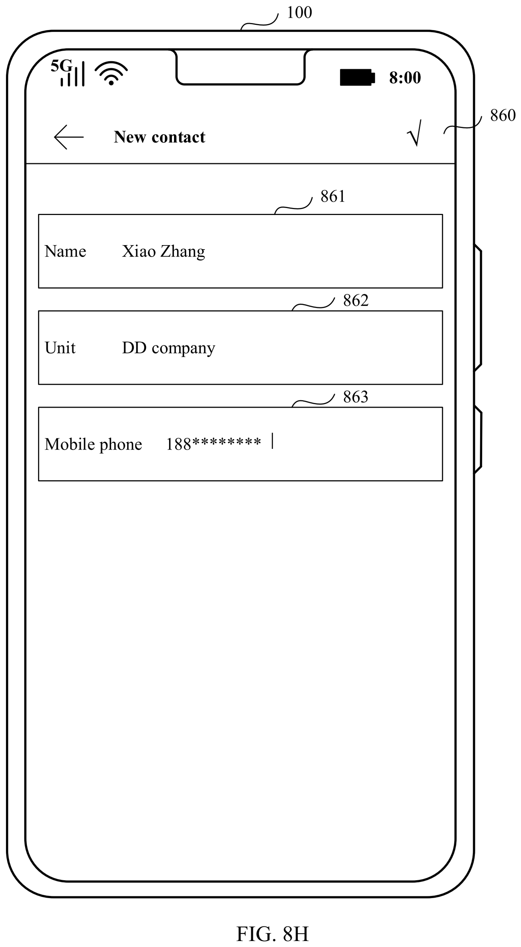

For example, as shown in FIG. 8G, when jumping to the user interface 860, the electronic device 100 may provide a paste option 866 on the user interface 860. Content in the paste option 866 may include the contact name "Xiao Zhang" in the to-be-pasted content. The paste option 866 may be used to prompt the user to fill the plurality of input boxes on the user interface 860 with the to-be-pasted content. In response to an operation of selecting the paste option 866 shown in FIG. 8G, the electronic device 100 may display the user interface 860 shown in FIG. 8H. It can be learned from FIG. 8H that the electronic device 100 fills a corresponding input box on the user interface 860 with each piece of information in the to-be-pasted content. The electronic device 100 fills the name input box 861 with the contact name "Xiao Zhang" in the to-be-pasted content, fills the unit input box 862 with the contact work unit "the DD company" in the to-be-pasted content, and fills the mobile phone number input box 863 with the contact mobile phone number "188********" in the to-be-pasted content.

Optionally, the electronic device 100 may provide a plurality of pieces of information in the to-be-pasted content respectively as different paste options for the user. The user may move the cursor 864 to an input box in which information needs to be input, to select a corresponding paste option and input corresponding contact information into the input box.

When a paste page includes a plurality of input boxes, the electronic device 100 may provide a paste option corresponding to to-be-pasted content that matches a type of to-be-input content in an input box which an input focus is on. For example, in FIG. 8G, the user interface 860 includes the name input box 861, the unit input box 862, and the mobile phone number input box 863. In response to a tap operation performed on the name input box 861, the electronic device 100 may determine that an input focus is on the name input box 861. The electronic device 100 may determine that the contact name "Xiao Zhang" in the to-be-pasted content matches the name input box 861 (that is, matches the type of the to-be-input content in the name input box 861). The electronic device 100 may provide, on the user interface 860, the paste option corresponding to the contact name "Xiao Zhang" (with reference to the paste option 866 shown in FIG. 8G). In response to an operation performed on the paste option corresponding to the contact name "Xiao Zhang", the electronic device 100 may fill the name input box 861 with the contact name "Xiao Zhang". Further, in response to a tap operation performed on the unit input box 862, the electronic device 100 may determine that an input focus is on the unit input box 862. Alternatively, after corresponding content is input into the name input box 861, the electronic device 100 may automatically move the input focus from the name input box 861 to the unit input box 862. A method in which the electronic device 100 determines an input box which an input focus is on is not limited in embodiments of this application. The electronic device 100 may determine that the contact work unit "the DD company" in the to-be-pasted content matches the unit input box 862. The electronic device 100 may provide, on the user interface 860, a paste option corresponding to the contact work unit "the DD company". In response to an operation performed on the paste option corresponding to the contact work unit "the DD company", the electronic device 100 may fill the unit input box 862 with the contact work unit "the DD company". Similarly, when the input focus moves to the mobile phone number input box 863, the electronic device 100 may provide a paste option corresponding to the contact mobile phone number "188********" in the to-be-pasted content, so that the user pastes the contact mobile phone number "188********" in the mobile phone number input box 863. It can be learned that the user may paste corresponding content in the plurality of input boxes on the paste page one by one based on the paste options that correspond to the to-be-pasted content matching the input boxes and that are provided by the electronic device 100.

In another possible implementation, the electronic device 100 may provide the entire to-be-pasted content for the user, so that the user determines whether the to-be-pasted content is content that the user needs to paste. Then, the user may fill the plurality of input boxes on the user interface shown in FIG. 8G respectively with a plurality of pieces of information in the to-be-pasted content through one tap.

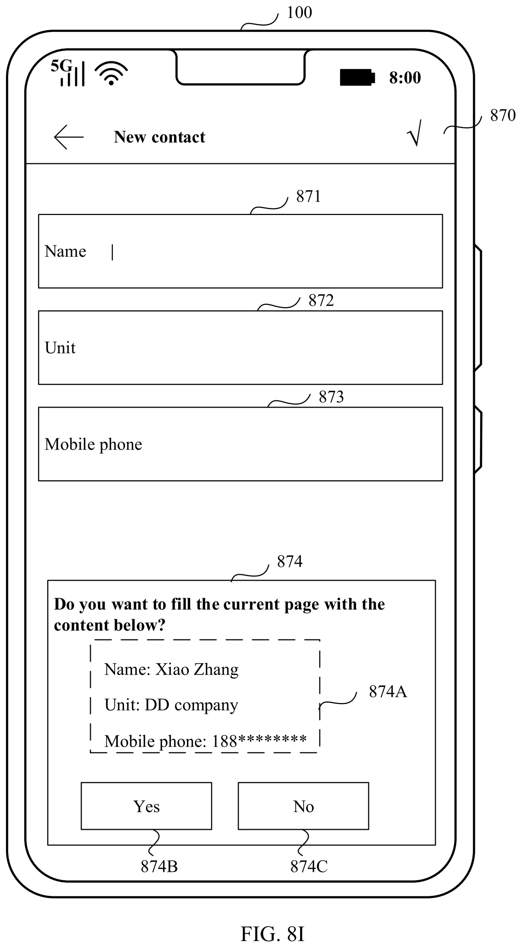

For example, as shown in FIG. 8I, in response to an operation performed on the add control 851 shown in FIG. 8F, the electronic device 100 may display a user interface 870 shown in FIG. 8I. The user interface 870 may include a name input box 871, a company input box 872, a mobile phone number input box 873, and a prompt box 874. For the name input box 871, the company input box 872, and the mobile phone number input box 873, respectively refer to the name input box 861, the unit input box 862, and the mobile phone number input box 863 shown in FIG. 8G. The prompt box 874 may include a to-be-pasted content display area 874A, a confirmation control 874B, and a close control 874C. The to-be-pasted content (for example, a contact name, a work unit, and a mobile phone number) extracted by the electronic device 100 may be displayed in the to-be-pasted content display area 874A. The confirmation control 874B may be used to input pieces of information in the to-be-pasted content respectively into the name input box 871, the company input box 872, and the mobile phone number input box 873. The close control 874C may be used to trigger the electronic device 100 to close the prompt box 874. In response to an operation performed on the confirmation control 874B, for example, a tap operation, the electronic device 100 may fill the input boxes on the user interface 870 (with reference to the user interface 860 shown in FIG. 8H) with the to-be-pasted content.

It can be learned that efficiency of creating and saving contact information by the user can be improved in the foregoing embodiment. After copying a text including the contact information, the user can quickly input, respectively into corresponding input boxes, a plurality of pieces of information that need to be pasted in the copied content.

In some embodiments, the copied content shown in FIG. 8A may belong to content copied in the latest m1 times before the electronic device 100 displays the user interface 820 shown in FIG. 8B, may belong to content copied in the latest m1 times before the electronic device 100 displays the user interface 840 shown in FIG. 8E, or may belong to content copied in the latest m1 times before the electronic device 100 displays the user interface 860 shown in FIG. 8G. Herein, m1 may be a positive integer. Optionally, the user interface 820 shown in FIG. 8B, the user interface 840 shown in FIG. 8E, and the user interface 860 shown in FIG. 8G all may be interfaces displayed by the electronic device 100 within a preset time period after the copy operation shown in FIG. 8A is detected.

It can be learned from the scenario shown in FIG. 8A to FIG. 8I that the user can directly copy the entire text in the SMS message 811 shown in FIG. 8A, and does not need to adjust the selected and copied text by moving the cursor. After copying the entire content in the SMS message 811, the user can quickly input related contact information into the plurality of input boxes on the paste page based on the to-be-pasted content provided by the electronic device 100. In this way, when the SMS message 811 includes a plurality of pieces of information that the user needs to copy and paste, the user needs to perform only one copy operation, to paste the plurality of pieces of information that need to be pasted in the copied content respectively to the plurality of input boxes on the paste page. The user may not need to repeatedly switch between the Messages application and an application (such as the application E or the contacts application) to which information needs to be pasted to perform a plurality of copy and paste operations. The foregoing method can effectively improve copying and pasting efficiency of the user, and improve copying and pasting experience of the user.

### Paste scenario 6: information entry scenario

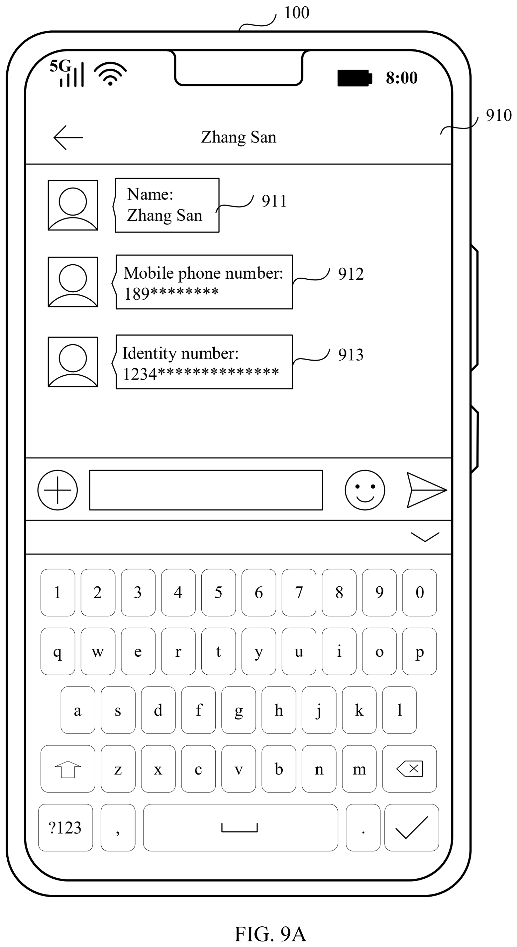

**FIG. 9A to FIG. 9H** **are some diagrams of an example of an information entry scenario.**

As shown in FIG. 9A, the electronic device 100 may display a user interface 910. The user interface 910 may be a chat interface with a user "Zhang San" in an instant messaging application. The user interface 910 may include a chat record 911 to a chat record 913. It can be learned that the chat record 911 to the chat record 913 may be personally identifiable information sent by the user "Zhang San". The chat record 911 includes a name of the user "Zhang San". The chat record 912 includes a mobile phone number of the user "Zhang San". The chat record 913 includes an identity number of the user "Zhang San".

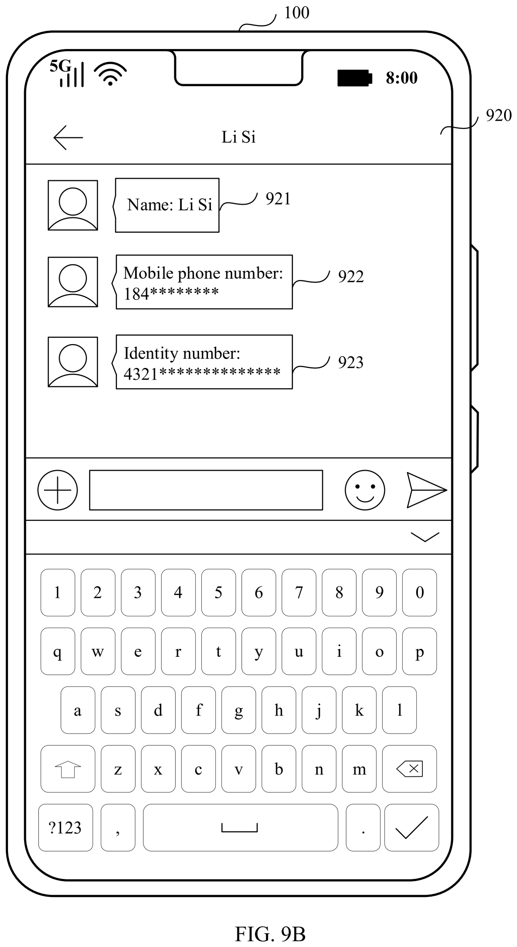

As shown in FIG. 9B, the electronic device 100 may further display a user interface 920. The user interface 920 may be a chat interface with a user "Li Si" in an instant messaging application. The user interface 920 may include a chat record 921 to a chat record 923. It can be learned that the chat record 921 to the chat record 923 may be personally identifiable information sent by the user "Li Si". The chat record 921 includes a name of the user "Li Si". The chat record 922 includes a mobile phone number of the user "Li Si". The chat record 923 includes an identity number of the user "Li Si".

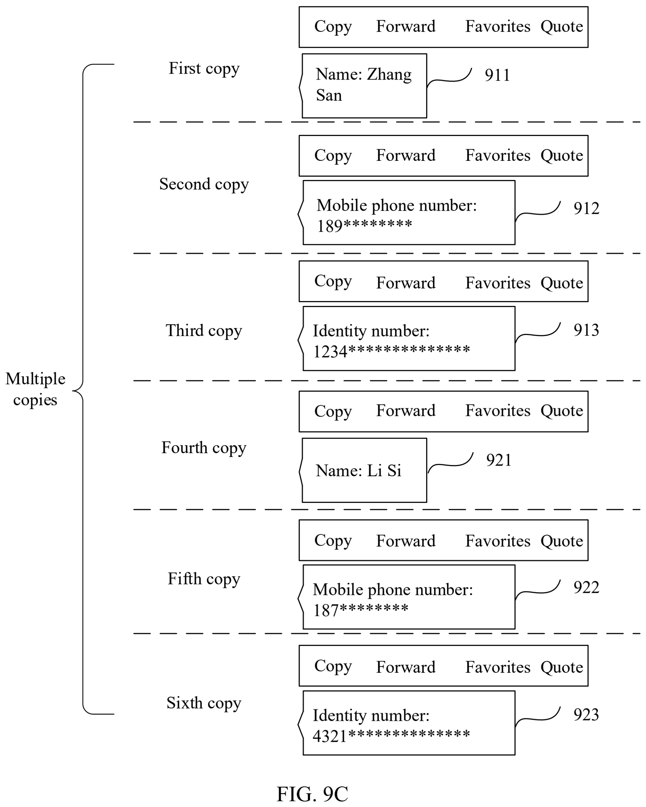

As shown in FIG. 9C, the user may copy the personally identifiable information of the user "Zhang San" and the personally identifiable information of the user "Li Si" for a plurality of times. For example, when the electronic device 100 displays the user interface 910 shown in FIG. 9A, the electronic device 100 may store an entire text of the chat record 911 to a clipboard in response to an operation of copying the chat record 911 by the user. Similarly, the electronic device 100 may store all texts of the chat record 912 and the chat record 913 to the clipboard in response to an operation of separately copying the chat record 912 and the chat record 913 by the user. When the electronic device 100 displays the user interface 920 shown in FIG. 9B, the electronic device 100 may store all texts of the chat record 921 to the chat record 921 to the clipboard in response to an operation of separately copying the chat record 921 to the chat record 921 by the user.

The chat record 911 may be copied content in first copy. The chat record 912 may be copied content in second copy. The chat record 913 may be copied content in third copy. The chat record 921 may be copied content in fourth copy. The chat record 922 may be copied content in fifth copy. The chat record 923 may be copied content in sixth copy. Both the user interface 910 and the user interface 920 are copy pages.

It can be learned from the method shown in FIG. 3A that the electronic device 100 may perform page parsing on the user interface 910 to obtain copy page information of the user interface 910. The electronic device 100 may further perform page parsing on the user interface 920 to obtain copy page information of the user interface 920.

Herein, description is provided by using an example in which the user opens an information entry application on the electronic device 100 after copying the chat record 911 to the chat record 913 shown in FIG. 9A and the chat record 921 to the chat record 923 shown in FIG. 9B.

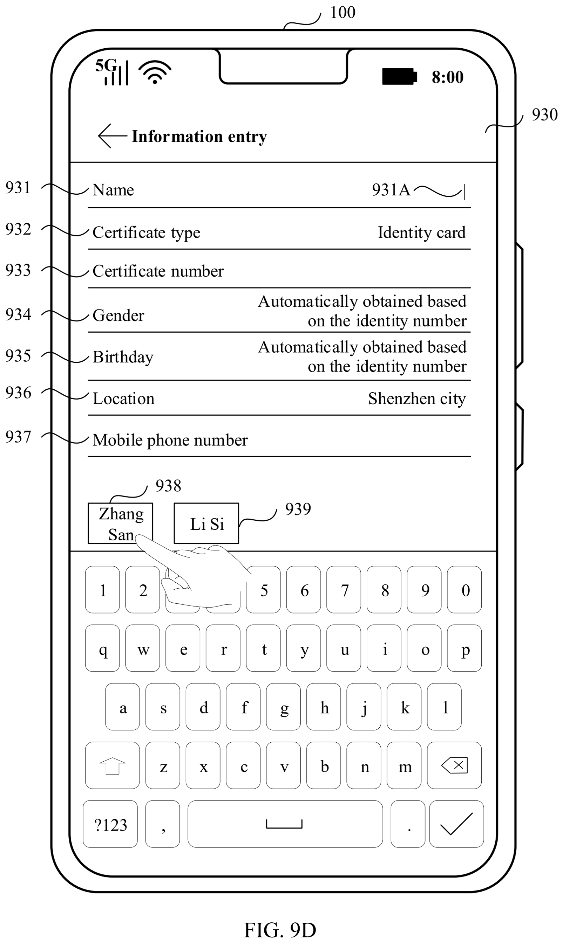

As shown in FIG. 9D, the electronic device 100 may display a user interface 930. The user interface 930 may be a user interface that is of the information entry application and that is used for information entry. The user interface 930 may include a name input box 931, a certificate type input box 932, a certificate number input box 933, a gender input box 934, a birthday input box 935, a location input box 936, a mobile phone number input box 937, and a cursor 931A. The name input box 931 may be used to input a name of a user. The certificate type input box 932 may be used to input a certificate type (for example, an identity card) of the user. The certificate number input box 933 may be used to input the certificate number of the user. The gender input box 934 may be used to input a gender of the user. The birthday input box 935 may be used to input a birthday of the user. The location input box 936 may be used to input a region in which the user is located. The mobile phone number input box 937 may be used to input a mobile phone number of the user. The cursor 931A may be used to indicate an input box which an input focus is on.

The electronic device 100 may perform page parsing by using the user interface 930 as a paste page, to obtain paste page information. The paste page information may include a category of an APP (that is, an information entry APP) to which the user interface 930 belongs, and a type of to-be-input content in the input box included in the user interface 930.

Based on the copy page information determined based on the user interface 910 shown in FIG. 9A, the copy page information determined based on the user interface 920 shown in FIG. 9B, and the paste page information determined based on the user interface 930 shown in FIG. 9D, the electronic device 100 may identify that a paste scenario is an information entry scenario, and identify that a user intent is an intent of entering user information. Based on the paste scenario and the user intent, the electronic device 100 may generate extraction prompt information for extracting user information from given content. The electronic device 100 inputs the copied content (that is, the chat record 911 to the chat record 913 shown in FIG. 9A and the chat record 921 to the chat record 923 shown in FIG. 9B) and the extraction prompt information into a language model, and may extract to-be-pasted content from the copied content by using the language model. The to-be-pasted content may include the personally identifiable information of the user "Zhang San" and the personally identifiable information of the user "Li Si".

The electronic device 100 may provide the to-be-pasted content on the paste page.

In a possible implementation, the electronic device 100 may provide the user with a paste option used to indicate information about the user "Zhang San" and a paste option used to indicate information about the user "Li Si". In this way, the user can input a plurality of pieces of information of one user in the to-be-pasted content into the plurality of input boxes on the user interface 930 by using the paste options.

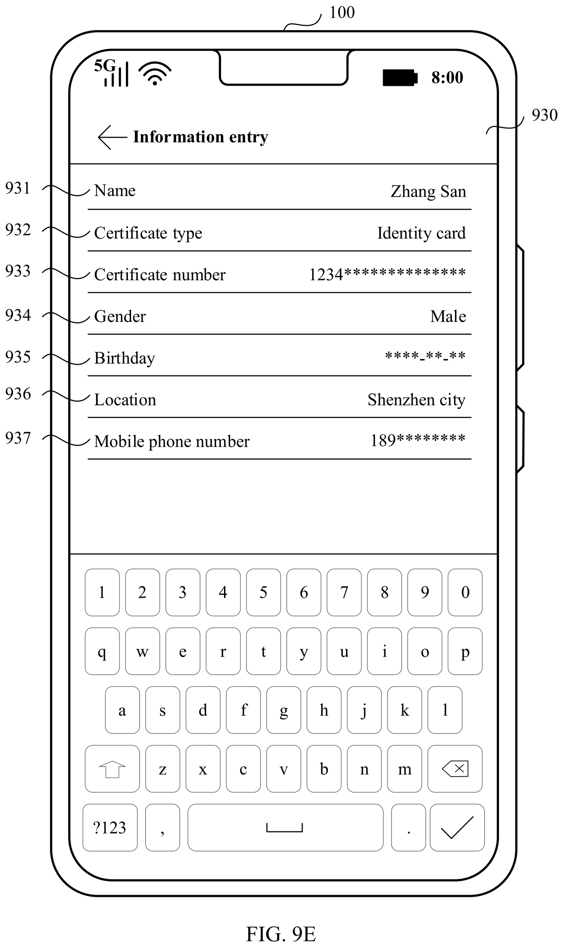

For example, as shown in FIG. 9D, the electronic device 100 may display a paste option 938 and a paste option 939 on the user interface 930. The paste option 938 may be used to indicate the information about the user "Zhang San". The paste option 939 may be used to indicate the information about the user "Li Si". In response to an operation performed on the paste option 938 shown in FIG. 9D, for example, a tap operation, the electronic device 100 may display a user interface 930 shown in FIG. 9E. It can be learned from FIG. 9E that the electronic device 100 fills a corresponding input box on the user interface 930 with the information (such as a name, an identity number, and a mobile phone number) about the user "Zhang San" in the to-be-pasted content.

In another possible implementation, the electronic device 100 may further provide a plurality of pieces of information in the to-be-pasted content respectively as different paste options for the user. The user may move the cursor 931A to an input box in which information needs to be input, to select a corresponding paste option and input corresponding contact information into the input box. The electronic device 100 may provide, based on a type of to-be-input content in the input box in which the cursor 931A is located, a paste option corresponding to information that matches the type in the to-be-pasted content. Matching the type of the to-be-input content in the input box may be referred to as matching the input box.

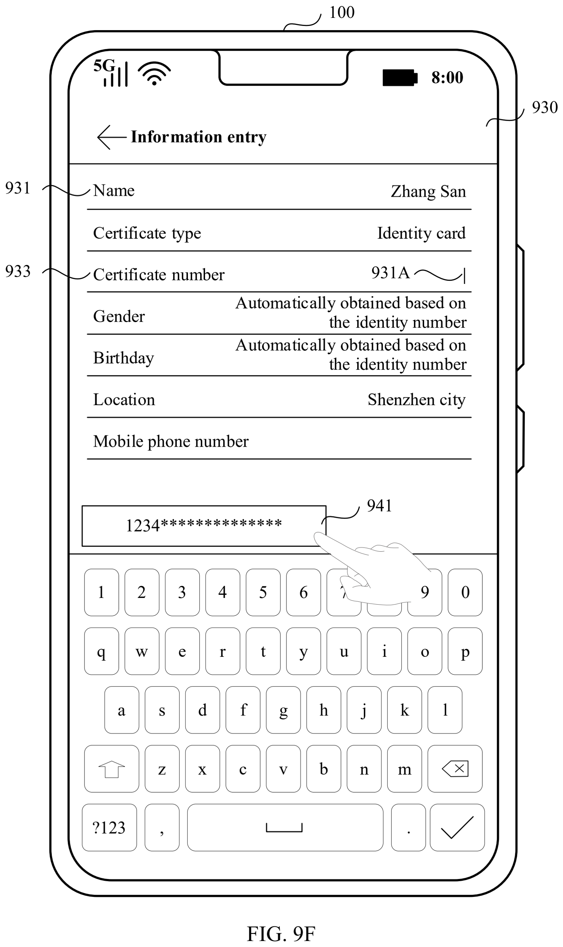

For example, as shown in FIG. 9D, when the cursor 931A is located in the name input box 931, the electronic device 100 may screen for, in the to-be-pasted content, information (that is, a name of a user) that matches the name input box 931, to provide a paste option 938 and a paste option 939. The paste option 938 may be a paste option corresponding to the name of the user "Zhang San". The paste option 939 may be a paste option corresponding to the name of the user "Li Si". In response to an operation performed on the paste option 938 shown in FIG. 9D, the electronic device 100 may display the user interface 930 shown in FIG. 9F. It can be learned from FIG. 9F that the electronic device 100 inputs the name of the user "Zhang San" into the name input box 931 based on the paste option 938. In addition, the electronic device 100 may move the cursor 931A from a position shown in FIG. 9D to the certificate number input box 933 shown in FIG. 9F. The electronic device 100 may screen for, in the to-be-pasted content, information (that is, the identity number of the user) that matches the certificate number input box 933, to provide a paste option 941. The paste option 941 may be a paste option corresponding to the identity number of the user "Zhang San". It may be understood that, because the electronic device 100 inputs the name of the user "Zhang San" into the name input box 931, information input by the electronic device 100 into other input boxes on the user interface 930 should all be information about the user "Zhang San". In this case, when the electronic device screens for, in the to-be-pasted content, information that matches the certificate number input box 933, the electronic device may screen for only the identity number of the user "Zhang San".

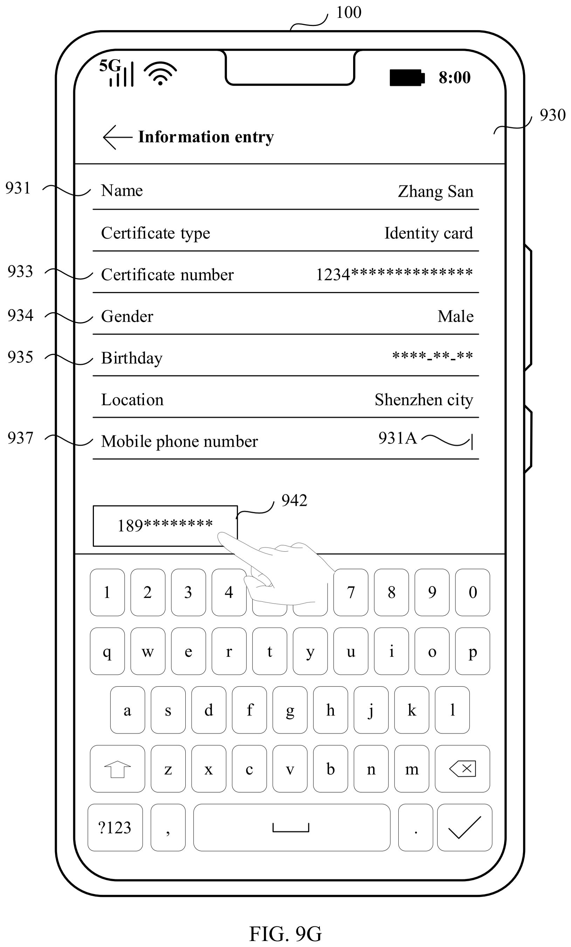

As shown in FIG. 9F, in response to an operation performed on the paste option 941, the electronic device 100 may display the user interface 930 shown in FIG. 9G. It can be learned from FIG. 9G that the electronic device 100 may input the identity number of the user "Zhang San" into the certificate number input box 933 based on a position of the cursor 931A. Content in both the gender input box 934 and the birthday input box 935 may be determined based on the identity number input into the certificate number input box 933. Therefore, when the identity number of the user "Zhang San" is input into the certificate number input box 933, the electronic device 100 may input a gender (for example, "male") of the user "Zhang San" into the gender input box 934, and input a birthday of the user "Zhang San" into the birthday input box 935. In addition, the electronic device 100 may move the cursor 931A from a position shown in FIG. 9F to the mobile phone number input box 937 shown in FIG. 9G. The electronic device 100 may screen for, in the to-be-pasted content, information (that is, the mobile phone number of the user) that matches the mobile phone number input box 937, to provide a paste option 942. The paste option 942 may be a paste option corresponding to the mobile phone number of the user "Zhang San". In response to the operation on the paste option 942 shown in FIG. 9G, the electronic device 100 may input a mobile phone number of the user "Zhang San" into the mobile phone number input box 937.

Optionally, the electronic device 100 may further provide the entire to-be-pasted content for the user, so that the user determines whether the to-be-pasted content is content that the user needs to paste. Then, the user may fill the plurality of input boxes on the user interface 930 shown in FIG. 9D respectively with a plurality of pieces of information in the to-be-pasted content through one tap. For the method, refer to the description of the embodiment in FIG. 8I.

In some embodiments, when the user enters the information about the user "Zhang San" in the information entry application based on the scenario shown in FIG. 9D to FIG. 9H, when the electronic device 100 opens again a user interface that is of the information entry application and that is used for information entry, the electronic device 100 may filter the prompted to-be-pasted content. The electronic device 100 may filter out pasted information in the to-be-pasted content, to provide, on a user interface used for information entry, a paste option corresponding to unpasted information (that is, information that has not been entered), so that the user continues to enter user information that has not been entered. For the foregoing filtering method, refer to the description of the method shown in FIG. 3E.

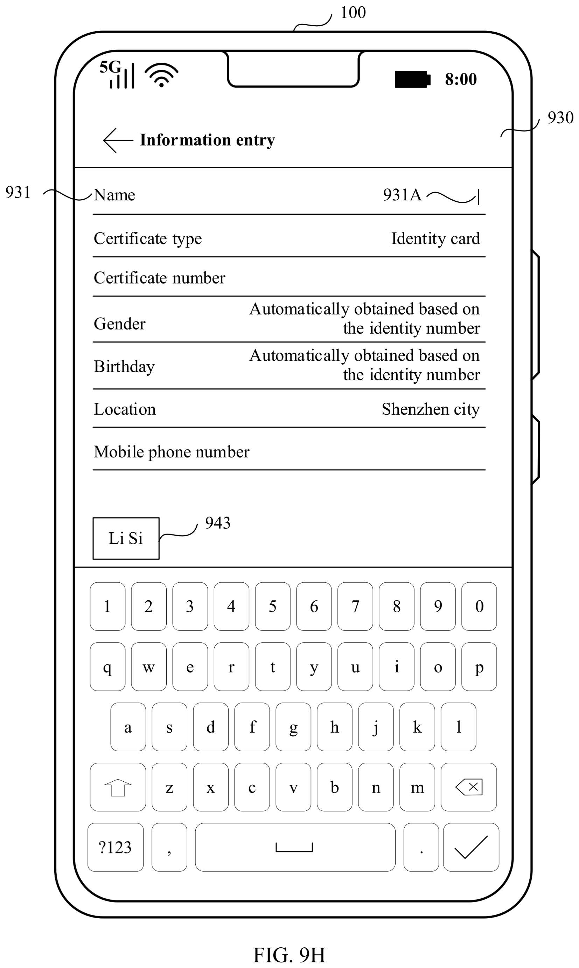

For example, as shown in FIG. 9H, the electronic device 100 displays the user interface 930 again. The electronic device 100 may provide a paste option 943 based on filtered to-be-pasted content. The paste option 943 may be a paste option corresponding to the information about the user "Li Si". The electronic device 100 may input the information about the user "Li Si" into an input box on the user interface 930 in response to an operation performed on the paste option 943.

It can be learned from the scenario shown in FIG. 9A to FIG. 9H that the electronic device 100 may extract the to-be-pasted content by using content copied in a plurality of times in the clipboard. In this way, when one user interface includes a plurality of pieces of information that need to be copied, the user may perform a plurality of copy operations and then open a paste page on which pasting needs to be performed, to quickly paste, into one or more input boxes on the paste page, content copied in the plurality of times. The user may not need to repeatedly switch between the copy page (for example, a chat page of an instant messaging application) and the paste page (for example, a page of an information entry application). The foregoing method can effectively improve copying and pasting efficiency of the user, and improve copying and pasting experience of the user.

It may be understood that the pasting method provided in embodiments of this application may be further applied to another scenario in addition to the paste scenario 1 to the paste scenario 6. This is not limited in embodiments of this application.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A clipboard content pasting method, wherein the method comprises:
receiving, by an electronic device, a first operation for first content on a first page, and storing the first content in a clipboard;
receiving, by the electronic device, a second operation of accessing a second page, and displaying the second page;
providing, by the electronic device, a first paste option on the second page, wherein the first paste option is used to paste second content, the second content is obtained by processing the first content, and the second content is related to the second page;
receiving, by the electronic device, a third operation of accessing a third page, and displaying the third page; and
providing, by the electronic device, a second paste option on the third page, wherein the second paste option is used to paste third content, the third content is obtained by processing the first content, and the third content is related to the third page.

2. The method according to claim 1, wherein before providing, by the electronic device, the first paste option on the second page, the method further comprises:
extracting, by the electronic device, fourth content from the first content based on the first page and the second page, wherein
the second content is the fourth content, or is content obtained by processing the fourth content.

3. The method according to claim 2, wherein the method further comprises:
determining, by the electronic device based on a public knowledge base, that one or more errors exist in the fourth content, and performing error correction processing on the fourth content, wherein the public knowledge base comprises public knowledge of one or more fields.

4. The method according to claim 3, wherein the method further comprises:
supplementing, by the electronic device, fifth content with sixth content based on a user personal knowledge base and/or the public knowledge base, to obtain the second content, wherein the fifth content is content obtained by performing error correction processing on the fourth content, and the user personal knowledge base comprises one or more of the following user information: an age group of a user, a family address and a company address of the user, a user preference, and a user habit.

5. The method according to claim 2, wherein the method further comprises:
supplementing, by the electronic device, the fourth content with seventh content based on a user personal knowledge base and/or a public knowledge base, to obtain the second content, wherein the user personal knowledge base comprises one or more of the following user information: an age group of a user, a family address and a company address of the user, a user preference, and a user habit, and the public knowledge base comprises public knowledge of one or more fields.

6. The method according to any one of claims 1 to 5, wherein the method further comprises:
determining, by the electronic device based on the user personal knowledge base, that a preference degree of the user for eighth content is higher than a preference degree for the second content, wherein the user personal knowledge base comprises one or more of the following user information: the age group of the user, the family address and the company address of the user, the user preference, and the user habit, the eighth content is obtained by processing the first content, and the eighth content is related to the second page; and
providing, by the electronic device, the first paste option on the second page specifically comprises:
providing, by the electronic device, the first paste option and a third paste option on the second page, wherein the third paste option is used to paste the eighth content, and a display position of the third paste option is better than a display position of the first paste option.

7. The method according to any one of claims 1 to 6, wherein providing, by the electronic device, the first paste option on the second page specifically comprises:
providing, by the electronic device, the first paste option and a fourth paste option on the second page, wherein the fourth paste option is used to paste ninth content, the ninth content is obtained by processing the first content, and the ninth content is related to the second page; and
after providing, by the electronic device, the first paste option on the second page, the method further comprises:
receiving, by the electronic device, an operation for the first paste option, and pasting the second content in an input box on the second page;
after exiting the second page, receiving, again by the electronic device, an operation of accessing the second page, and displaying the second page; and
providing, by the electronic device, the fourth paste option on the second page, wherein a paste option on the second page does not comprise the first paste option.

8. The method according to any one of claims 1 to 7, wherein the method further comprises:
providing, by the electronic device, the first paste option on the second page specifically comprises:
providing, by the electronic device, the first paste option and a fifth paste option on the second page, wherein the fifth paste option is used to paste tenth content, the tenth content is obtained by processing the first content, and the tenth content is related to the second page; and
after providing, by the electronic device, the first paste option on the second page, the method further comprises:
receiving, by the electronic device, the operation for the first paste option, pasting the second content in the input box on the second page, and jumping to a fourth page; and
providing, by the electronic device, the fifth paste option on the fourth page, wherein a paste option on the fourth page does not comprise the first paste option.

9. The method according to any one of claims 2 to 8, wherein extracting, by the electronic device, the fourth content from the first content based on the first page and the second page specifically comprises:
determining, by the electronic device, first page information based on the first page, and determining second page information based on the second page;
identifying, by the electronic device, a first paste scenario and a first user intent based on the first page information and the second page information;
determining, by the electronic device, first extraction prompt information based on the first paste scenario and the first user intent; and
extracting, by the electronic device, the fourth content from the first content by using a language model based on the first extraction prompt information.

10. The method according to claim 9, wherein the first page information comprises the first content and/or context information of the first content, and the second page information comprises one or more of the following: a category of an APP to which the second page belongs, a type of to-be-input content in the input box on the second page, and operation information related to the second page.

11. The method according to any one of claims 1 to 10, wherein before providing, by the electronic device, the first paste option on the second page, the method further comprises:
receiving, by the electronic device, an operation for a first input box on the second page; and
after providing, by the electronic device, the first paste option on the second page, the method further comprises:
receiving, by the electronic device, the operation for the first paste option, and pasting the second content in the first input box.

12. The method according to claim 11, wherein the second page further comprises a second input box, and the method further comprises:
receiving, by the electronic device, an operation for the second input box, and providing a sixth paste option on the second page, wherein the sixth paste option is used to paste eleventh content, the eleventh content is obtained by processing the first content, and the eleventh content is related to the second page; and
receiving, by the electronic device, an operation for the sixth paste option, and pasting the eleventh content in the second input box.

13. The method according to any one of claims 1 to 10, wherein the second page comprises n1 input boxes, n1 is a positive integer greater than 1, and the second content comprises n1 pieces of information; and after providing, by the electronic device, the first paste option on the second page, the method further comprises:
receiving, by the electronic device, an operation for the first paste option, and pasting the n1 pieces of information respectively in the n1 input boxes.

14. The method according to any one of claims 1 to 13, wherein the first content belongs to content copied or cut in the latest m1 times before the electronic device displays the second page, and m1 is a positive integer; or the second page is a page displayed by the electronic device in a first time period after the first operation is received.

15. The method according to any one of claims 1 to 14, wherein the method further comprises:
receiving, by the electronic device, an operation for twelfth content on a fifth page, and storing the twelfth content in the clipboard, wherein the fifth page is the same as or different from the first page, and the twelfth content is different from the first content;
receiving, by the electronic device, an operation of accessing a sixth page, and displaying the sixth page; and
providing, by the electronic device, a seventh paste option and an eighth paste option on the sixth page, wherein the seventh paste option is used to paste thirteenth content, the eighth paste option is used to paste fourteenth content, the thirteenth content is obtained by processing the first content, the thirteenth content is related to the sixth page, the fourteenth content is obtained by processing the twelfth content, and the fourteenth content is related to the sixth page.

16. An electronic device, wherein the electronic device comprises a display, a memory, and a processor, the display is configured to display a page of an application, the memory is configured to store a computer program, and the processor is configured to invoke the computer program, so that the electronic device performs the method according to any one of claims 1 to 15.

17. A computer-readable storage medium, comprising instructions, wherein when the instructions are run on an electronic device, the electronic device is enabled to perform the method according to any one of claims 1 to 15.

18. A computer program product, wherein the computer program product comprises computer instructions, and when the computer instructions are run on an electronic device, the electronic device performs the method according to any one of claims 1 to 15.
